# EUROPEAN PATENT SPECIFICATION

(11) **EP 3 871 342 B1**
(45) Date of publication and mention of the grant of the patent: **08.04.2026**
(21) Application number: 19875677.7
(22) Date of filing: 26.09.2019
(51) Int. Cl.: H04B 7/00, H04L 67/141, H04L 67/55, H04L 67/75, H04W 12/37, H04W 12/55, H04M 1/72406, H04W 12/08

(54) **GROUP-BASED MOBILE DEVICE MANAGEMENT**
GRUPPENBASIERTE MOBILE GERÄTEVERWALTUNG
GESTION DE DISPOSITIF MOBILE SUR BASE DE GROUPES

(30) Priority: 24.10.2018 US 201862750108 P; 17.09.2019 US 201916573104
(43) Date of publication of application: 01.09.2021
(73) Proprietor: JAMF SOFTWARE, LLC, Minneapolis, MN 55401 (US)
(72) Inventor: BHATTACHARYA, Aryik, Minneapolis, Minnesota 55401 (US); DASSOW, John, Minneapolis, Minnesota 55401 (US); DEVINS, Michael, Minneapolis, Minnesota 55401 (US); MAXIM, Aaron, Minneapolis, Minnesota 55401 (US); SCHMIDT, Jamison, Minneapolis, Minnesota 55401 (US)
(74) Representative: Zacco Sweden AB
(86) International application number: PCT/US2019/053100
(87) International publication number: WO 2020/086210

(56) References cited:
- US-A1- 2007 054 687
- US-A1- 2015 304 484
- US-A1- 2015 365 524
- US-A1- 2016 057 020
- US-A1- 2017 353 500
- US-A1- 2018 007 059
- US-B1- 8 140 062
- ANONYMOUS: "Mobile device management - Wikipedia", 2 November 2016 (2016-11-02), XP055553423, Retrieved from the Internet <URL:https://en.wikipedia.org/w/index.php?title=Mobile_device_management&oldid=747538478> [retrieved on 20190207]

## Description

### CROSS-REFERENCE TO RELATED APPLICATIONS

The present application claims priority to U.S. Provisional Patent Application No. 62/750,108 filed on October 24, 2018, and claims priority to U.S. Patent Application No. 16/573,104, filed September 17, 2019.

### FIELD

The present disclosure is generally related to group-based mobile device management.

### BACKGROUND

Mobile devices are becoming increasingly prevalent in everyday use, including in home, office, and educational environments. For example, school districts are starting to implement one-to-one technology programs that provide each student access to a mobile device, such as a tablet computer. As another example, many corporations provide employees with mobile devices to perform job-related functions on-the-go. To maintain control of the devices, a school or corporation may rely on information technology (IT) administrators that maintain (i) a roster of devices, (ii) set up devices per user, and (iii) track a status of each device. However, relying on IT administrators for all mobile device management (MDM) is inefficient and expensive. For example, at a large corporation with thousands of employees it may take weeks for IT administrators to set up devices for particular employees, to provide the devices to the employees for use, and to reset devices after user by the employees

US2007054687A1 discloses a device and method for sending information in a mobile communications system, and particularly a device and method for distributing information on push-to-talk groups.

US2015304484A1 discloses a method for enabling a device management server to prevent managed computing devices from accessing a managed multimedia application.

US2017353500A1 discloses security policy enforcement for mobile devices based on device state.

### SUMMARY

Systems and methods of group-based mobile device management are disclosed. A mobile device management (MDM) server maintains group membership information based on "smart" groups. As used herein, a "smart" group may be a group whose membership is dynamically updated in response to certain events. To illustrate, an IT administrator may create a group that is directed to a particular set of users (e.g., a particular age group, a particular employment role, etc.). The membership of the group may be dynamically updated as managed devices (e.g., mobile phones, tablet computers, laptop computers, televisions, smart devices, entertainment devices, appliances, vehicles, navigation devices, etc.) send join group requests or reset requests to the MDM server. As used herein, a "MDM group" refers to a smart group.

As an illustrative non-limiting example, a group may be created for nurses. A set of mobile devices may be made available for users in a healthcare facility. A user may pick up any of the set of mobile devices and select a group option (e.g., a nursing option) corresponding to the group created for nurses. In this example, the user does not have to provide user information, such as a user identifier or a password. The mobile device sends a join group request to the MDM server. The MDM server adds the mobile device to the dynamically updated group for nurses in response to receiving the join group request. The MDM server sends a command to the mobile device to perform an action associated with the group. For example, the action can include downloading particular applications to the mobile device, downloading particular configuration settings to the mobile device, showing application icons of a first set of applications at a display of the mobile device, hiding application icons of a second set of applications at the display of the mobile device, or a combination thereof. The mobile device is thus automatically set up to have applications, configurations settings, etc. that are associated with the selected group (e.g., nurses). Similarly, there may be groups for doctors, lab technicians, etc. Thus users may regardless of group affiliation, initiate set-up of the mobile device independently of an IT administrator without requiring per-user carts, logins, or tracking.

The user may prefer to remove any personally identifiable data from the mobile device prior to returning the mobile device for use by other users. The user may select a reset option displayed by the mobile device. The mobile device sends a reset request to the MDM server. The MDM server sends a reset command to the mobile device. In a particular example, the MDM server queues the reset command for the mobile device and sends a notification request to a push notification service. The push notification service, in response to receiving the notification request indicating the mobile device, sends a push notification to the mobile device. The mobile device, in response to receiving the push notification, initiates a check-in event by sending a check-in message to the MDM server. The MDM server, in response to receiving the check-in message, sends the reset command to the mobile device. In some examples, the MDM server, in response to receiving the reset request, receiving the check-in message, or sending the reset command, updates the group membership information to remove the mobile device from the group. In other examples, the MDM server does not update the group membership information responsive to receiving the reset request, receiving the check-in message, or sending the reset command. The mobile device may perform a factory reset to remove applications, data, or both, that were installed responsive to the earlier join group request, that are associated with the user, or both. In some examples, the mobile device performs a full device wipe (e.g., deletes all data and applications) in response to receiving the reset command. The mobile device is thus automatically reset to remove applications, configurations settings, user data, etc. that is associated with a previously selected group (e.g., nursing), the user, or both. Notably, the user can initiate a MDM reset of the mobile device independently of an IT administrator.

It should be noted that although various aspects may be described herein with reference to educational or healthcare settings, these are for example only and not to be considered limiting. The teachings of the present disclosure may be applied to other mobile device environments, including but not limited to home environments, retail environments, corporate environments, etc.

The invention is defined by a method according to claim 1 and a system according to claim 7. Further embodiments are set out in the dependent claims.

Other aspects, advantages, and features of the present disclosure will become apparent after review of the entire application, including the following sections: Brief Description of the Drawings, Detailed Description, and the Claims.

### BRIEF DESCRIPTION OF THE DRAWINGS

FIG. 1 is a block diagram of a particular illustrative aspect of a system operable to perform group-based mobile device management;
FIG. 2 is a diagram of a particular illustrative aspect of a graphical user interface (GUI) generated by the system of FIG. 1;
FIG. 3 is a diagram of a particular illustrative aspect of another GUI generated by the system of FIG. 1;
FIG. 4 is a diagram of a particular illustrative aspect of another GUI generated by the system of FIG. 1;
FIG. 5 is a diagram of a particular illustrative aspect of another GUI generated by the system of FIG. 1;
FIG. 6 is a diagram of a particular illustrative aspect of another GUI generated by the system of FIG. 1;
FIG. 7 is a diagram of a particular illustrative aspect of another GUI generated by the system of FIG. 1;
FIG. 8 is a diagram of a particular illustrative aspect of another GUI generated by the system of FIG. 1;
FIG. 9 is a diagram of a particular illustrative aspect of another GUI generated by the system of FIG. 1;
FIG. 10 is a diagram of a particular illustrative aspect of another GUI generated by the system of FIG. 1;
FIG. 11 is a flow chart of a method of group-based mobile device management;
FIG. 12 is a flow chart of another method of group-based mobile device management;
FIG. 13 is a diagram that illustrates a particular embodiment of a system that is operable to maintain dynamically updated groups of managed devices;
FIG. 14 is a diagram that illustrates inventory data of the system of FIG. 13;
FIG. 15 illustrates a particular embodiment of a method of dynamically updating group membership;
FIG. 16 illustrates a particular embodiment of a dynamic grouping graphical user interface (GUI);
FIG. 17 illustrates another particular embodiment of a dynamic grouping GUI;
FIG. 18 illustrates another particular embodiment of a dynamic grouping GUI;
FIG. 19 illustrates another particular embodiment of a dynamic grouping GUI;
FIG. 20 illustrates another particular embodiment of a dynamic grouping GUI;
FIG. 21 illustrates another particular embodiment of a dynamic grouping GUI;
FIG. 22 illustrates another particular embodiment of a dynamic grouping GUI;
FIG. 23 illustrates another particular embodiment of a dynamic grouping GUI;
FIG. 24 is a flowchart to illustrate a particular embodiment of a method of operation at a mobile device management (MDM) server; FIG. 25 is a diagram of a particular embodiment of a system that is operable to enable a manager mobile device to control operation of managed mobile devices;
FIG. 26 is a diagram that illustrates enrollment and grouping data of the system of FIG. 25;
FIG. 27 illustrates a particular embodiment of a login interface;
FIG. 28 illustrates a particular embodiment of a reminder interface;
FIG. 29 illustrates a first particular embodiment of a management interface (e.g., of a teacher device);
FIG. 30 illustrates a particular embodiment of an interface including a list of applications;
FIG. 31 illustrates a particular embodiment of an interface including a list of websites;
FIG. 32 illustrates a second particular embodiment of a management interface;
FIG. 33 illustrates a particular embodiment of a clear passcode interface;
FIG. 34 is a flowchart to illustrate a particular embodiment of a method of operation at a manager mobile device;
FIG. 35 is a flowchart to illustrate a particular embodiment of a method of operation at a mobile device management (MDM) server;
FIG. 36 is a diagram that illustrates a particular embodiment of a system that is operable to manage functionality of a managed device, based on proximity to a wireless beacon, at a first time;
FIG. 37 is a diagram that illustrates the system of FIG. 1 at a second time;
FIG. 38 illustrates a particular example of a graphical user interface (GUI) associated with managing functionality of a managed device based on proximity to a wireless beacon;
FIG. 39 illustrates another particular example of a GUI associated with managing functionality of a managed device based on proximity to a wireless beacon;
FIG. 40 illustrates another particular example of a GUI associated with managing functionality of a managed device based on proximity to a wireless beacon;
FIG. 41 illustrates a particular embodiment of a method of managing functionality of a managed device based on proximity to a wireless beacon;
FIG. 42 illustrates another particular embodiment of a method of managing functionality of a managed device based on proximity to a wireless beacon;
FIG. 43 illustrates a particular embodiment of a system that includes a manager device configured to control operation of a managed device, where the manager device is further configured to emit a wireless beacon signal;
FIG. 44 is a block diagram of a particular illustrative aspect of a system operable to perform mobile device management at a healthcare facility;
FIG. 45 is a diagram of a particular illustrative aspect of the system of FIG. 44;
FIG. 46 is a diagram of a particular illustrative aspect of a transfer message generated by the system of FIG. 44;
FIG. 47 is a diagram of a particular illustrative aspect of a discharge message generated by the system of FIG. 44;
FIG. 48 is a flow chart of a method of mobile device management;
FIG. 49 is a flow chart of a method of mobile device management; and
FIG. 50 is a flow chart of a method of mobile device management.

### DETAILED DESCRIPTION

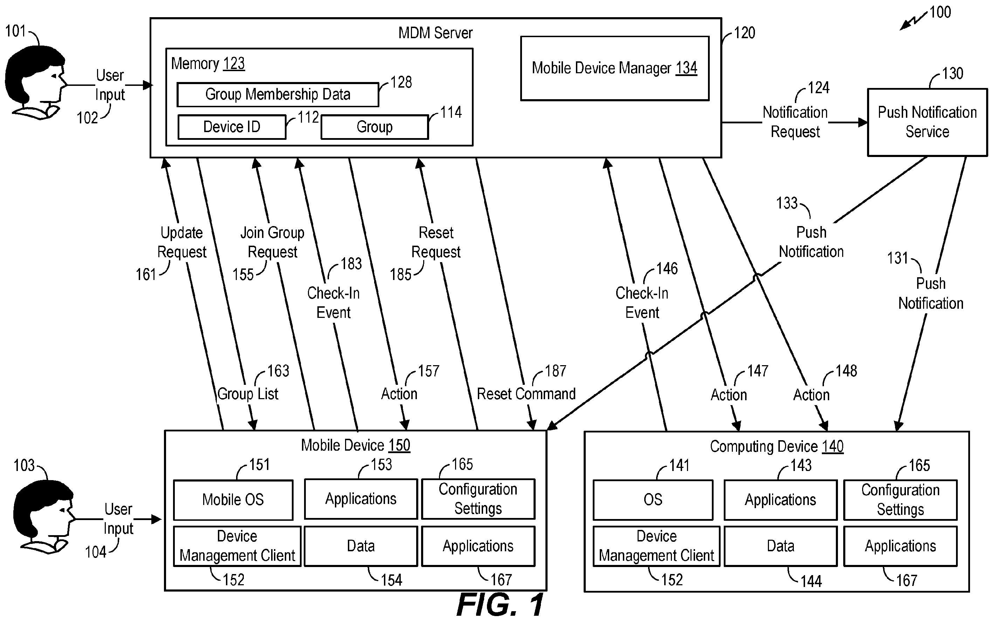

Referring to FIG. 1, a system is shown and generally designated 100. The system 100 (e.g., a computer system) includes a MDM server 120. The MDM server 120 is coupled to a push notification service 130, to a mobile device 150, and to a computing device 140. It should be understood that the MDM server 120 coupled to two devices is provided as an illustrative example. In some aspects, the MDM server 120 is coupled to fewer than two devices or more than two devices.

The computing device 140 may include an operating system (OS) 141 and the mobile device 150 may include a mobile OS 151. Each OS 141, 151 may control computing functions, such as input/output (e.g., a touchscreen display, speaker, microphone, camera, etc.) and networking (e.g., cellular, Bluetooth, wireless fidelity (Wi-Fi), Ethernet, etc.). Each OS 141, 151 may also support execution of applications (apps) 143, 153, 167 and provide such applications access to device resources and data 144, 154. Examples of applications include, but are not limited to, a web browser, e-mail, a calendar, social networking, a document/eBook reader, a media player, a gaming application, a patient management application, a medical reference application, a medication tracking tool, etc. Applications may correspond to software instructions that are stored in a memory and executed by a processor, hardware circuits that implement application functionality, or both.

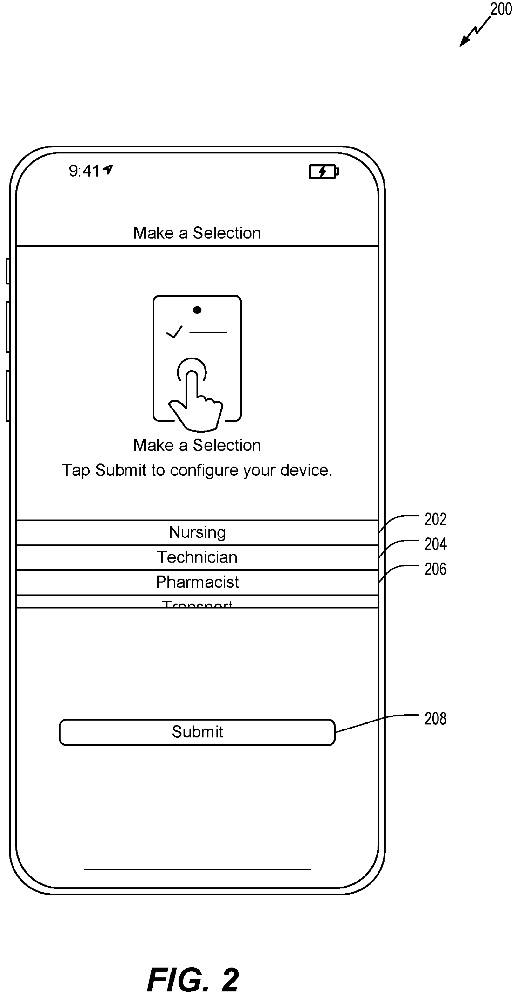

The mobile device 150 includes a device management client 152. The device management client 152 of the mobile device 150 is configured to generate a graphical user interface (GUI) and provide the GUI to a display of the mobile device 150, as further described with reference to FIGS. 2-10. The device management client 152 of the mobile device 150 is configured to, in response to receiving a user input 104 indicating a selection of a group option corresponding to a group 114, send a join group request 155 to the MDM server 120. The device management client 152 of the mobile device 150 is configured to receive a command to perform an action 157 from the MDM server 120 and to initiate performance of the action 157. The action 157 includes, for example, downloading the one or more applications 167 associated with the group 114, downloading one or more configuration settings 165, generating a GUI that includes icons of the applications 167, generating a GUI that excludes icons of the one or more applications 153 associated with a group distinct from the group 114, deleting (or uninstalling) the applications 153 associated with the group distinct from the group 114, or a combination thereof, as further described herein. In some implementations, sending the join group request 155 indicating the group 114 does not cause deletion, at the mobile device 150, of applications, data, or a combination thereof, associated with any groups different from the group 114. In other implementations, sending the join group request 155 indicating the group 114 initiates deletion, at the mobile device 150, of applications, data, or a combination thereof, associated with one or more groups different from the group 114. For example, the join group request 155 initiates deletion of applications and data associated with groups other than the group 114, whereas the reset request 185 initiates deletion of all applications, all data, the mobile OS 151, the device management client 152, or a combination thereof.

The computing device 140 includes a copy of the device management client 152. The device management client 152 of the computing device 140 is configured to, in response to receiving a push notification 131 from the push notification service 130, initiate performance of a check-in event 146 by sending a check-in request to the MDM server 120.

In a particular aspect, the device management client 152 corresponds to a processor configured to perform one or more operations described herein. In a particular aspect, the device management client 152 corresponds to instructions that, when executed by a processor, cause the processor to perform one or more operations described herein. In a particular aspect, the device management client 152 corresponds to a computer-readable storage device that stores instructions that are executable to perform one or more operations described herein.

The MDM server 120 includes a memory 123, a mobile device manager 134, or both. The memory 123 is configured to store group membership data 128. The group membership data 128 indicates actions to be performed for particular groups, devices included in a group, or a combination thereof. For example, the mobile device manager 134 is configured to, in response to receiving the join group request 155 from the mobile device 150 and determining that the join group request 155 indicates the group 114, update the group membership data 128 to add the mobile device 150 to the group 114. The mobile device manager 134 is configured to send a command to the mobile device 150 indicating that the action 157 is to be performed.

In a particular aspect, the mobile device manager 134 corresponds to a processor configured to perform one or more operations described herein. In a particular aspect, the mobile device manager 134 corresponds to instructions that, when executed by a processor, cause the processor to perform one or more operations described herein. In a particular aspect, the mobile device manager 134 corresponds to a computer-readable storage device that stores instructions that are executable to perform one or more operations described herein.

During operation, a user 101 (e.g., an IT administrator) sets up one or more groups at the MDM server. For example, the user 101 provides user input 102 to the MDM server 120 indicating the group 114, one or more additional groups, or a combination thereof. The user input 102 indicates names of the groups, actions corresponding to the groups, or a combination thereof. For example, the user input 102 indicates a group name (e.g., "Nursing") of the group 114. In an illustrative example, the group 114 is based on an employment role (e.g., nurse, lab technician, doctor, or manager). The user 101 can set up the group 114 based on any criteria. For example, the user 101 may set up the group 114 based on age, gender, employment role, location, skill, relationship, another criteria, or a combination thereof. The user input 102 indicates the action 157 to be performed upon a device joining the group 114. For example, the user input 102 indicates that members of the group 114 are authorized to access the applications 167, that members of the group 114 are not authorized to access (e.g., are restricted from accessing) the applications 153, or a combination thereof. In a particular aspect, the user input 102 indicates the configuration settings 165. The action 157 indicates downloading of the applications 167, downloading of the configuration settings 165, generating a GUI that includes icons of the applications 167, generating a GUI that excludes icons of applications 153 associated with a different group (e.g., "Doctors"), deleting (or uninstalling) the applications 153, or a combination thereof.

In a particular aspect, the user input 102 indicates an action 147 to be performed by other member devices of the group 114 when a new member is added to the group 114. For example, the action 147 includes updating application data to indicate that the group 114 includes the new member. To illustrate, the group 114 has access to a messaging application and updating the application data causes the messaging application to indicate that the new member device is available for messaging.

In a particular aspect, the user input 102 indicates an action 148 to be performed by other members of the group 114 when a member leaves the group 114. For example, the action 148 includes updating application data to indicate that the member is removed from the group 114. In a particular aspect, the user input 102 indicates one or more reset parameter values when a member is removed from the group 114. For example, a first value of a first reset parameter indicates that all user notifications are to be suppressed at the device leaving the group when a reset is performed, a first value of a second reset parameter indicates that an activation lock is to be bypassed at the device leaving the group when a reset is performed, or a combination thereof. The mobile device manager 134 updates the group membership data 128 to indicate the group name of the group 114, a group identifier of the group 114, the action 157, the action 147, the action 148, the one or more reset parameter values, or a combination thereof.

In a particular implementation, the user 101 (or another user, such as an application developer) can customize the device management client 152 to generate GUIs having a particular look and feel. For example, the user 101 can provide user input 102 specifying configuration input, such as a custom header logo (e.g., a company logo), custom background colors, custom text descriptions, or a combination thereof. To illustrate, a custom text description can guide users with contextual language (e.g., "Welcome to Acme Hospital. Please select the right role to begin your shift," "At the end of your stay, please tap reset to ensure your personal data is removed," etc.). In a particular example, a custom text description can support regional language (e.g., Spanish, English, French, Arabic, Chinese, etc.). In a particular aspect, the MDM server 120 provides client configuration data indicating the configuration input to the mobile device 150. The device management client 152 updates configuration settings based on the client configuration data.

A user 103 (e.g., a healthcare worker) selects a setup option displayed by the mobile device 150. For example, the device management client 152 of the mobile device 150 generates a GUI indicating the setup option, a reset option, or both. In a particular aspect, the GUI has a look and feel corresponding to the configuration settings based on the client configuration data. For example, the GUI includes the custom header logo, the custom background colors, the custom text descriptions, or a combination thereof. The device management client 152 of the mobile device 150 receives a group list 163 from the MDM server 120. The group list 163 indicates a plurality of MDM groups that are available to the mobile device 150 for enrollment.

The mobile device manager 134 generates the group list 163 based on the group membership data 128. The group list indicates names and identifiers of groups indicated by the group membership data 128. For example, the group list 163 indicates the group name (e.g., "Nursing"), the group identifier, or both, of the group 114. In a particular aspect, all groups are available to the mobile device 150 for enrollment. In an alternative aspect, a subset of groups is available to the mobile device 150. For example, the user input 102 indicates that a set of groups is available for enrollment to devices that satisfy an enrollment criterion. The mobile device manager 134 generates the group list 163 corresponding to the mobile device 150. For example, the mobile device manager 134 adds the group 114 to the group list 163 in response to determining that the mobile device 150 satisfies an enrollment criterion corresponding to the group 114.

The group criterion is based on, for example, a device capability, a device component, a device status, a device battery level, a device memory space, a device operating system, a device software version, a device type, a device location, another group criterion, or a combination thereof. For example, the group membership data 128 indicates that the group criterion corresponding to the group 114 (e.g., "Patient Care Staff") is satisfied by a device that satisfies a second group criterion corresponding to a second group (e.g., "Nursing") or a third group criterion corresponding to a third group (e.g., "Doctors").

In a particular aspect, the device management client 152 receives the group list 163 from the MDM server 120 in response to sending an update request 161 to the MDM server 120. For example, the device management client 152 of the mobile device 150, in response to receiving the user input 104 indicating a selection of the setup option, sends the update request 161 to the MDM server 120 to determine available groups. The mobile device manager 134 sends the group list 163 to the mobile device 150 in response to receiving the update request 161 from the mobile device 150.

In a particular aspect, the mobile device manager 134 sends the group list 163 to the mobile device 150 independently of receiving the update request 161. For example, the mobile device 150 sends a registration request to the MDM server 120. The MDM server 120, in response to receiving the registration request, adds the mobile device 150 to one or more registered devices (e.g., managed devices) and sends the group list 163 to the mobile device 150. Subsequently, the mobile device manager 134, in response to updating the group membership data 128, sends updates of the group list 163 to the registered devices. For example, the mobile device manager 134 sends a notification request 124 to the push notification service 130. The push notification service 130 sends a push notification 133 to the mobile device 150 responsive to receiving the notification request 124. The mobile device 150 initiates a check-in event 183 by sending a check-in message to the MDM server 120 responsive to receiving the push notification. The MDM server 120 sends an updated version of the group list 163 to the mobile device 150 in response to receiving the check-in message from the mobile device 150.

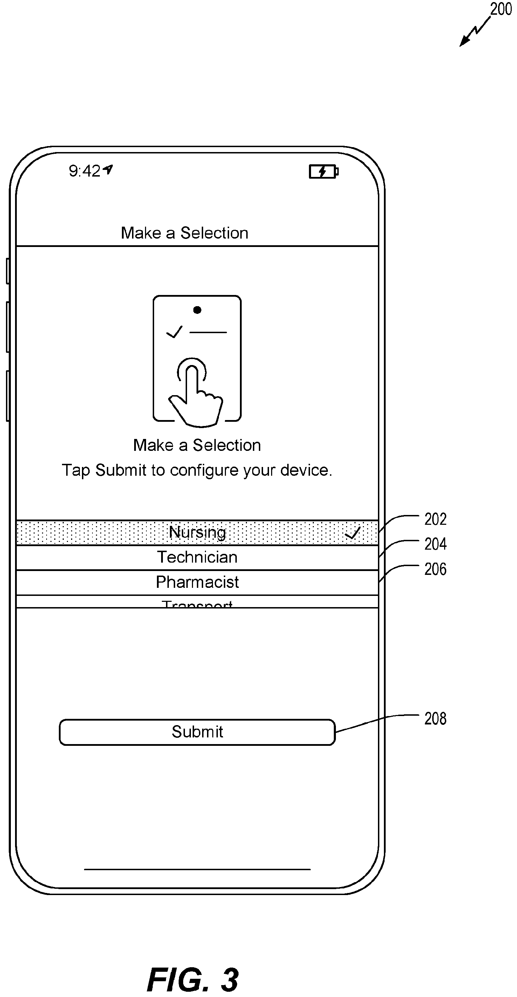

The device management client 152 of the mobile device 150, in response to receiving the group list 163, generates a GUI indicating one or more group options. For example, the device management client 152 of the mobile device 150 generates a GUI indicating a first group option (e.g., "<option value=group identifier of the group 114>group name of the group 114</option>") associated with the group 114, a second group option associated with a second group, one or more additional group options, or a combination thereof, as further described with reference to FIG. 3. In a particular aspect, the GUI has a look and feel corresponding to the configuration settings based on the client configuration data. For example, the GUI includes the custom header logo, the custom background colors, the custom text descriptions, or a combination thereof. The device management client 152 of the mobile device 150 provides the GUI to a display of the mobile device 150.

The user 103 selects the first group option (e.g., "Nursing") associated with the group 114. The device management client 152 of the mobile device 150, in response to receiving the user input 104 indicating a selection of the first group option (e.g., "Nursing"), sends the join group request 155 to the MDM server 120. The join group request 155 indicates the group identifier of the group 114.

The mobile device manager 134, in response to receiving the join group request 155, updates the group membership data 128 to indicate that the mobile device 150 is added to the group 114. For example, the mobile device manager 134 updates the group membership data 128 to indicate that a device identifier (ID) 112 of the mobile device 150 is included in the group 114.

The mobile device manager 134, in response to determining that the group membership data 128 indicates that the action 157 is to be performed upon joining the group 114, sends a command to the mobile device 150 to initiate performance of the action 157 at the mobile device 150. For example, the mobile device manager 134 identifies, based on the group membership data 128, the applications 167 that the group 114 is authorized to access.

The device management client 152 of the mobile device 150, in response to receiving the command from the MDM server 120, initiates performance of the action 157. In a particular aspect, the action 157 includes downloading the applications 167. The device management client 152 of the mobile device 150 identifies one or more of the applications 167 that are unavailable (e.g., not previously downloaded) at the mobile device 150. The device management client 152 of the mobile device 150 automatically (e.g., without requiring authorization from the user 103) downloads the one or more of the applications 167 to the mobile device 150. In a particular aspect, the device management client 152 of the mobile device 150 downloads a first application from the MDM server 120, a second application from another device, an update of a third application from the MDM server 120, an update of a fourth application from another device, or a combination thereof. In a particular aspect, each of the applications 167 (e.g., updated versions of the applications 167) is available at the mobile device 150 and the device management client 152 of the mobile device 150 refrains from downloading any of the applications 167 (or application updates).

In a particular aspect, the action 157 includes downloading and implementing the configuration settings 165. The device management client 152 of the mobile device 150 downloads a first configuration setting of the configuration settings 165 from the MDM server 120, a second configuration setting of the configuration settings 165 from another device, or a combination thereof. In a particular aspect, the configuration settings 165 are used to configure display settings for the mobile device 150. For example, the configuration settings 165 indicate an arrangement of icons of the applications 153 in a GUI to be displayed by the mobile device 150, a size of the icons in the GUI, a background for the GUI, or a combination thereof. In a particular implementation, the background of the GUI indicates the group 114 (e.g., the group name).

In a particular aspect, the action 157 includes generating a GUI indicating icons of the applications 167, excluding icons of the applications 153, deleting (or uninstalling) the applications 153, or a combination thereof. The device management client 152 of the mobile device 150 generates a GUI indicating icons of the applications 167, excluding icons of the applications 153, or a combination thereof. The device management client 152 of the mobile device 150 deletes the applications 153, application data corresponding to the applications 153, or a combination thereof, from the mobile device 150. In a particular aspect, automatically removing the applications 153 upon the mobile device 150 joining the group 114 improves security by preventing unauthorized access to the applications 153. The device management client 152 of the mobile device 150, in response to determining that a particular application is included in the applications 167 and in the applications 153, generates the GUI to indicate an icon corresponding to the particular application, refrains from deleting the particular application, or both. The device management client 152 of the mobile device 150 provides the GUI to a display of the mobile device 150. The GUI of the mobile device 150 is thus automatically updated to display application icons based on group membership of the mobile device 150. For example, the GUI is updated to include icons associated with the applications 167 that the group 114 is authorized to access, to exclude icons associated with the applications 153 that the group 114 is restricted from accessing, or a combination thereof.

In a particular aspect, the mobile device manager 134, in response to determining that the group membership data 128 indicates that the action 147 is to be performed by other members of the group 114 and that the group 114 includes at least one other member, sends the notification request 124 to the push notification service 130 to initiate transmission of push notifications to the other members of the group 114. For example, the MDM server 120 sends the notification request 124 to the push notification service 130 to initiate transmission of the push notification 131 to the computing device 140. The push notification service 130 sends the push notification 131 to the computing device 140 in response to receiving the notification request 124 and determining that the notification request 124 indicates the computing device 140. The push notification 131 instructs the computing device 140 to check-in with the MDM server 120. For example, the push notification service 130 may be a trusted source for the computing device 140 and the push notification 131 may indicate that the MDM server 120 is a trusted device.

The device management client 152 of the computing device 140 initiates the check-in event 146 responsive to the push notification 131 by sending a check-in request to the MDM server 120. The MDM server 120 may, in response to receiving the check-in request, send a command to the computing device 140 to initiate performance of the action 147. For example, the action 147 includes updating the data 144 associated with a first application of the applications 167 to indicate that the mobile device 150 is added to the group 114. To illustrate, the first application includes a messaging application that enables messaging devices of the group 114. Updating the data 144 causes the messaging application to indicate at the computing device 140 that the mobile device 150 is available for messaging. In a particular aspect, the computing device 140, as a member of the group 114, has access to the applications 167 associated with the group 114, the configuration settings 165 associated with the group 114, or both. In a particular aspect, the computing device 140 has access to the one or more applications 143 associated with a different group than the group 114.

In a particular aspect, the MDM server 120 initiates an action to be performed at devices that are members of the group 114. For example, the mobile device manager 134 determines that the action is to be performed in response to determining that a performance criterion corresponding to the action is satisfied. The performance criterion is based on the user input 102, a detected condition, or both. In a particular aspect, the mobile device manager 134, in response to determining that the performance criterion is satisfied, sends the notification request 124 to the push notification service 130. The mobile device manager 134 identifies members devices of the group 114 (e.g., current members) based on the group membership data 128. In a particular aspect, the mobile device manager 134 identifies a set of enrollment devices for which the group 114 is available for enrollment. For example, the set of enrollment devices includes the member devices and may include one or more additional devices. The notification request 124 indicates the member devices of the group 114, the set of enrollment devices, or a combination thereof.

The push notification service 130 sends push notifications to the member devices of the group 114. The mobile device manager, in response to receiving a check-in message from a member device, sends a command to the member device to initiate performance of the action. For example, the mobile device manager, in response to receiving a check-in message from the mobile device 150, sends a command to the mobile device 150 to initiate performance of the action at the mobile device 150. The mobile device manager 134 can thus manage performance of actions based on group-affiliations of devices. For example, the mobile device manager 134 can manage performance of actions based on group-membership of devices, device ability to enroll in a group, or both. In a particular aspect, the mobile device manager 134 updates the group membership data 128 to indicate that the action to be performed upon a device joining the group 114. In this aspect, the mobile device manager 134 can manage performance of actions by future members of the group 114.

In a particular aspect, as the user 103 uses the mobile device 150, the mobile device 150 stores (or updates) the data 154. For example, the data 154 includes username and password information used by the user 103 to log into a first application of the applications 167. As another example, the data 154 includes e-mails, messages, or other files, that the user 103 downloaded to the mobile device 150. As a particular example, the data 154 includes personalization settings (e.g., display settings) that the user 103 has used to personalize the mobile device 150.

In a particular example, the user 103 sets an activation lock on the mobile device 150. To illustrate, the user 103 accesses an application of the applications 167 with a username and password. The application creates an activation lock for the mobile device 150 based on the username and password. For example, the application associates the mobile device with an account corresponding to the username. Subsequent to the creation of the activation lock, access to one or more of the applications 167 is based on the username and password. In other words, access to the one or more of the applications 167 is unauthorized without the username and password.

In a particular example, the user 103 uses a settings application on the mobile device 150 to provide a username and password associated with a user account. The settings application creates an activation lock that associates the mobile device 150 with the user account. The activation lock restricts the mobile device 150 from being setup without the username or password subsequent to a reset of the mobile device 150. For example, the activation lock can lock out the user 101 (e.g., anyone without the username and password) from setting up the mobile device 150 subsequent to a reset of the mobile device 150. In a particular aspect, the device management client 152 disables the functionality to set an activation lock at the mobile device 150 during an initial setup of the mobile device 150.

In a particular aspect, the user 103 is a member of multiple groups or changes membership from the group 114 to a second group. The user 103 provides the user input 104 indicating a selection of a second group option associated with a second group of the group list 163. The device management client 152 sends the join group request 155 to the MDM server 120 indicating the second group. The mobile device manager 134 updates the group membership data 128 to indicate that the device ID 112 of the mobile device 150 is associated with the second group, sends the notification request 124 to the push notification service 130 to initiate sending of push notifications to other members of the second group, or a combination thereof. In a particular implementation, the mobile device manager 134 updates the group membership data 128 to remove the mobile device 150 from the group 114, sends the notification request 124 to the push notification service 130 to initiate sending of push notifications to other members of the group 114, sends a reset command 187 to the mobile device 150, or a combination thereof. In an alternate implementation, the group membership data 128 indicates that the mobile device 150 is a member of the group 114 and a member of the second group.

In a particular aspect, the user 103 decides to remove personally identifiable information from the mobile device 150. For example, the user 103 is ready to reset the mobile device 150 prior to returning the mobile device 150 for use by other users. The user 103 selects a reset option from a GUI displayed by the mobile device 150. The device management client 152, in response to receiving the user input 104 indicating the selection of the reset option, sends a reset request 185 to the MDM server 120. The reset request 185 indicates the device ID 112 of the mobile device 150. In some implementations, the mobile device manager 134, in response to receiving the reset request 185 from the mobile device 150, updates the group membership data 128 to indicate that the mobile device 150 is not included in any groups. For example, the mobile device manager 134 updates the group membership data 128 to remove the mobile device 150 from the group 114. In other implementations, the mobile device manager 134 refrains from updating the group membership data 128 responsive to receiving the reset request 185.

In some examples, the mobile device manager 134, in response to determining that the group membership data 128 indicates that the action 148 is to be performed by other members of the group 114 upon removal of a member from the group 114 and that the group 114 includes one or more other members, sends the notification request 124 to the push notification service 130 indicating the one or more other members. For example, the mobile device manager 134 sends the notification request 124 indicating the computing device 140 to the push notification service 130. The push notification service 130, in response to receiving the notification request 124 and determining that the notification request 124 indicates the computing device 140, sends the push notification 131 to the computing device 140. The device management client 152 of the computing device 140, in response to receiving the push notification 131, initiates the check-in event 146 by sending a check-in request to the MDM server 120. The MDM server 120, in response to receiving the check-in request from the computing device 140, sends a command to the computing device 140 to initiate performance of the action 148. The device management client 152 of the computing device 140 performs the action 148 in response to receiving the command from the MDM server 120. For example, the device management client 152 of the computing device 140 updates the data 144 of a first application of the applications 167 to indicate that the mobile device 150 is removed from the group 114. To illustrate, the first application includes a messaging application and updating the data 144 causes the messaging application to remove an indication at the computing device 140 that the mobile device 150 is available for messaging.

The mobile device manager 134, in response to receiving the reset request 185 from the mobile device 150 indicating the device ID 112 of the mobile device 150, sends the reset command 187 (e.g., a remote reset command) to the mobile device 150. In some examples, the mobile device manager 134, in response to receiving the reset request 185, queues the reset command 187 for the mobile device 150 and sends the notification request 124 indicating the mobile device 150 to the push notification service 130. The push notification service 130, in response to receiving the notification request 124 indicating the mobile device 150, sends the push notification 133 to the mobile device 150. The mobile device 150, in response to receiving the push notification 133, initiates the check-in event 183 by sending a check-in message to the MDM server 120. The MDM server 120, in response to receiving the check-in message from the mobile device 150 and determining that the reset command 187 is queued for the mobile device 150, sends the reset command 187 to the mobile device 150.

In a particular aspect, the reset command 187 corresponds to a factory reset command. To improve user confidentiality, the device management client 152 of the mobile device 150 may, in response to receiving the reset command 187, delete the data 154, the applications 153, the applications 167, the configuration settings 165, or a combination thereof. In some examples, the device management client 152, in response to receiving the reset command 187, initiates deletion of the mobile OS 151, the device management client 152, or both.

In a particular aspect, the mobile device manager 134, in response to determining that the group membership data 128 indicates the one or more reset parameter values, generates the reset command 187 indicating the one or more reset parameter values. The device management client 152 performs the reset of the mobile device 150 based on the one or more reset parameter values. For example, the device management client 152 initiates a factory reset command that indicates the one or more reset parameter values.

In a particular aspect, the device management client 152 of the mobile device 150 is configured to, in response to determining that the reset command 187 indicates that a first reset parameter (e.g., a suppress notification parameter) has a first value (e.g., 1), suppress user notifications during reset of the mobile device 150. For example, the device management client 152, in response to determining that the first reset parameter has a first value indicating that user notifications are to be suppressed during reset of the mobile device 150, suppresses user notifications during deletion of the data 154, the applications 153, the applications 167, the configuration settings 165, or a combination thereof.

In a particular aspect, the device management client 152 of the mobile device 150 is configured to, in response to determining that the reset command 187 indicates that a second reset parameter (e.g., an activation bypass parameter) has a first value (e.g., 1), removes an activation lock during reset of the mobile device 150. For example, the device management client 152 removes the activation lock and deletes the data 154, the applications 153, the applications 167, the configuration settings 165, or a combination thereof. In a particular aspect, removal of the activation lock enables unrestricted setup of the mobile device 150 subsequent to the reset. For example, setup of the mobile device 150 can be performed subsequent to the reset independently of a username and password of the user 103.

The system 100 thus enables the mobile device 150 to be automatically set up to have the applications 167, the configurations settings 165, etc. that are associated with the selected group 114 (e.g., "Nursing"). The user 103 initiates the set-up of the mobile device 150 independently of an IT administrator. The system 100 also enables the mobile device 150 to automatically reset by removing applications, configurations settings, user data, etc. that is associated with a group (e.g., nursing), the user, or both. The user initiates the reset of the mobile device independently of an IT administrator. For example, the user can efficiently remove sensitive information from a shared device (e.g., the mobile device 150) without having to rely on an IT administrator to remove the information from the shared device. In a particular example, a reset option is displayed on a home screen of the mobile device 150 for easy access by the user. The user can select the reset option before handing over the mobile device 150 to another user. The mobile device 150 is available for re-use without delay associated with an IT administrator performing a reset of the mobile device 150.

In a particular example, a user can select the reset option for a "fresh start". To illustrate, the user could be experiencing issues with operation of the mobile device 150. The user can select the reset option as a troubleshooting step to resolve the issues without (or prior to) contacting an IT administrator.

The system 100 enables customization of the mobile device 150 for the group 114. Generally, a personal device is personalized for use by a single user based on login information, whereas a public device has the same settings for use by everyone. As a customized device, the mobile device 150 balances the advantages of a personal device and advantages of a public device by providing customization for groups of users without restricting the use of the mobile device 150 to a single user. A single device (e.g., the mobile device 150) can be customized to support use by multiple groups of users. Having devices that can support multiple groups of users can reduce costs as compared to having dedicated devices for particular groups. For example, a first group of users may use a higher number of devices at a first time and a second group of users may use a higher number of devices at a second time. Having devices that are not being used by one group of users available for use by another group of users provides support for the same overall number of users with fewer devices. The system 100 has the benefit of group-specific customization of the mobile device 150 as well as the benefit of group-specific customization management at the MDM server 120. For example, a user 101 can provide user input 102 to set up one or more groups at the MDM server 120, and each mobile device 150 that joins a particular group is automatically customized according to the particular group, independently of a user of each mobile device 150 having to perform customization of the mobile device 150.

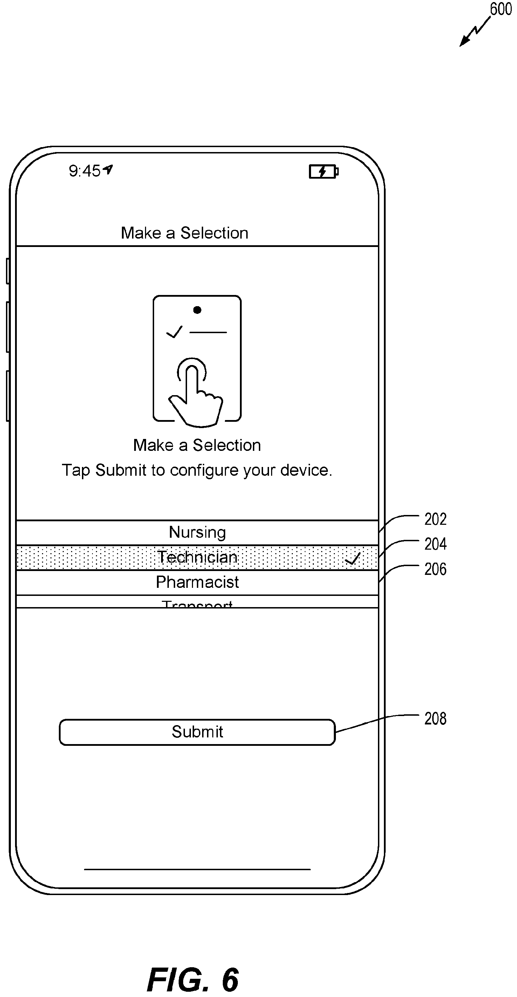

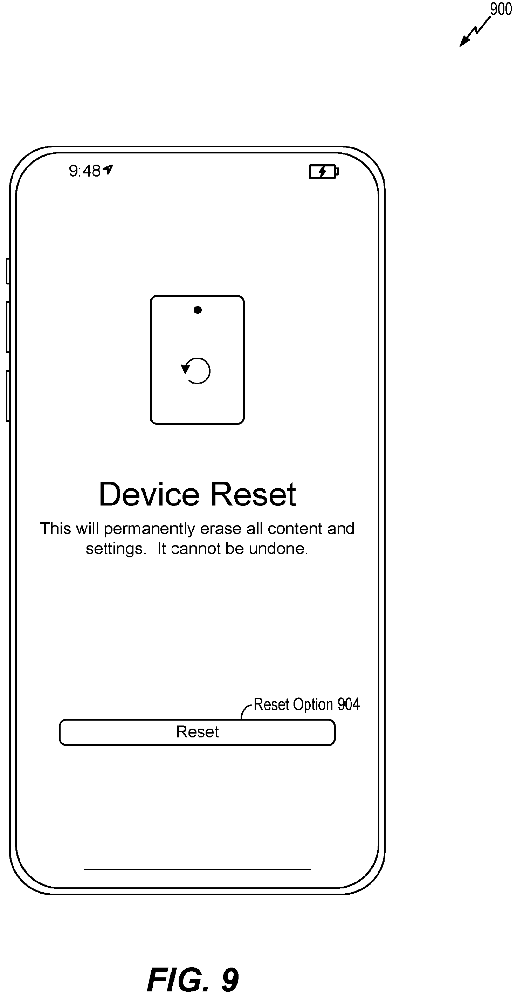

FIGS. 2-10 illustrate examples of GUIs generated by the system 100 of FIG. 1. FIG. 2 illustrates an example of a GUI corresponding to a selection of a setup option. FIGS. 3-5 illustrate examples of GUIs corresponding to a selection of a first group option for a first group. FIGS. 6-8 illustrate examples of GUIs corresponding to a selection of a second group option for a second group. FIGS. 9-10 illustrate examples of GUIs corresponding to a selection of a reset option.

Referring to FIG. 2, a GUI is shown and generally designated 200. In a particular aspect, the GUI 200 is generated by the device management client 152, the mobile device 150, the mobile device manager 134, the MDM server 120, the system 100 of FIG. 1, or a combination thereof.

The GUI 200 includes a group option 202 corresponding to the group 114 of FIG. 1, a group option 204 corresponding to a second group, a group option 206 corresponding to a third group, one or more additional group options corresponding to one or more additional groups, a submit option 208, or a combination thereof. In a particular aspect, the device management client 152 of FIG. 1 generates the GUI 200 in response to receiving the user input 104 indicating a selection of a setup option. For example, the device management client 152, in response to receiving the user input 104 indicating the selection of the setup option, sends the update request 161 to the MDM server 120, as described with reference to FIG. 1. The mobile device manager 134 of FIG. 1, in response to receiving the update request 161 from the mobile device 150, sends the group list 163 to the mobile device 150, as described with reference to FIG. 1. In some implementations, the mobile device manager 134 sends the group list 163 to the mobile device 150 independently of the update request 161.

The device management client 152 of the mobile device 150 generates the GUI 200 based on the group list 163. For example, the device management client 152 generates the GUI 200 including a group option for each group indicated by the group list 163. To illustrate, the group list 163 indicates the group 114, the second group, the third group, one or more additional groups, or a combination thereof. The device management client 152 generates the GUI 200 including the group option 202 corresponding to the group 114 (e.g., "Nursing"), the group option 204 corresponding to the second group (e.g., "Technician"), the group option 206 corresponding to the third group (e.g., "Pharmacist"), the one or more additional group options corresponding to the one or more additional groups, or a combination thereof. In a particular aspect, the GUI 200 also includes the submit option 208. The device management client 152 provides the GUI 200 to a display of the mobile device 150.

The device management client 152, in response to receiving the user input 104 of FIG. 1 indicating that the group option 202 is selected, updates the GUI 200 to indicate that the group option 202 is selected, as illustrated in FIG. 3. In a particular aspect, the user 103 selects the submit option 208.

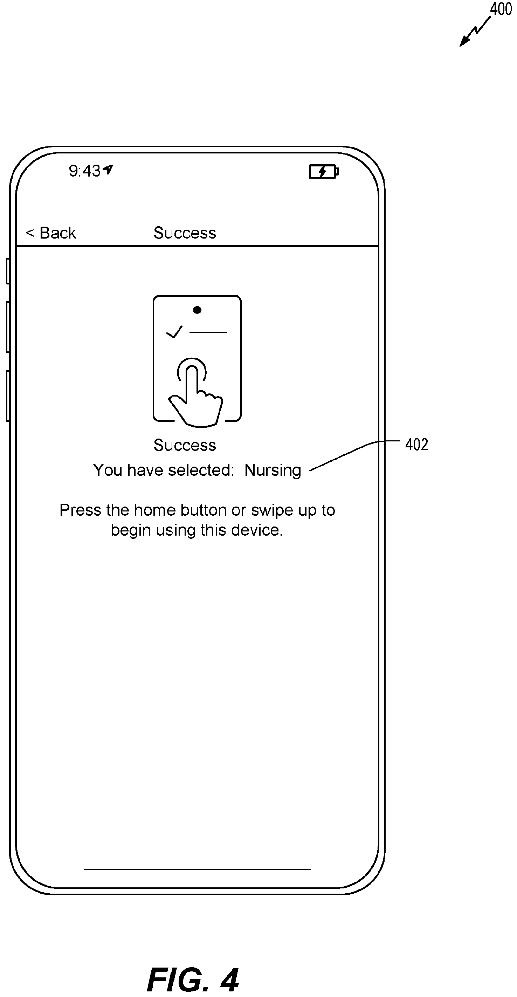

Referring to FIG. 4, a GUI is shown and generally designated 400. In a particular aspect, the GUI 400 is generated by the device management client 152, the mobile device 150, the mobile device manager 134, the MDM server 120, the system 100 of FIG. 1, or a combination thereof. For example, the device management client 152 of the mobile device 150 generates the GUI 400 in response to receiving the user input 104 indicating the selection of the group option 202, the submit option 208, or both.

In a particular aspect, the device management client 152 of the mobile device 150, in response to receiving the user input 104 indicating the selection of the group option 202, the submit option 208, or both, sends the join group request 155 to the MDM server 120 of FIG. 1. The join group request 155 indicates the group 114 corresponding to the group option 202. The MDM server 120, in response to receiving the join group request 155, sends a command to the mobile device 150 indicating that the action 157 is to be performed, as described with reference to FIG. 1.

The device management client 152 of the mobile device 150 generates the GUI 400 subsequent to performing at least a portion of the action 157. For example, the device management client 152 downloads the applications 167 associated with the group 114, downloads the configuration settings 165, or a combination thereof. The device management client 152 of the mobile device 150 generates the GUI 400 to indicate that the setup for the group 114 has been performed successfully. In a particular aspect, the GUI 400 includes an identifier 402 (e.g., group name) of the group 114 to indicate that the setup for the group 114 (e.g., "Nursing") is successful. In a particular aspect, the GUI 400 includes a particular message (e.g., a success message) indicated by the configuration settings 165. In a particular aspect, the device management client 152 of the mobile device 150 is configured to generate an error GUI (not shown) in response to detecting an error during setup (or reset) of the mobile device 150. In a particular aspect, the error GUI includes a particular message (e.g., an error message) indicated by the configuration settings 165. For example, the particular message includes a particular status code.

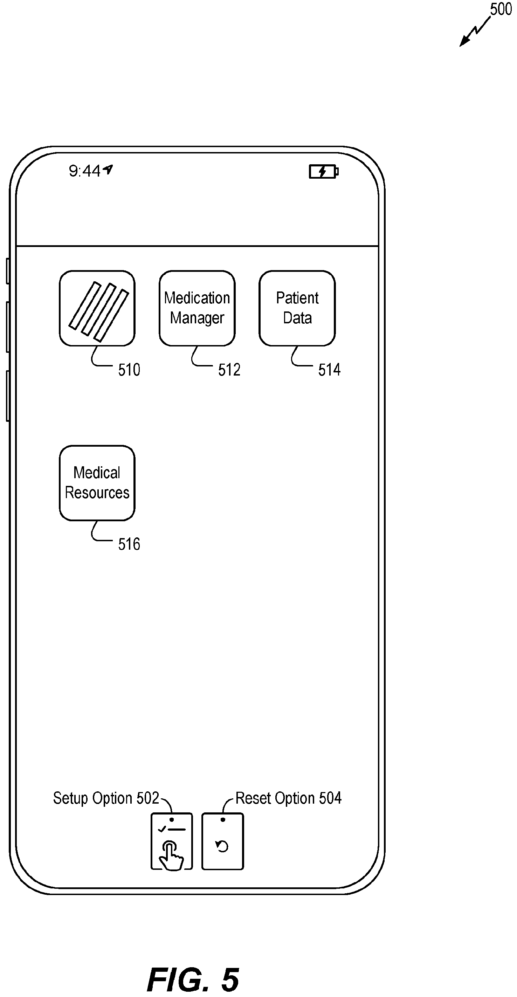

Referring to FIG. 5, a GUI is shown and generally designated 500. In a particular aspect, the GUI 500 is generated by the device management client 152, the mobile device 150, the mobile device manager 134, the MDM server 120, the system 100 of FIG. 1, or a combination thereof. For example, the device management client 152 of the mobile device 150 generates the GUI 500 in response to receiving the user input 104 indicating the selection of the group option 202, the submit option 208, or both. In a particular aspect, the device management client 152 of the mobile device 150 provides the GUI 500 to a display of the mobile device 150 for display subsequent to the GUI 400 of FIG. 4.

The device management client 152 generates the GUI 400 including icons of the applications 167 corresponding to the group 114. For examples, the applications 167 include a first application, a second application, a third application, a fourth application, or a combination thereof. The GUI 400 includes an icon 510, an icon 512, an icon 514, and an icon 516 for the first application, the second application, the third application, and the fourth application, respectfully. It should be understood that the applications 167 including four applications is provided as an illustrative example. In some implementations, the applications 167 include fewer than four applications or more than four applications.

In a particular aspect, the applications 153 that are not associated with the group 114 are also available (e.g., installed) at the mobile device 150. For example, the applications 153 are associated with one or more groups other than the group 114. The GUI 500 excludes icons of the applications 153. For example, the device management client 152 hides the icons of the applications 153 on the GUI 500.

In a particular aspect, the device management client 152 generates the GUI 500 to have a particular layout, a particular background image, particular icons, a particular formatting, particular colors, particular text, a particular header image, particular title text, particular body text, particular button text, particular button color, a particular arrangement, or a combination thereof, based on the configuration settings 165. The GUI 500 is thus automatically generated to enable access to the applications 167 based on the configuration settings 165 for the group 114 (e.g., "Nursing"). The GUI 500 includes a setup option 502, a reset option 504, or both. In a particular aspect, the setup option 502, the reset option 504, or both correspond to application icons. For example, the applications 167 include a setup application, a reset application, or both. The icons of the applications 167 include the setup option 502, the reset option 504, or both. The device management client 152 provides the GUI 500 to a display of the mobile device 150.

In a particular aspect, the device management client 152 of the mobile device 150 receives the user input 104 of FIG. 1 indicating a selection of the setup option 502, as further described with reference to FIG. 6. In a particular aspect, the device management client 152 of the mobile device 150 receives the user input 104 of FIG. 1 indicating a selection of the reset option 504, as further described with reference to FIG. 9.

Referring to FIG. 6, a GUI is shown and generally designated 600. In a particular aspect, the GUI 600 is generated by the device management client 152, the mobile device 150, the mobile device manager 134, the MDM server 120, the system 100 of FIG. 1, or a combination thereof.

The GUI 600 includes the group option 202 corresponding to the group 114 of FIG. 1, the group option 204 corresponding to a second group, the group option 206 corresponding to a third group, one or more additional group options corresponding to one or more additional groups, the submit option 208, or a combination thereof.

In a particular aspect, the device management client 152 of FIG. 1 generates the GUI 600 in response to receiving the user input 104 indicating a selection of the setup option 502 of FIG. 5. For example, the device management client 152, in response to receiving the user input 104 indicating the selection of the setup option 502, sends the update request 161 to the MDM server 120, as described with reference to FIG. 1. The mobile device manager 134 of FIG. 1, in response to receiving the update request 161 from the mobile device 150, sends the group list 163 to the mobile device 150, as described with reference to FIG. 1.

The device management client 152 of the mobile device 150 generates the GUI 600 based on the group list 163. For example, the device management client 152 generates the GUI 600 including a group option for each group indicated by the group list 163. To illustrate, the group list 163 indicates the group 114, the second group, the third group, one or more additional groups, or a combination thereof. The device management client 152 generates the GUI 600 including the group option 202 corresponding to the group 114 (e.g., "Nursing"), the group option 204 corresponding to the second group (e.g., "Technician"), the group option 206 corresponding to the third group (e.g., "Pharmacist"), the one or more additional group options corresponding to the one or more additional groups, or a combination thereof.

In FIG. 6, the GUI 600 includes the same group options as the GUI 200 of FIG. 2. In some aspects, the GUI 600 includes distinct group options compared to the GUI 200. For example, the GUI 200 is based on a first version of the group list 163 that indicates a first set of groups, and the GUI 600 is based on an updated version of the group list 163 that indicates a second set of groups. In this example, the GUI 600 excludes one or more first group options that were included in the GUI 200, includes one or more second group options that were not included in the GUI 200, or a combination thereof. The first group options correspond to one or more first groups that were indicated in the first version of the group list 163 and are not indicated in the updated version of the group list 163. The second group options correspond to one or more second groups that were not indicated in the first version of the group list 163 and are indicated in the updated version of the group list 163.

In a particular aspect, the GUI 600 also includes the submit option 208. The device management client 152 provides the GUI 600 to a display of the mobile device 150. The device management client 152, in response to receiving the user input 104 of FIG. 1 indicating that the group option 204 is selected, updates the GUI 600 to indicate that the group option 204 is selected, as illustrated in FIG. 6. In a particular aspect, the user 103 selects the submit option 208 subsequent to selecting the group option 204.

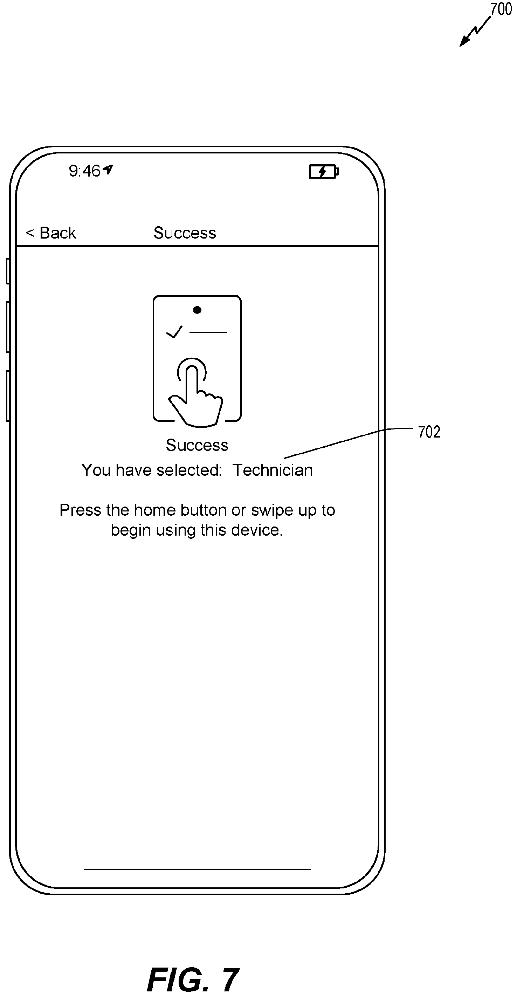

Referring to FIG. 7, a GUI is shown and generally designated 700. In a particular aspect, the GUI 700 is generated by the device management client 152, the mobile device 150, the mobile device manager 134, the MDM server 120, the system 100 of FIG. 1, or a combination thereof. For example, the device management client 152 of the mobile device 150 generates the GUI 700 in response to receiving the user input 104 indicating the selection of the group option 204, the submit option 208, or both.

In a particular aspect, the device management client 152 of the mobile device 150, in response to receiving the user input 104 indicating the selection of the group option 204, the submit option 208, or both, sends the join group request 155 to the MDM server 120 of FIG. 1. The join group request 155 indicates a second group (e.g., the group 114) corresponding to the group option 204. The MDM server 120, in response to receiving the join group request 155, sends a command to the mobile device 150 indicating that an action (e.g., the action 157) corresponding to the second group is to be performed, as described with reference to FIG. 1.

The device management client 152 of the mobile device 150 generates the GUI 700 subsequent to performing at least a portion of the action (e.g., the action 157) corresponding to the second group (e.g., the group 114), as described with reference to FIGS. 1 and 4. In a particular aspect, the GUI 700 includes an identifier 702 (e.g., group name) of the second group (e.g., the group 114) to indicate that the setup for the group 114 (e.g., "Technician") is successful.

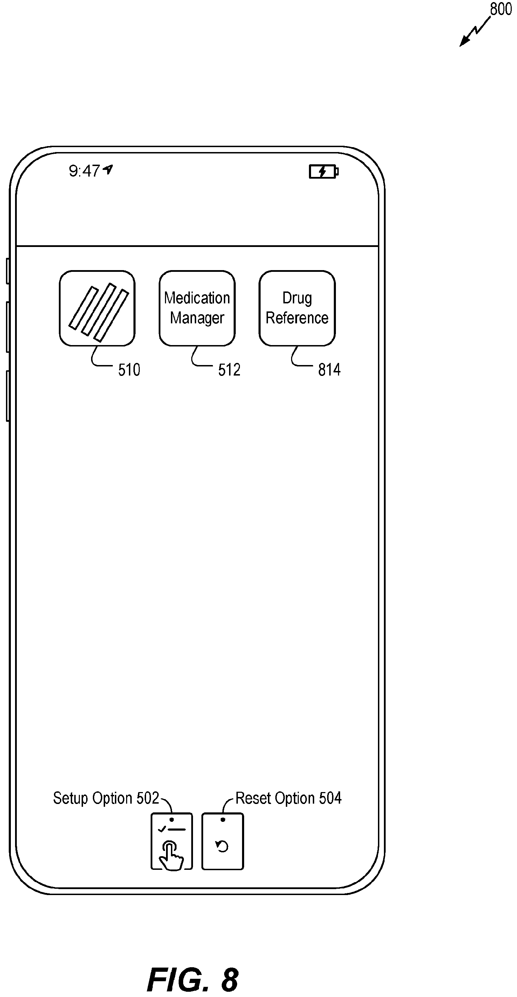

Referring to FIG. 8, a GUI is shown and generally designated 800. In a particular aspect, the GUI 800 is generated by the device management client 152, the mobile device 150, the mobile device manager 134, the MDM server 120, the system 100 of FIG. 1, or a combination thereof. For example, the device management client 152 of the mobile device 150 generates the GUI 800 in response to receiving the user input 104 indicating the selection of the group option 204, the submit option 208, or both. In a particular aspect, the device management client 152 of the mobile device 150 provides the GUI 800 to a display of the mobile device 150 for display subsequent to the GUI 700 of FIG. 7.

The device management client 152 generates the GUI 800 including icons of applications (e.g., the applications 167) corresponding to the second group (e.g., the group 114) associated with the group option 204. In a particular example, second applications corresponding to the second group associated with the group option 204 (e.g., "Technician") are distinct from first applications corresponding to the group 114 associated with the group option 202 (e.g., "Nursing"). For example, the first applications include a first application corresponding to the icon 510, a second application corresponding to the icon 512, a third application corresponding to the icon 514, and a fourth application corresponding to the icon 516, as described with reference to FIG. 5. The second applications include the first application, the second application, and a fifth application.

The device management client 152 of the mobile device 150 generates the GUI 800 including the icon 510 corresponding to the first application, the icon 512 corresponding to the second application, and an icon 814 corresponding to the fifth application. The GUI 800 does not display the icon 514 corresponding to the third application, the icon 516 corresponding to the fourth application, or both. In a particular aspect, the third application, the fourth application, or both, are available (e.g., installed) at the mobile device 150. In this aspect, the icon 514, the icon 516, or both are hidden on the GUI 800. In a particular implementation, the device management client 152 can switch between the setup for the group 114 (e.g., "Nursing") and the setup for the second group (e.g., "Technician") by restoring the icons and settings for the selected group. In this implementation, the applications and associated data are not deleted when the user 103 switches between groups.

In a particular aspect, the device management client 152 generates the GUI 800 to have a particular layout, a particular background image, particular icons, a particular formatting, particular colors, particular text, a particular arrangement, or a combination thereof, based on the configuration settings 165. The GUI 800 is thus automatically generated to enable access to the applications based on the configuration settings 165 for the second group (e.g., "Technician"). The GUI 800 includes the setup option 502, the reset option 504, or both. The device management client 152 provides the GUI 800 to a display of the mobile device 150.

In a particular aspect, the device management client 152 of the mobile device 150 receives the user input 104 of FIG. 1 indicating a selection of the setup option 502, as described with reference to FIG. 6. In a particular aspect, the device management client 152 of the mobile device 150 receives the user input 104 of FIG. 1 indicating a selection of the reset option 504, as further described with reference to FIG. 9.

Referring to FIG. 9, a GUI is shown and generally designated 900. In a particular aspect, the GUI 900 is generated by the device management client 152, the mobile device 150, the mobile device manager 134, the MDM server 120, the system 100 of FIG. 1, or a combination thereof.

For example, the device management client 152 of the mobile device 150 generates the GUI 900 in response to receiving the user input 104 indicating the selection of the reset option 504 of FIG. 5. In a particular aspect, the GUI 900 includes a message indicating that device reset is irreversible. The GUI 900 includes a reset option 904. In a particular aspect, the device management client 152 of the mobile device 150 provides the GUI 900 to a display of the mobile device 150.

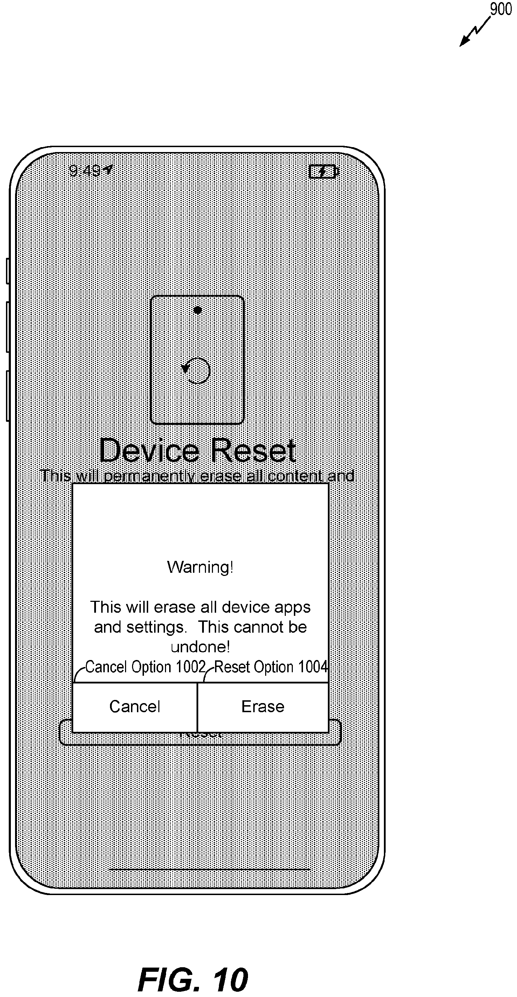

The device management client 152 of the mobile device 150, in response to receiving the user input 104 indicating a selection of the reset option 904 of FIG. 9, updates the GUI 900 to display a second message indicating that device reset is irreversible, as illustrated in FIG. 10. The GUI 900 includes a cancel option 1002, a reset option 1004, or both.

The device management client 152, in response to receiving the user input 104 indicating a selection of the cancel option 1002, provides the GUI 800 to a display of the mobile device 150. Alternatively, the device management client 152, in response to receiving the user input 104 indicating a selection of the reset option 1004, sends the reset request 185 of FIG. 1 to the MDM server 120, as described with reference to FIG. 1.

The system 100 thus enables a user-initiated setup and reset at the mobile device 150. The setup and reset are automatically performed independently of an IT administrator. The system 100 enables the user 103 to switch between setups for various groups, reset the mobile device 150, or both.

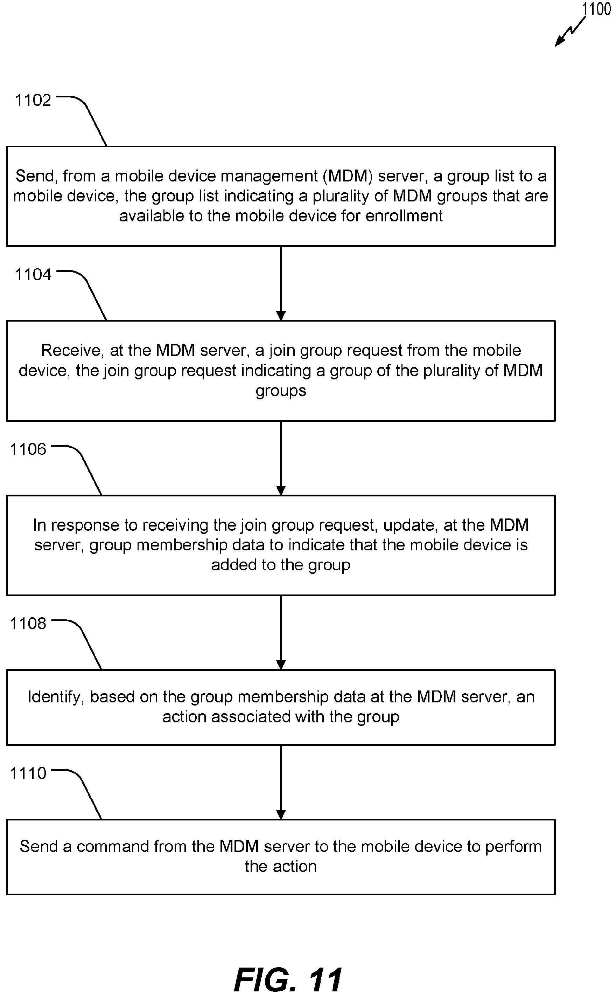

Referring to FIG. 11, a method of group-based mobile device management is shown and generally designated 1100. In a particular aspect, the method 1100 is performed by the mobile device manager 134, the MDM server 120, the system 100 of FIG. 1, or a combination thereof.

The method 1100 includes sending, from a mobile device management (MDM) server, a group list to a mobile device, at 1102. For example, the MDM server 120 of FIG. 1 sends the group list 163 to the mobile device 150, as described with reference to FIG. 1. The group list 163 indicates a plurality of MDM groups that are available to the mobile device 150 for enrollment, as described with reference to FIG. 1.

The method 1100 also includes receiving, at the MDM server, a join group request from a mobile device, at 1104. For example, the MDM server 120 of FIG. 1 receives the join group request 155 from the mobile device 150, as described with respect to FIG. 1. The join group request 155 indicates the group 114 of the plurality of MDM groups.

The method 1100 also includes, in response to receiving the join group request, updating, at the MDM server, group membership data to indicate that the mobile device is added to the group, at 1106. For example, the mobile device manager 134 of FIG. 1, in response to receiving the join group request 155, updates the group membership data 128 to indicate that the mobile device 150 is added to the group 114, as described with respect to FIG. 1.

The method 1100 further includes identifying, based on the group membership data at the MDM server, an action associated with the group, at 1108. For example, the mobile device manager 134 of FIG. 1, identifies, based on the group membership data 128, the action 157 associated with the group 114, as described with respect to FIG. 1.

The method 1100 also includes sending a command from the MDM server to the mobile device to perform the action, at 1110. For example, the mobile device manager 134 of FIG. 1 sends a command to the mobile device 150 to perform the action 157, as described with respect to FIG. 1.

The method 1100 thus enables the MDM server 120 to automatically initiate performance of the action 157 in response to receiving the join group request 155. The mobile device 150 may, in response to receiving the command, perform the action 157 by downloading the applications 167, downloading and implementing the configuration settings 165, displaying icons corresponding to the applications 167, refraining from displaying icons corresponding to the applications 153, deleting (or uninstalling) the applications 153, or a combination thereof. The MDM server 120 thus enables a user-initiated setup of the mobile device 150 for a selected group. The user-initiated setup is independent of an IT administrator.

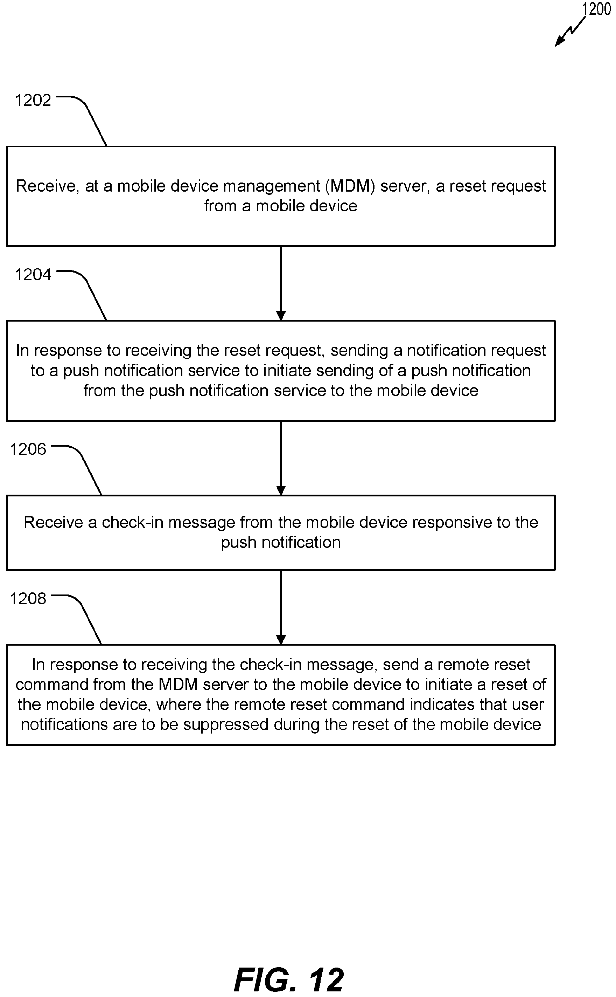

Referring to FIG. 12, a method of group-based mobile device management is shown and generally designated 1200. In a particular aspect, the method 1200 is performed by the device management client 152, the mobile device 150, the system 100 of FIG. 1, or a combination thereof.

The method 1200 includes receiving, at a mobile device management (MDM) server, a reset request from a mobile device, at 1202. For example, the MDM server 120 of FIG. 1 receives the reset request 185 from the mobile device 150, as described with reference to FIG. 1.

The method 1200 also includes, in response to receiving the reset request, sending a notification request to a push notification service to initiate sending of a push notification from the push notification service to the mobile device, at 1204. The mobile device manager 134 of FIG. 1, in response to receiving the reset request 185, sends the notification request 124 to the push notification service 130 to initiate sending of the push notification 133 from the push notification service 130 to the mobile device 150, as described with reference to FIG. 1. The method 1200 further includes receiving a check-in message from the mobile device responsive to the push notification, at 1206. For example, the mobile device manager 134 of FIG. 1 receives a check-in message from the mobile device 150 responsive to the push notification 133, as described with reference to FIG. 1.

The method 1200 also includes, in response to receiving the check-in message, sending a remote reset command from the MDM server to the mobile device to initiate a reset of the mobile device, at 1208. For example, the mobile device manager 134 of FIG. 1, in response to receiving the check-in message from the mobile device 150, sends the reset command 187 (e.g., a remote reset command) to the mobile device 150 to initiate a reset of the mobile device 150, as described with reference to FIG. 1. The remote reset command 187 indicates that user notifications are to be suppressed during the reset of the mobile device 150, as described with reference to FIG. 1.

The method 1200 thus enables the MDM server 120 to automatically initiate reset of the mobile device 150 in response to receiving the reset request 185. The mobile device 150 may, in response to receiving the reset command 187, delete the applications 167, the applications 153, the configuration settings 165, the data 154, or a combination thereof. The mobile device 150 disables user notifications during the reset of the mobile device 150, as described with reference to FIG. 1. In a particular aspect, the mobile device 150 removes an activation lock from the mobile device 150. The MDM server 120 thus reduces (e.g., eliminates) the likelihood of a subsequent user of the mobile device 150 accessing sensitive information associated with the user 103.

Mobile devices are becoming increasingly prevalent in everyday use, including in home, office, and educational environments. For example, school districts are starting to implement one-to-one technology programs that provide each student access to a mobile device, such as a tablet computer. As another example, many corporations provide employees with mobile devices to perform job-related functions on-the-go. To maintain control of the devices, a school or corporation may rely on information technology (IT) administrators that maintain a roster of devices and statuses of each device. However, relying on IT administrators for all mobile device management (MDM) may be inefficient and expensive. For example, at a large corporation with thousands of employees it may take weeks for IT administrators to recall each device, install a software application on each of the devices, and return the devices to the employees. Moreover, it may be difficult for the IT administrators to quickly determine which devices have a particular application installed and which devices need updating.

The present disclosure provides systems and methods that enable a mobile device management (MDM) server to maintain and update inventory information based on "smart" groups. As used herein, a "smart" group may be a group whose membership is dynamically updated in response to certain events. To illustrate, an IT administrator may create a group that has particular membership/grouping criteria. The membership of the group may be dynamically updated as managed devices (e.g., mobile phones, tablet computers, laptop computers, etc.) check-in with the MDM server and provide updated inventory information. An IT administrator may use the dynamically updated group to more easily and quickly perform MDM actions. As an illustrative non-limiting example, a dynamically updated group may be created for devices that have not backed up data to the MDM server (or another external backup device) in the last 30 days. To send a reminder message regarding backup to all devices that have not backed up in the last 30 days, an IT administrator may select the group as a recipient of the message, which may be faster and easier than the IT administrator identifying each individual device that has not backed up in the past 30 days. For example, using dynamic groups of managed devices to select targets of MDM actions may be faster than the IT administrator querying a device database or requesting individual device users to indicate when their respective devices were backed up.

It should be noted that although various embodiments may be described herein with reference to educational or corporate settings, this is an example only and not to be considered limiting. The teachings of the present disclosure may be applied to other mobile device environments, including but not limited to home environments, retail environments, etc.

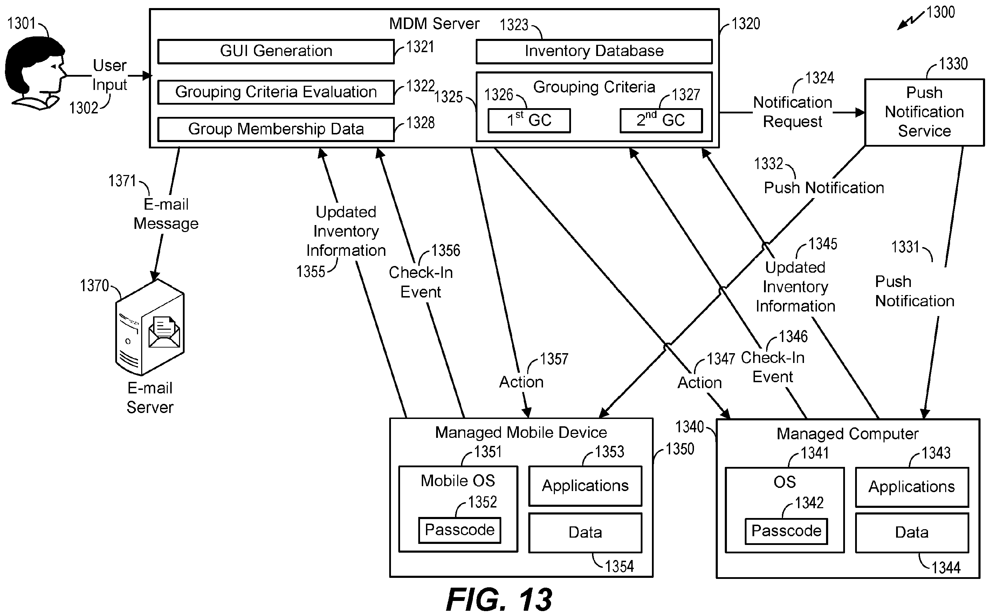

Referring to FIG. 13, a particular embodiment of a system that is operable to maintain dynamically updated groups of devices is shown and generally designated 1300. The system includes a mobile device management (MDM) server 1320 that is communicably coupled to a push notification service 1330, one or more managed computers (e.g., an illustrative managed computer 1340), one or more managed mobile devices (e.g., an illustrative managed mobile device 1350), and an e-mail server 1370. It should be noted that although one managed computer 1340 and one managed mobile device 1350 is shown in FIG. 13, the present disclosure is not limited to any particular configuration or number of devices. In alternate embodiments, a different number of managed computers and/or managed mobile devices may be present. For example, more than one managed computer and more than one managed mobile device may be registered with the MDM server 1320.

The managed computer 1340 may be a portable computing device with wired and/or wireless networking capability. For example, the managed computer 1340 may be a desktop computer, a laptop computer, a server, etc. The managed mobile device 1350 may be a portable device with wireless networking capability. For example, the managed mobile device 1350 may be a tablet computer, a mobile phone, a portable media player, an electronic book (eBook) reader, or any combination thereof.

The managed computer 1340 may include an operating system (OS) 1341 and the managed mobile device 1350 may include a mobile OS 1351. Each OS 1341, 1351 may control computing functions, such as input/output (e.g., a touchscreen display, speaker, microphone, camera, etc.) and networking (e.g., cellular, Bluetooth, Wi-Fi, Ethernet, etc.). Each OS 1341, 1351 may also support execution of applications (apps) 1343, 1353 and provide such applications access to device resources and data 1344, 1354. Examples of applications include, but are not limited to, a web browser, e-mail, a calendar, social networking, a document/eBook reader, a media player, etc. Applications may correspond to software instructions that are stored in a memory and executed by a processor, hardware circuits that implement application functionality, or both. The applications 1343, 1353 may be pre-installed (e.g., as part of or along with an OS) or may be installed after being downloaded (e.g., via a storefront) or sideloaded (e.g., from an external storage device). In a particular embodiment, each OS 1341, 1351 stores a passcode 1342, 1352. For example, the passcodes 1342, 1352 may be used to secure device access. When a user attempts to operate a device, the user may be prompted to input a passcode, and access to the device may not be enabled unless the input passcode matches the stored passcode 1342, 1352.

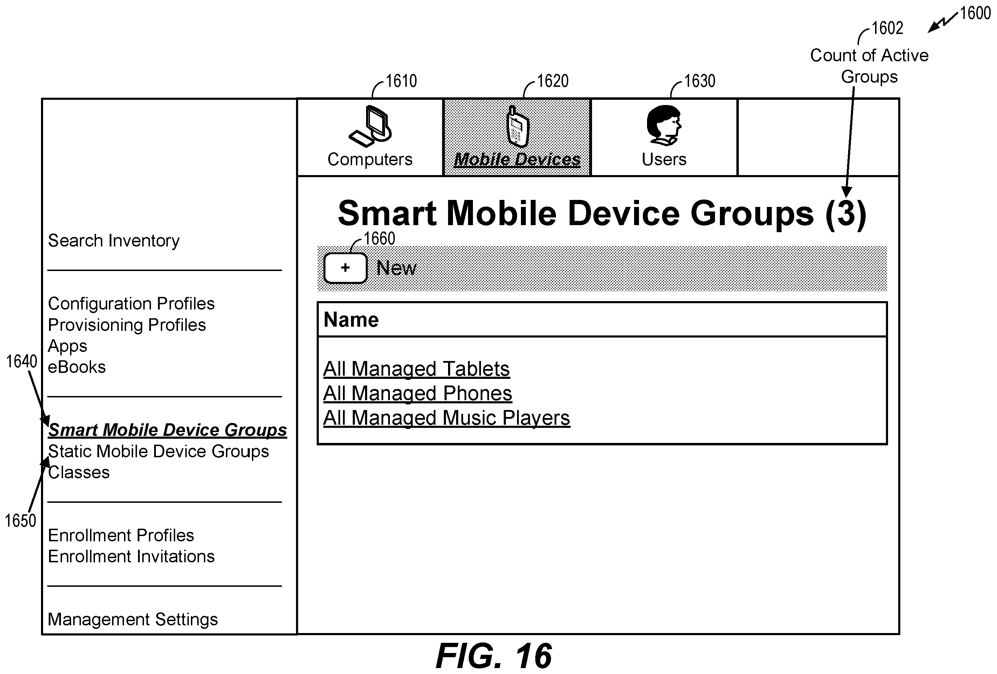

The MDM server 1320 may correspond to hardware and/or software that implements MDM functions. As an illustrative non-limiting example, in an educational context, the MDM server 1320 may manage teacher and student computers and mobile devices. The MDM server 1320 may include a graphical user interface (GUI) generation module 1321. The GUI generation module 1321 may generate a GUI that is operable to (e.g., that can be used to) define dynamic groups. For example, the MDM server 1320 may send the generated GUI to a computing device associated with a user 1301 (e.g., an IT administrator) and may receive user input 1302 via the GUI. The user input 1302 may define grouping criteria for one or more dynamic groups, as further described herein. The MDM server 1320 may store grouping criteria 1325 received via the GUI. Examples of the GUI generated by the GUI generation module 1321 are further described with reference to FIGS. 16-23.

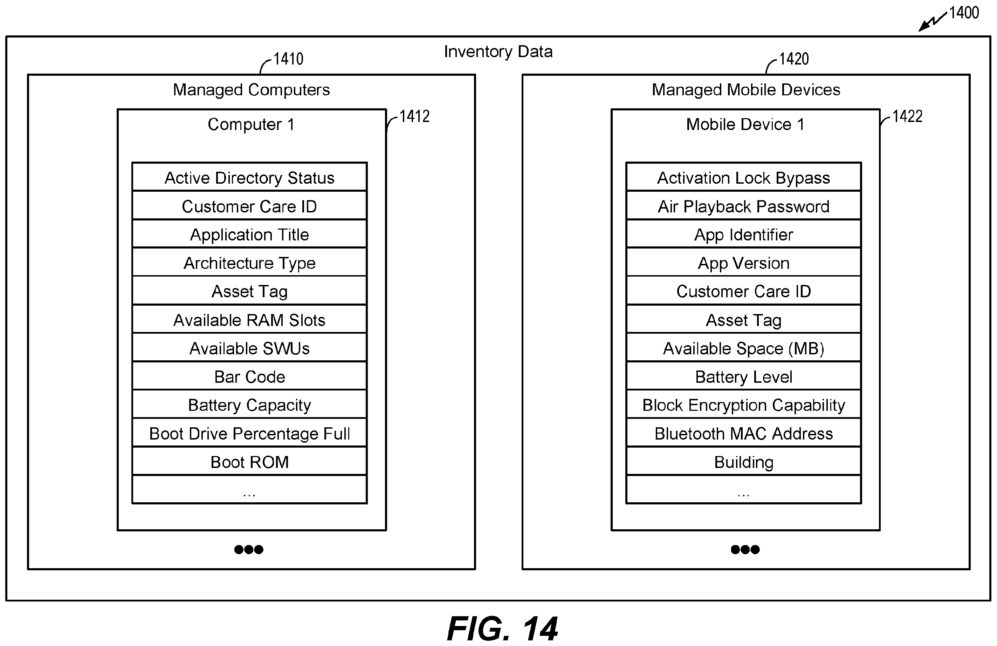

The MDM server 1320 may include a grouping criteria evaluation module 1322 and may store (or have access to) an inventory database 1323 and group membership data 1328, as shown. The inventory database 1323 may include data regarding each managed entity (e.g., a computer or a mobile device) in the system 1300. An example of the data stored in the inventory database 1323 is further described with reference to FIG. 14. In a particular embodiment, the inventory database 1323 includes values of various inventory attributes for each managed entity. As an illustrative non-limiting example, inventory data for a managed computer may include values for one or more of the following inventory attributes:
Active Directory Status, Application Title, Application Version, Architecture Type, Asset Tag, Available RAM Slots, Available SWUs, Bar Code, Battery Capacity, Boot Drive Percentage Full, Boot ROM, Building, Bus Speed MHz, Cached Packages, Computer Group, Computer Name, Department, Disk Encryption Configuration, Drive Capacity MB, Customer Care ID, Encrypted Volumes Eligibility, Encrypted Volumes Individual Key Validation, Encrypted Volumes Institutional Key, Encrypted Volumes Partition Encryption State, Encrypted Volumes Recovery Key Type, Encrypted Volumes Status, Encrypted Volumes User, Email Address, Enrollment Method: PreStage enrollment, Font Title, Font Version, Full Name, IP Address, Last Check-in, Last Enrollment, Last Inventory Update, Lease Expiration, Licensed Software, Life Expectancy, Local User Accounts, MAC Address, Make, Mapped Printers, Master Password Set, MDM Platform Binary Version, MDM Server ID, Model, Model Identifier, NIC Speed, Number of Available Updates, Number of Processors, Operating System, Optical Drive, Packages Installed By MDM Suite, Packages Installed By Native Installer/SWU, Partition Name, Phone Number, Platform, Plug-in Title, Plug-in Version, PO Date, PO Number, Position, Processor Speed MHz, Processor Type, Purchase Price, Purchased or Leased, Purchasing Account, Purchasing Contact, Room, Running Services, S.M.A.R.T. Status, Scheduled Tasks, Serial Number, Service Pack, SMC Version, Total RAM MB, Username, Vendor, Warranty Expiration

As another illustrative non-limiting example, inventory data for a managed mobile device may include values for one or more of the following inventory attributes:
Activation Lock Bypass Enabled, App Identifier, App Name, App Version, Asset Tag, Available Space MB, Battery Level, Block Encryption Capability, Bluetooth MAC Address, Building, Capacity MB, Carrier Settings Version, Cellular Technology, Certificate Name, Current Carrier Network, Current Mobile Country Code, Current Mobile Network Code, Customer Care ID, Data Protection, Data Roaming Enabled, Department, Device ID, Device Locator Service Enabled, Device Phone Number, Display Name, Do Not Disturb Enabled, Email Address, Enrollment Method: Enrollment profile, Enrollment Method: PreStage enrollment, Enrollment Method: User-initiated - invitation, Enrollment Method: User-initiated - no invitation, Expires, File Encryption Capability, Full Name, Hardware Encryption, Home Carrier Network, Home Mobile Country Code, Home Mobile Network Code, ICCID, Identifier, Identity, IMEI, IP Address, Languages, Last Backup, Last Enrollment, Last Inventory Update, Lease Expiration, Life Expectancy, Locales, MDM Profile Removal Allowed, MEID, Mobile Device Group, Model, Model Identifier, Modem Firmware Version, OS Build, OS Version, Passcode Compliance, Passcode Compliance with Profile(s), Passcode Status, PO Date, PO Number, Position, Profile Name, Provisioning Profile Name, Purchase Price, Purchased or Leased, Purchasing Account, Purchasing Contact, Roaming, Room, Serial Number, Subscriber MCC, Subscriber MNC, Supervised, UDID, Used Space Percentage, User Phone Number, Username, Vendor, Version, Voice Roaming Enabled, Warranty Expiration, Wi-Fi MAC Address, Wireless Media Streaming Password

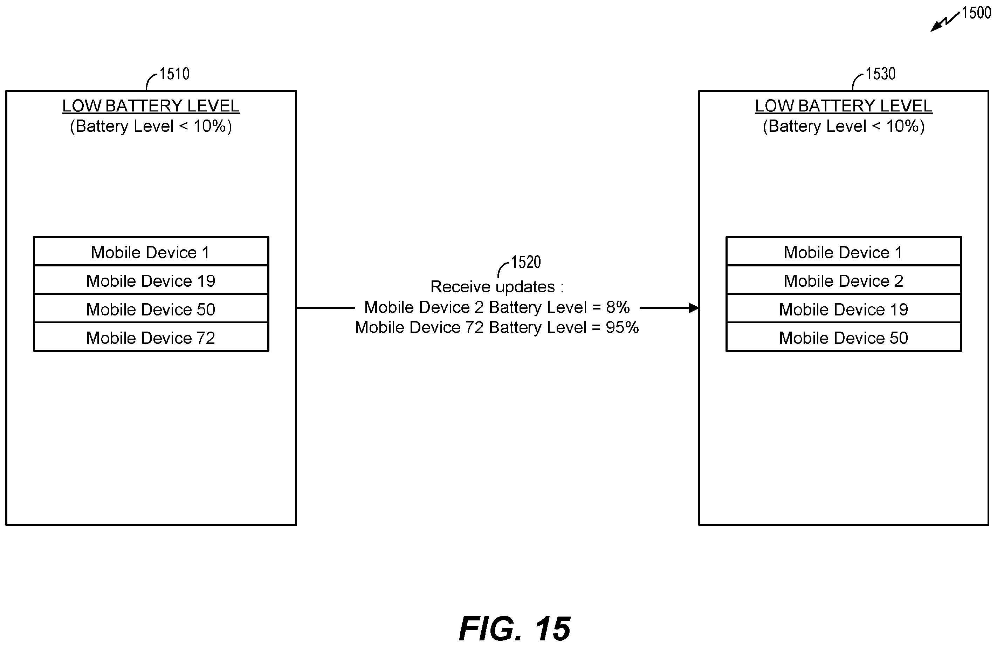

The group membership data 1328 may include a list of devices that are members of each dynamic group maintained by the MDM server 1320. The group membership data 1328 may be updated in response to various events that occur in the system 1300. As illustrative non-limiting examples, the group membership data 1328 may be updated responsive to a managed device being added to the system 1300, a managed device being removed from the system 1300, a managed device providing updating inventory data to the MDM server 1320, etc. An example of updating the group membership data 1328 is further described with reference to FIG. 15. In a particular embodiment, the MDM server 1320 transmits an alert in response to a change in membership of a group. For example, the MDM server 1320 may send an e-mail message 1371 to the user 1301 or to another IT administrator via the e-mail server 1370. Additional examples of alerts may include, but are not limited to, short message service (SMS) messages, instant messages, GUI alerts, automated telephone calls, etc.

In a particular embodiment, the user input 1302 may include data identifying an action to be performed with respect to managed entities (e.g., managed devices) of a particular dynamic group. For example, a "Low Battery Laptops" dynamic group may include laptops that have battery levels less than a threshold ("Battery Level < 10%"), and the action may be displaying a pop-up message on the laptops to remind users to charge the laptops.

Examples of MDM actions may include, but are not limited to, installing an application at a managed device, adjusting a configuration setting at a managed device, providing content to a managed device, sending a message to a managed device, setting or clearing a passcode, editing one or more inventory data attributes, sending a communication/message (e.g., an e-mail or a SMS message), deleting data, sending remote commands, etc.

In response to receiving the user input 1302, the grouping criteria evaluation module 1322 may determine, based on the membership data 1328 and/or the inventory database 1323, which laptops are members of the "Low Battery Laptops" group and may initiate transmission of a push notification to such laptops. As further described herein, the MDM server 1320 may have previously received and stored information regarding the battery level of the laptops, based on inventory data updates provided by the laptops. Alternatively, or in addition, the MDM server 1320 may request battery level information responsive to receiving the user input 1302. In a particular embodiment, the MDM server 1320 may send a notification request 1324 to a push notification service 1330, where the notification request 1324 identifies the laptops.

In an illustrative embodiment, the GUI enables the user 1301 to define dynamic groups via recursive application of grouping criteria. For example, the user input 1302 may define a first dynamic group based on first grouping criteria 1326 and a second dynamic group based on second grouping criteria 1327. The first grouping criteria 1326 may be based on at least the second grouping criteria 1327 and a logical operator.

To illustrate, the second dynamic group may be called "Science Department Mobile Devices" and may include mobile devices that are the property of (or assigned to) a science department at a school. Accordingly, the second grouping criteria 1327 may include a value "Science" of an inventory attribute "Department," e.g., the second grouping criteria 1327 may be "Department = Science." The first dynamic group may be called "Chemistry Building Mobile Devices" and may include science department mobile devices that are located in the chemistry building of the school. Accordingly, the first grouping criteria 1326 may be:
"Mobile Device Group = Science Department Devices AND Building = Chemistry"

Thus, the first dynamic grouping criteria 1326 (e.g., chemistry building mobile devices) may be based on at least the second dynamic grouping criteria 1327 (e.g., science department mobile devices) and a logical operator (e.g., an AND operator). Examples of logical operators that can be used in grouping criteria include, but are not limited to: and, or, not, is, is not, has, does not have, member of, not member of, organizational operators (e.g., open parenthesis, close parenthesis, etc.), and mathematical operators (e.g., equal to, not equal to, greater than, less than, etc.).

It should be noted that although various embodiments are described herein with reference to educational settings, this is for example only and not to be considered limiting. The teachings of the present disclosure may be applied to other environments, including but not limited to home environments, corporate environments, retail environments, etc.

During operation, the MDM server 1320 may receive the user input 1302, where the user input 1302 includes dynamic grouping criteria and/or identifies action(s) to be performed with respect to the devices of a particular dynamic group. In an illustrative embodiment, the user 1301 may be prompted for authentication credentials (e.g., a username, a password, a uniform resource locator (URL) of the MDM server 1320, etc.) prior to being granted access to the GUI. Communication between the various components of the system 1300 may occur via secure (e.g., encrypted) channels, such as encrypted internet protocol (IP) connections.

When the user input 1302 indicates that an action is to be performed with respect to devices of a group, the grouping criteria evaluation module 1322 may determine which devices are members of the group. The MDM server 1320 may send a notification request 1324 to the push notification service 1330, where the push notification request 1324 identifies the devices that are determined to be members of the group. The push notification service 1330 may correspond to one or more network accessible servers that are configured to send push notifications 1331, 1332 to devices of the group, such as the managed computer 1340 and/or the managed mobile device 1350.

In a particular embodiment, the push notifications 1331, 1332 may be associated with check-in events 1346 and 1356 that cause the managed computer 1340 and the managed mobile device 1350 to check with the MDM server 1320 to see if there are any actions to be performed by the managed computer 1340 or the managed mobile device 1350. For example, actions 1347, 1357 specified by the user input 1302 may be "queued" by the MDM server 1320 and may be retrieved by the managed computer 1340 and the managed mobile device 1350 in response to the push notifications 1331, 1332.

In an alternate embodiment, the push notifications 1331, 1332 may include or identify the action to be performed. For example, the push notifications 1331, 1332 may utilize an application programming interface (API) of the OS 1341 or 1351 to instruct the managed computer 1340 or the managed mobile device 1350 to perform the action. In yet another alternate embodiment, a notification and/or an action may be pushed by the MDM server 1320 directly to the managed computer 1340 or to the managed mobile device 1350. For example, when the managed mobile device 1350 is an iOS^{®} device, the command may be compatible with an iOS^{®} MDM API/protocol, such as a device lock command, a clear passcode command, etc. (iOS is a registered trademark of Cisco Systems, Inc. of San Jose, CA and is used by Apple Inc. of Cupertino, CA under license).

During operation, the managed computer 1340 and the managed mobile device 1350 may provide updated inventory information 1345, 1355 to the MDM server 1320. The updated inventory information 1345, 1355 may indicate change(s) in inventory attribute(s) associated with the managed computer 1340 and the managed mobile device 1350. A managed device may provide updated inventory information to the MDM server 1320 in response to a particular event (e.g., performance of a MDM action, relocation into a different building, power-on, wake from sleep mode, etc.). Alternatively, or in addition, updated inventory information may be provided periodically or in response to user input or in response to a request from the MDM server 1320. In a particular embodiment, to reduce an amount of data transmitted to the MDM server 1320, the updated inventory information only identifies changed values of inventory attributes, instead of values of all inventory attributes. In response to receiving the updated inventory information 1345 or 1355, the MDM server may update a record in the inventory database 1323 for the corresponding managed computer 1340 or managed mobile device 1350. When the updated inventory information 1345, 1355 results in addition of the managed computer 1340 or the managed mobile device 1350 to a dynamic group, or removal from a dynamic group, the MDM server 1320 updates the group membership data 1328. To illustrate, the MDM server 1320 may receive an update from a device, where the update indicates that the device has moved to the chemistry building at the school. The MDM server 1320 may update a record in the inventory database 1323 for the device to reflect that the device has moved to the chemistry building. The MDM server 1320 may also update the group membership data 1328 (which may include group membership lists) by adding the device to group(s) whose grouping criteria 1325 include "Building=Chemistry" and removing the device from group(s) whose grouping criteria 1325 include a different value for "Building."

The system 1300 of FIG. 13 may thus support creation and updating of dynamic groups and transmission of push notifications to devices that are in a particular dynamic group. Using dynamic (e.g., "smart") groups to perform MDM actions is typically faster than a user selecting devices one-at-a-time. It will also be appreciated that the system 1300 may update group membership automatically based on inventory updates from managed devices and may evaluate group membership just-in-time (e.g., in response to a MDM action request), so that appropriate managed devices are targeted for the MDM action (as opposed to targeting devices based on "stale" inventory information).

Referring to FIG. 14, a particular embodiment of inventory data is shown and generally designated 1400. In an illustrative embodiment, the inventory data 1400 may be stored in an inventory database, such as the inventory database 1323 of FIG. 13.

The inventory data 1400 may include managed computer inventory data 1410 and managed mobile device inventory data 1420. The managed computer inventory data 1410 may include inventory data associated with one or more managed computers that are registered with a MDM server (e.g., the MDM server 1320 of FIG. 13). In the illustrated example, the managed computer inventory data 1410 includes data 1412 associated with a first managed computer (Computer 1). The data 1412 associated with the first managed computer may include values of one or more inventory attributes, which may include but are not limited to active directory status, customer care ID, application title, bar code, battery capacity, etc. Additional inventory attributes associated with managed computers are described with reference to FIG. 13.

The managed mobile device inventory data 1420 may include inventory data associated with one or more managed mobile devices that are registered with a MDM server (e.g., the MDM server 1320 of FIG. 13). In the illustrated example, the managed mobile device inventory data 1420 includes data 1422 associated with a first managed mobile device (Mobile Device 1). The data 1422 associated with the first managed mobile device may include values of one or more inventory attributes, which may include, but are not limited to, activation lock bypass, air playback password, customer care ID, asset tag, battery level, etc. Additional inventory attributes associated with managed mobile devices are described with reference to FIG. 13.

Referring to FIG. 15, an illustrative embodiment of dynamically updating group membership is shown and generally designated 1500. In the example of FIG. 15, group membership for a "Low Battery Level" group is shown. The grouping criteria for the group is "Battery Level < 10%." Thus, mobile devices with battery levels below 10% will be members of the group.

In the example of FIG. 15, mobile device 1, mobile device 19, mobile device 50, and mobile device 72 are initially members of the low battery level group, as shown at 1510. Thus, the group membership data 1328 of FIG. 13 for the low battery level group may identify mobile device 1, mobile device 19, mobile device 50, and mobile device 72. Inventory data in the inventory database 1323 of FIG. 13 may store a most recently known (e.g., received) battery level for the mobile devices.

A MDM server (e.g., the MDM server 1320 of FIG. 13) may receive updates from mobile devices during operation. For example, as shown at 1520, the MDM server may receive a first update that a battery level of mobile device 2 is 8% and a second update that a battery level of mobile device 72 is 95%.

In response to receiving the updates, the MDM server may store the received battery level information in the inventory database. The MDM server may also **dynamically** update group membership data for one or more groups that include battery level as a grouping criterion. For example, as shown at 1530, mobile device 2 is added to the low battery level group and mobile device 72 is removed from the low battery level group. In a particular embodiment, instead of modifying group membership data in response to each update from each managed device (e.g., in real-time or near-real-time), the MDM server may queue updates and may process updates asynchronously (e.g., when the MDM server has available resources to process the queued updates). In such an embodiment, if a MDM action is requested by a user, the update queue may be processed (e.g., "emptied") before group membership data is evaluated to identify devices to be notified regarding the MDM action.

It should be noted that the examples shown in FIG. 15 are for illustration only and not to be considered limiting. At any given time, a managed device may be a member of any number of dynamic groups. A device may be removed from a group, added to a group, or both removed from one group and added to another group in response to an update. For example, in response to the update that the battery level of the mobile device 72 is 95%, the mobile device 72 may be removed from the low battery level group and added to a "high battery level" group having grouping criteria "Battery Level > 90%." Thus, as illustrated in FIG. 15, a MDM server may dynamically update group membership data based on updated information received from managed devices. It should be noted that although FIG. 15 illustrates updating group membership data based on a change in a single attribute, device updates may include updated values for multiple attributes and group membership data may be updated in response to changes in multiple attributes.

In a particular embodiment, a MDM server (e.g., the MDM server 1320) may maintain static groups as well as dynamic groups. Static groups may have fixed membership that is not dynamically updated. For example, a static group having the grouping criteria "Manufacturer = Company X" may have a fixed membership including managed devices manufactured by company X.

Although various embodiments have been described herein with reference to managed computers and managed mobile devices, dynamic groups of other types of managed entities may also be crated and used. For example, the MDM server 1320 may support creating and using dynamic groups of users. Each user may be associated with one or more managed devices (e.g., computers or mobile devices), and sending a push notification to a user may result in sending a push notification to one or more managed devices associated with a user. Grouping criteria for dynamic user groups may include values for inventory attributes, such as one or more of the following:
Content Name, Content Type, Email Address, Full Name, Phone Number, Position, Username, Volume Purchase Program (VPP) Account, VPP Invitation Status

FIGS. 16-23 illustrate particular embodiments of a graphical user interface (GUI) that may be generated by the GUI generation module 1321 of FIG. 13. The MDM server 1320 may provide the GUI to a display device for display. For example, the GUI may be displayed at a display device visible to the user 1301. The user 1301 may use an input device, such as a keyboard, a mouse, a touchscreen, etc. to provide the user input 1302 responsive to the GUI.

Referring to FIG. 16, a first embodiment of a GUI is shown and generally designated 1600. The GUI 1600 includes elements (e.g., icons, links, buttons, etc.) 1610, 1620, and 1630 to select managed computer options, managed mobile device options, and managed user options, respectively. In the illustrated example, the element 1620 for mobile devices is selected. The GUI 1600 also includes elements 1640 and 1650 that are selectable to display a list of "smart" (e.g., dynamic) mobile device groups and a list of static mobile device groups, respectively. In the illustrated example, the element 1640 for smart mobile device groups is selected.

As shown in FIG. 16, the GUI 1600 may include a count 1602 of a number of active groups. In the illustrated example, three dynamic groups are active: "All Managed Tablets," "All Managed Phones," and "All Managed Music Players." A user may select (e.g., click on, tap on, etc.) a link for an active managed group or a button 1660 to define a new dynamic mobile device group. Selecting an active managed group may enable the user to modify grouping criteria and/or other settings associated with the selected group. Selecting the "new" button 1660 may enable the user to define grouping criteria for a newly added dynamic group.

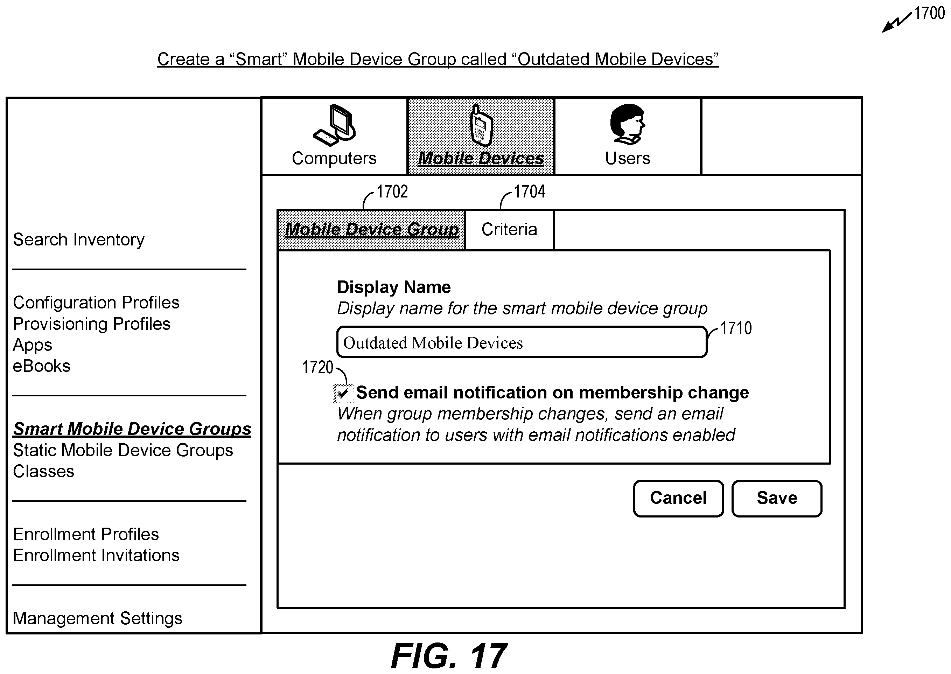

For example, FIG. 17 illustrates a particular embodiment of a GUI 1700 corresponding to selection of the "new" button 1660 of FIG. 16. The GUI 1700 includes a "Mobile Device Group" tab 1702 and a "Criteria" tab 1704. In the example of FIG. 17, the "Mobile Device Group" tab is selected. The user is creating a new dynamic group for mobile devices, and, as shown at 1710, has entered the name "Outdated Mobile Devices" for the group. The user has also selected an option 1720 to cause a MDM server (e.g., the MDM server 1320 of FIG. 13) to initiate sending an e-mail notification to the user (e.g., to a device associated with the user) when membership of the "Outdated Mobile Devices" group changes. To illustrate, the e-mail notification may correspond to the e-mail message 1371 of FIG. 13.

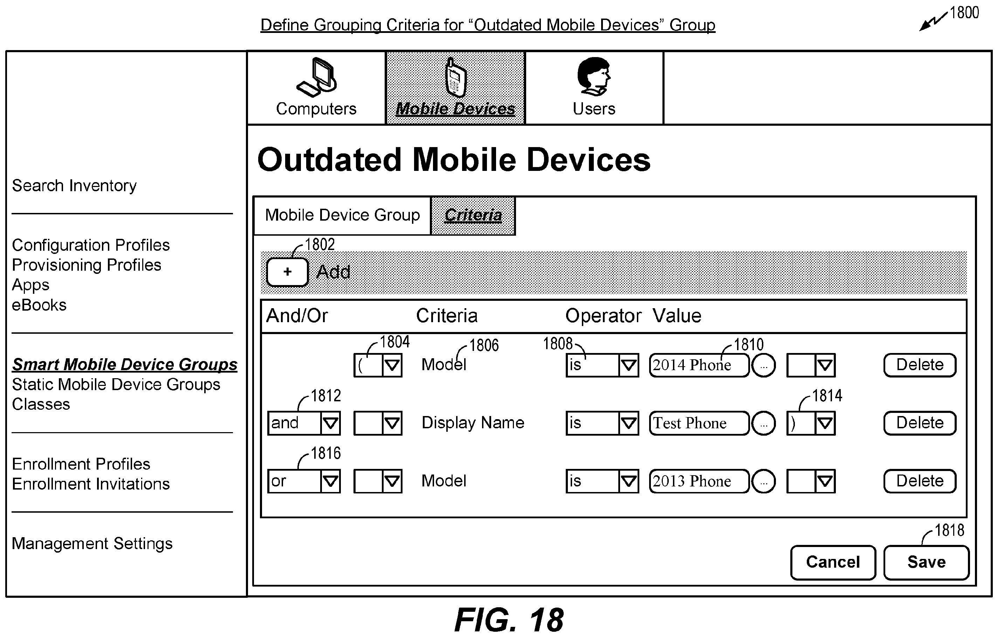

Continuing to FIG. 18, a particular embodiment of a GUI corresponding to selection of the "Criteria" tab 1704 of FIG. 17 is shown and is generally designated 1800. The GUI 1800 may include various elements. In the example of FIG. 18, a button 1802 may be used to add another criterion to the grouping criteria. An element 1804 is used to include an open parenthesis operator in the grouping criteria. At 1806, an inventory data attribute "Model" (e.g., mobile device model) is selected for inclusion in the criteria. As shown at 1808 and 1810, the sub-criteria involving the "Model" attribute includes an IS operator and the value "2014 Phone." Thus, the "Model" sub-criteria may be satisfied by managed mobile devices having a value of "2014 Phone" for the "Model" inventory attribute. At 1812, an AND operator is selected to combine the "Model is 2014 Phone" sub-criteria with a "Display Name is Test Phone" sub-criteria. A close parenthesis operator is selected, at 1814, and an OR operator is selected, at 1816, to combine the sub-criteria within the parentheses to a sub-criteria "Model is 2013 Phone." Thus, an overall grouping criteria defined in the GUI of FIG. 18 is:
(Model is 2014 Phone and Display Name is Test Phone) or Model is 2013 Phone.

Accordingly, mobile devices that are members of the "Outdated Mobile Devices" group will be 2014 model "test" (e.g., beta) phones or 2013 model phones. The user may select a button 1818 to save the grouping criteria and finish defining the "Outdated Mobile Devices" group. When the "Outdated Mobile Devices" group is saved, the count 1602 of active groups may increase from 3 to 4, and a link for "Outdated Mobile Devices" may be displayed along with the previously displayed links for "All Managed Tablets," "All Managed Phones," and "All Managed Music Players."

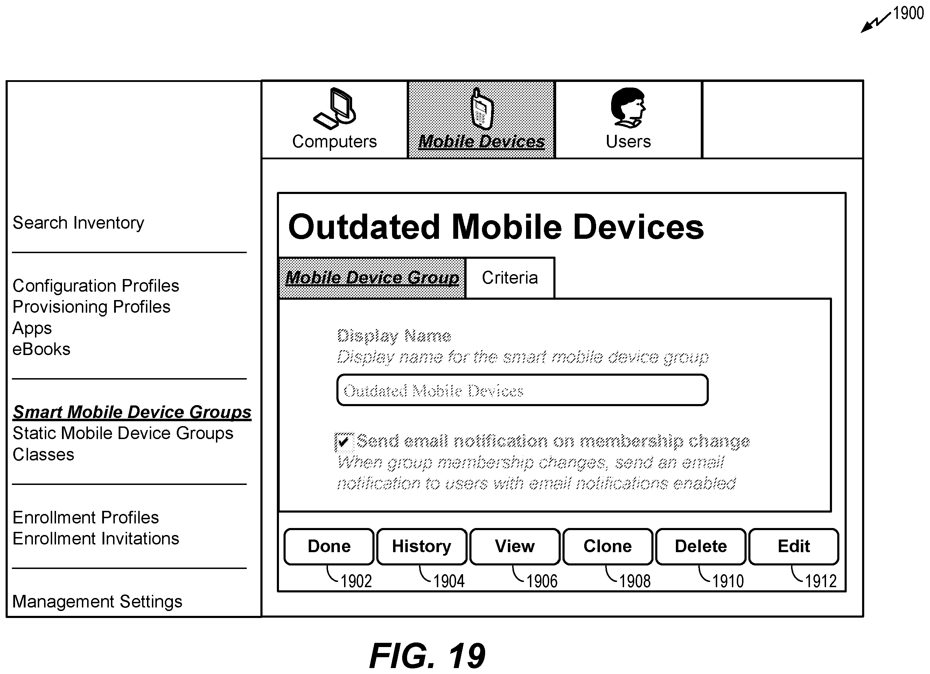

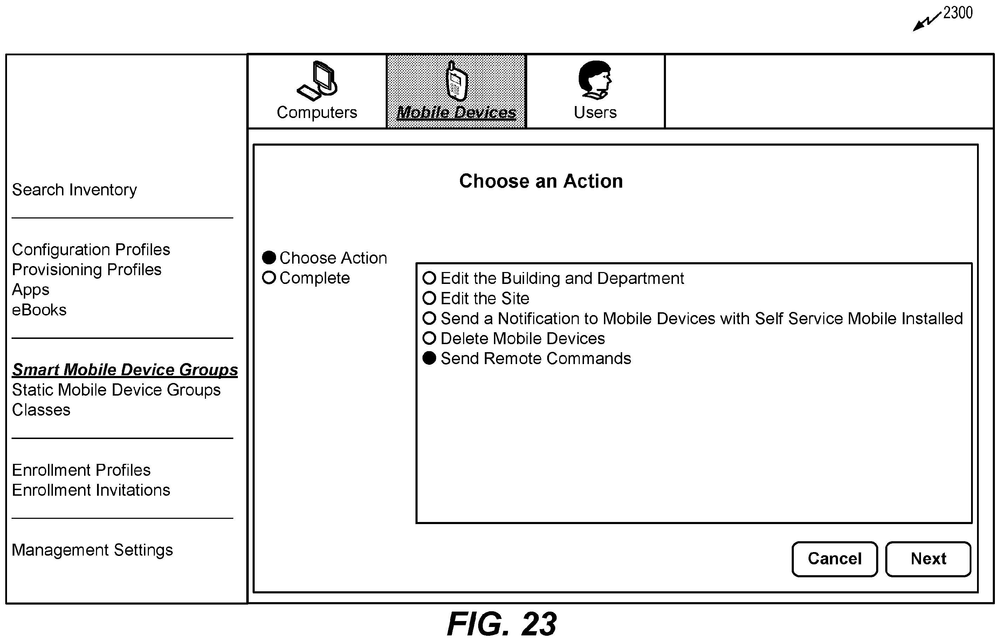

Referring to FIG. 19, a particular embodiment of a GUI displayed responsive to selection of a previously created dynamic group is shown and generally designated 1900. In particular, the GUI 1900 corresponds to a user selecting the link for the previously created "Outdated Mobile Devices" group. The GUI 1900 includes a "Done" button 1902 to save changes to the group, a "History" button 1904 to view history information associated with the group (e.g., how the grouping criteria of the group has evolved over time) and a "View" button 1906 to view members of the group. After selecting the view button 1906, a user may select an action to be performed with respect to members of the group, as further described with reference to FIG. 23.

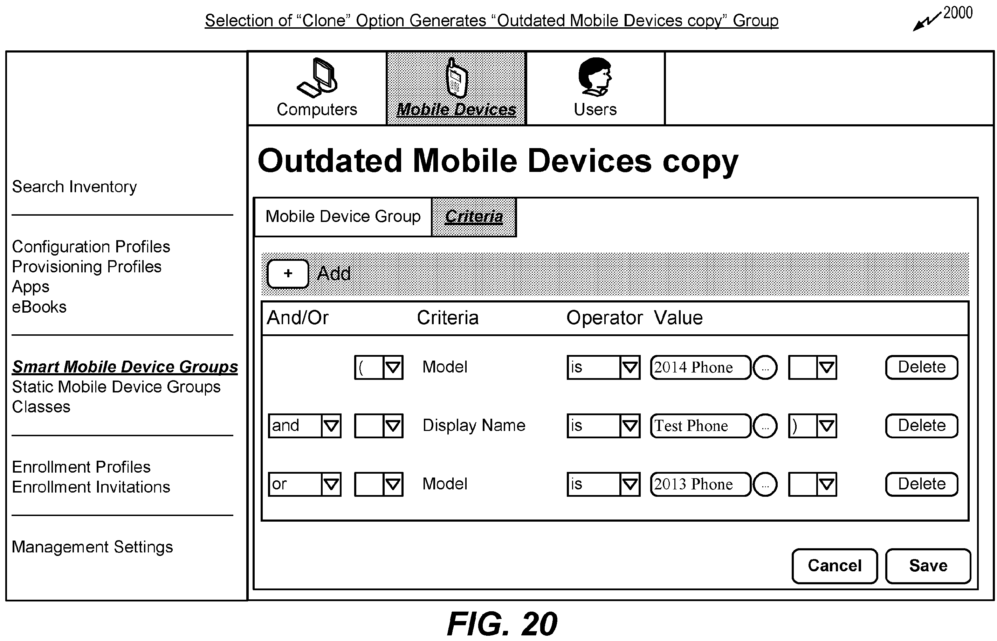

The GUI 1900 also includes a "Clone" button 1908 to create a copy of the group. For example, as shown in the GUI 2000 of FIG. 20, selection of the clone button 1908 may result in creation of an "Outdated Mobile Devices copy" group. It is noted that the grouping criteria of the "Outdated Mobile Devices copy" group is identical to the grouping criteria for the "Outdated Mobile Devices" group shown in FIG. 18. Cloning a group, such as for testing purposes, may be faster and more convenient than having to manually define a new group with identical grouping criteria as an existing group.

The GUI 1900 further includes a "Delete" button 1910 to delete the group and the associated grouping criteria and membership data. If a deleted group is used in a recursive group definition for another group, the other group may also be deleted. Alternatively, the user may be prompted regarding whether the other group should be deleted or whether the grouping criteria for the other group should be modified. The GUI 1900 includes an "Edit" button 1912 to edit the group (e.g., edit the name, e-mail notification status, and/or grouping criteria of the group).

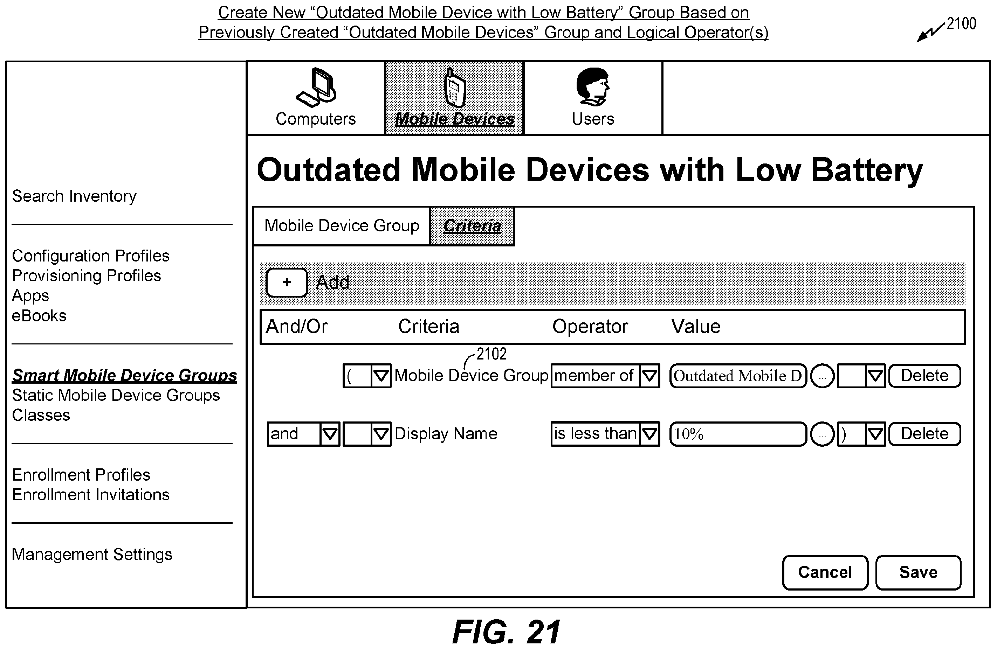

As described with reference to FIG. 13, the present disclosure enables users to recursively define dynamic groups based on membership in other dynamic groups. FIG. 21 illustrates a particular embodiment of a GUI used to define recursive grouping criteria and is generally designated 2100. In the example of FIG. 21, grouping criteria for an "Outdated Mobile Device with Low Battery" dynamic group is defined. A mobile device is a member of the dynamic group if the mobile device is a member of the "Outdated Mobile Devices" group described with reference to FIG. 18 and if the mobile device has a battery level of less than 10%. As shown at 2102, a "pseudo" inventory attribute called "Mobile Device Group" may be used to recursively define grouping criteria, where the value of the "Mobile Device Group" attribute is the name of another (e.g., previously defined) dynamic group. Corresponding "pseudo" inventory attributes for managed computers and managed users may be called "Computer Group" and "User Group," respectively.

FIG. 21 thus illustrates an example of defining grouping criteria of a first dynamic group (e.g., the "Outdated Mobile Device with Low Battery" group) based on grouping criteria of a second dynamic group (e.g., the "Outdated Mobile Devices" group) and at least one logical operator (e.g., an AND operator). When membership of the second dynamic group changes, a MDM server (e.g., the MDM server 1320 of FIG. 1) may automatically re-evaluate and update membership of the first dynamic group. The techniques of the present disclosure may thus enable definition of a dynamic group without re-entering grouping criteria from previously defined dynamic groups.

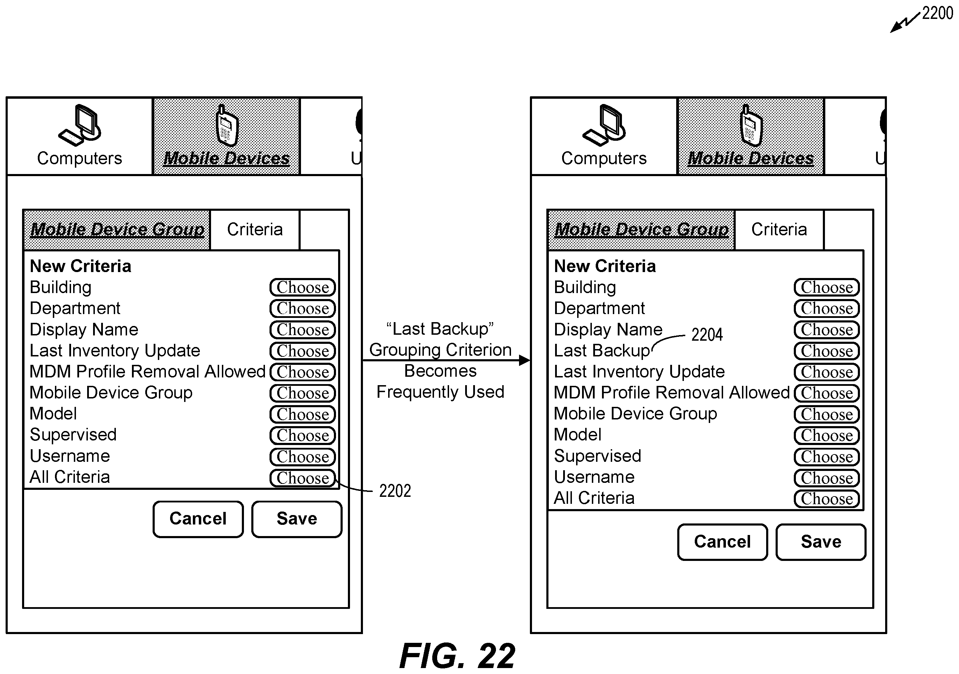

In a particular embodiment, a GUI generated in accordance with the described techniques may facilitate entry of grouping criteria by maintaining and displaying a list of frequently used grouping criteria (e.g., inventory data attributes). Referring to FIG. 22, a particular embodiment of maintaining such a "shortlist" is shown and generally designated 2200. When an inventory attribute is added to a grouping criteria (e.g., by selecting the button 1802 of FIG. 18), the shortlist of frequently used inventory attributes may be shown instead of a list of all available inventory attributes. In the example on the left of FIG. 22, the shortlist includes: building, department, display name, last inventory update, MDM profile removal allowed, mobile device group, model, supervised, and username. An "All Criteria" option may also be shown, at 2202. Selection of the "All Criteria" option 2202 may display a complete list of all of the available inventory attributes that can be used to define grouping criteria. The shortlist and the complete list may differ based on whether grouping criteria is being defined for managed mobile devices, managed computers, or managed users.

The shortlist of frequently used attributes may be updated as users define dynamic groups. For example, as shown at 2204, after "Last Backup" is selected one or more times during definition of grouping criteria, the "Last Backup" attribute may be added to the shortlist. In a particular embodiment, the shortlist may have a fixed size, and an overflow condition may occur when adding an attribute to the list. In response to the overflow condition, when the attribute is added to the fixed size shortlist another (e.g., least recently used) attribute may be removed from the shortlist.

The GUI(s) generated in accordance with the present disclosure may also be used to indicate an action to be performed with respect to members of a dynamic group. Examples of MDM actions may include, but are not limited to, installing an application at a managed device, adjusting a configuration setting at a managed device, providing content to a managed device, sending a message to a managed device, setting or clearing a passcode, editing one or more inventory data attributes, sending a communication/message (e.g., an e-mail or a short message service (SMS) message), deleting data, sending remote commands, etc. Referring to FIG. 23, a particular embodiment of a GUI that can be used to select an action to be performed with respect to members of a dynamic group is shown and generally designated 2300. In an illustrative embodiment, the GUI 2300 may be after selection of the view button 1906 of FIG. 19.

To illustrate, when the view button 1906 is selected, a GUI may be displayed that includes a list of managed entities (e.g., computers, mobile devices, and/or users) that are members of a particular dynamic group. The list of managed entities may be based on the group membership data 1328 of FIG. 1. In a particular embodiment, membership of the dynamic group may be re-evaluated (e.g., updated) when the user clicks the view button 1906 of FIG. 19.

A user may select an element (e.g., button) on the GUI including the list of managed entities to cause the GUI 2300 to be displayed. The GUI 2300 may include a list of "mass actions" that can be performed with respect to each device that is a member of the dynamic group. In the example of FIG. 23, the list of actions includes editing a building or department of one or more managed entities of the group, editing a site of one or more managed entities of the group, sending a notification to one or more managed entities that have a particular application, content, or feature (e.g., self service mobile in FIG. 23) installed/activated, deleting one or more managed entities (e.g., from the group, the inventor database altogether, etc.), and sending remote command(s) to one or more managed entities. In alternative embodiments, different "mass actions" may be available. When an action is selected, the action may automatically be performed with respect to each managed entity of the group, or the user may be provided an option to select particular managed entities within the group as targets of the action.

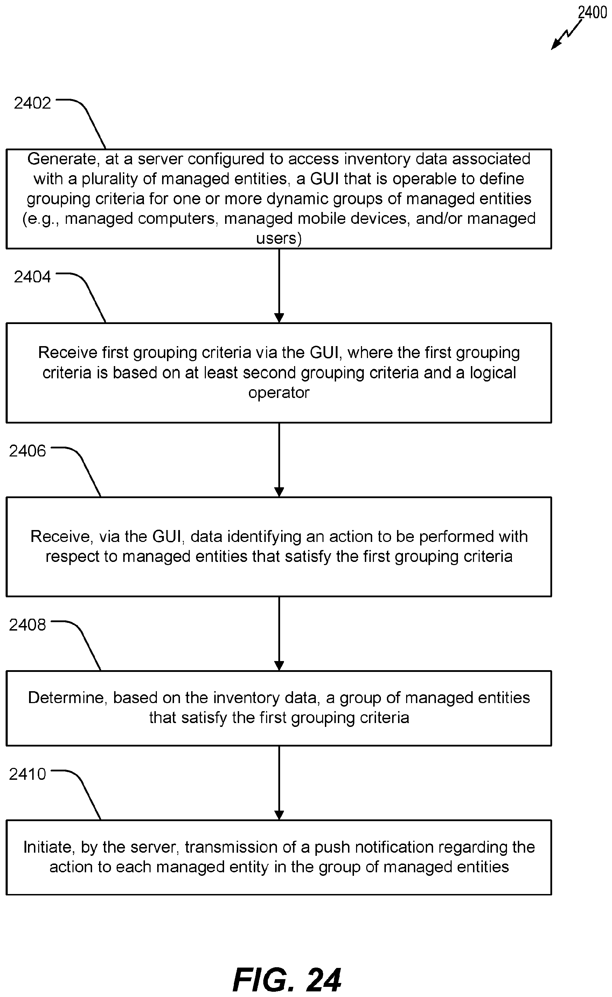

Referring to FIG. 24, a particular embodiment of operation at a MDM server is shown and generally designated 2400. In an illustrative embodiment, the method 2400 may be performed at the MDM server 1320 of FIG. 1.

The method 2400 may include generating, at a server configured to access inventory data associated with a plurality of managed entities, a GUI that is operable to define grouping criteria for one or more dynamic groups of managed entities (e.g., managed computers, managed mobile devices, and/or managed users), at 2402. For example, to generate a dynamic grouping GUI, such as one of the GUIs described with reference to FIGS. 16-23, a MDM server may access inventory and/or group membership data and include in the GUI one or more elements (e.g., links, buttons, etc.) that are based on the inventory and/or group membership data. The MDM server may also enable and/or disable certain GUI elements based on the inventory and/or group membership data. For example, if no managed computers are registered with the MDM server, GUI elements relating to managed computers may be disabled (e.g., "grayed out" and/or unselectable by a user).

The method 2400 may also include receiving first grouping criteria via the GUI, at 2404, where the first grouping criteria is based on at least second grouping criteria and a logical operator. For example, the MDM server 1320 may receive, via the GUI 2100 of FIG. 21, the grouping criteria for the "Outdated Mobile Device with Low Battery" dynamic group, which is based on the grouping criteria for the "Outdated Mobile Devices" dynamic group and an AND operator. In a particular embodiment, the first grouping criteria may be received based on user input. For example, a MDM server may receive data via a wired or wireless network from a computing device that displays the GUI and receives the user input. The data may include a value typed by a user in a text field, an indication of a button selected by a user, etc. The MDM server may extract such data from received packets/messages and determine the first grouping criteria based on the extracted data.

The method 2400 may further include receiving data via the GUI that identifies an action to be performed with respect to managed entities that satisfy the grouping criteria, at 2406, and determining, based on the inventory data, a group of managed entities that satisfy the first grouping criteria, at 2408. The managed entities may include managed mobile devices, managed computers, managed users, or any combination thereof. In a particular embodiment, the data identifying the action may be received based on user input. For example, a MDM server may receive data via a wired or wireless network from a computing device that displays the GUI and receives the user input, where the data identifies an action selected by a user (e.g. from the GUI 2300 of FIG. 23). The MDM server may extract such data from received packets/messages and determine the selected action based on the extracted data. The MDM server may determine the group of managed entities that satisfy the first grouping criteria by filtering an inventory database using the first grouping criteria as filter parameters. Alternatively, or in addition, a list of members may that satisfy the first grouping criteria may be available in the form of group membership data, where the group membership data is updated in response to receiving updates from individual managed entities.

For example, as illustrated in FIG. 23, the MDM server may receive a selection of the "Send Remote Commands" action of FIG. 23 that is to be performed with respect to mobile devices in the "Outdated Mobile Devices with Low Battery" group.

The method 2400 may include initiating by the server a transmission of a push notification regarding the action that is sent to each managed entity in the group of managed entities, at 2410. For example, to initiate the transmission of the push notification, the MDM server may generate a push notification request that includes a list of group members and/or data regarding the action to be performed, and may send the push notification request to a push notification service (e.g., via a wired or wireless network). When communication to and from the MDM server is encrypted, receiving and transmitting data may also include encryption and/or decryption operations. To illustrate, in FIG. 13, the grouping criteria evaluation module 1322 may identify members of the dynamic group and the MDM server 1320 may send the notification request 1324 to the push notification service 1330. In response to the notification request 1324, the push notification service 1330 may send push notifications (e.g., the push notifications 1331 and/or 1332) to members of the dynamic group (e.g., the managed computer 1340 and/or the managed mobile device 1350).

It should be noted that the order of steps or operations described with reference to FIGS. 13-24 is to be considered illustrative and not limiting. In alternate embodiments, the order of steps may be different. Further, one or more steps may be optional and/or replaced by other steps. For example, in particular embodiments the steps 2402 and 2404 may be optional (e.g., a dynamic group may previously have been defined and the method 2400 may begin at step 2406 when a user selects an action to be performed with respect to members of the dynamic group). In addition, one or more steps may be consolidated. In accordance with various embodiments of the present disclosure, one or more methods, functions, and modules described herein may be implemented by software programs executable by a computer system. Further, implementations of one or more embodiments in accordance with the present disclosure can include distributed processing, component/object distributed processing, and/or parallel processing.

Particular embodiments can be implemented using a computer system executing a set of instructions that cause the computer system to perform any one or more of the methods or computer-based functions disclosed herein. A computer system may include a laptop computer, a desktop computer, a server computer, a mobile phone, a tablet computer, a media player, one or more other computing devices, or any combination thereof. The computer system may be connected, e.g., using a network, to other computer systems or peripheral devices. For example, the computer system or components thereof can include or be included within any one or more of the MDM server 1320 of FIG. 13, a computing device or server corresponding to the push notification service 1330 of FIG. 13, the managed computer 1340 of FIG. 13, the managed mobile device 1350 of FIG. 13, the e-mail server 1370 of FIG. 13, an output device that displays a GUI generated by an MDM server, an input device that receives user input responsive to the GUI, and/or a computing device that includes the output device and the input device.

In a networked deployment, the computer system may operate in the capacity of a server or as a client user computer in a server-client user network environment. The term "system" can include any collection of systems or sub-systems that individually or jointly execute a set, or multiple sets, of instructions to perform one or more computer functions.

In a particular embodiment, the instructions can be embodied in a computer-readable or a processor-readable device. The terms "computer-readable device" and "processor-readable device" include a single storage device or multiple storage devices, such as a centralized or distributed memory, and/or associated caches and servers that store one or more sets of instructions. The terms "computer-readable device" and "processor-readable device" also include any device that is capable of storing a set of instructions for execution by a processor or that cause a computer system to perform any one or more of the methods or operations disclosed herein. For example, a computer-readable or processor-readable device or storage device may include random access memory (RAM), flash memory, read-only memory (ROM), programmable read-only memory (PROM), erasable programmable read-only memory (EPROM), electrically erasable programmable read-only memory (EEPROM), registers, a hard disk, a removable disk, a disc-based memory (e.g., compact disc read-only memory (CD-ROM)), a solid-state memory, or any other form of storage device. A computer-readable or processor-readable device is not a signal.

In a particular embodiment, a method includes generating, at a server configured to access inventory data associated with one or more managed devices, a GUI that is operable to define grouping criteria for one or more dynamic groups of managed devices. The method also includes receiving, at the server via the GUI, first grouping criteria and data identifying an action to be performed with respect to managed devices that satisfy the first grouping criteria. The first grouping criteria is based on at least second grouping criteria and a logical operator. The method further includes determining, at the server based on the inventory data, a group of managed devices that satisfy the first grouping criteria. The method includes initiating, by the server, transmission of a push notification regarding the action to each managed device in the group of managed devices.

In another particular embodiment, an apparatus includes a processor and a memory storing instructions that, when executed by the processor, cause the processor to perform operations including generating a GUI that is operable to define grouping criteria for one or more dynamic groups of managed devices. The operations also include receiving first grouping criteria via the GUI, where the first grouping criteria is based on at least second grouping criteria and a logical operator. The operations further include receiving, via the GUI, data identifying an action to be performed with respect to managed devices that satisfy the first grouping criteria. The operations further include determining, based on inventory data, a group of managed devices that satisfy the first grouping criteria, and initiating transmission of a push notification regarding the action to each managed device in the group of managed devices.

In another particular embodiment, a computer-readable storage device stores instructions that, when executed by a processor, cause the processor to perform operations including generating, at a server configured to access inventory data associated with one or more managed devices and one or more managed users, a GUI that is operable to define grouping criteria for one or more groups of managed devices, managed users, or both. The operations also include receiving, at the server, first grouping criteria via the GUI and receiving, at the server via the GUI, data identifying an action to be performed with respect to managed devices that satisfy the first grouping criteria. The first grouping criteria is based on at least second grouping criteria and a logical operator. The operations further include determining, at the server based on the inventory data, a group of managed devices, a group of managed users, or both that satisfy the first grouping criteria. The operations include initiating, by the server, transmission of a push notification regarding the action to each managed device in the group of managed devices, to at least one device associated with each user in the group of managed users, or both.

Mobile devices are becoming increasingly prevalent in everyday use, including in home, office, and educational environments. For example, school districts around the world are starting to implement one-to-one technology programs that provide each student access to a mobile device, such as a tablet computer. As another example, many corporations provide employees with mobile devices to perform j ob-related functions on-the-go. To maintain control of the devices a school or corporation may rely on information technology (IT) administrators that maintain a roster of devices and statuses of each device. As an illustrative, non-limiting example, maintaining control of devices in the classroom may include preventing students from accessing unauthorized materials. However, relying on IT administrators for all mobile device management (MDM) may be inefficient and expensive. In some examples, based on a global positioning system (GPS) receiver of the device, an IT administrator may enforce device policies when the device is at school or at work but not when the device is away from school or work. However, using GPS may place considerable drain on a power source of the device. Further, using GPS may compromise privacy of a user of the device by providing the IT administrator an accurate location of the device (and thus the student or employee) at all times.

In particular aspects, the present disclosure provides systems and methods that enable a "manager" or "primary" mobile device to perform selected MDM functions with respect to one or more "managed" or "secondary" mobile devices. For example, in an educational context, the manager mobile device may be a tablet computer operated by a teacher and the managed mobile devices may be tablet computers operated by students. By empowering a teacher to perform certain MDM functions, an overall mobile device experience in the classroom may be improved. For example, teachers may no longer have to communicate with IT administrators for relatively minor issues. For example, a teacher may use his or her mobile device to restrict "focus" at student mobile device(s). To illustrate, the teacher may instruct particular student devices to remain within a particular application or at a particular website. As another example, the teacher may clear a passcode from a student mobile device, so that the student can use the mobile device and participate in the class instead of becoming a distraction to other students. As yet another example, the teacher may initiate a screen mirroring session between a student device and an external display device. The described techniques may also notify the teacher of the battery status of the student devices, so that the teacher can charge student devices as needed. At the end of class, the teacher may clear student device restrictions. As another option, student device restrictions may be automatically cleared at the end of class in case the teacher forgets to clear the student device restrictions.

In particular aspects, the present disclosure provides systems and methods that enable a device management server to maintain and enforce policies based on a detected location of a managed device. Advantageously, the present disclosure may provide device management capability with reduced power drain and increased privacy as compared to using GPS-based systems and methods. For example, the device management server may determine a location of a particular managed device based on a message received from the particular managed device indicating which wireless beacon (or multiple wireless beacons) is detected by the particular managed device. To illustrate, when a student is in a classroom, the student's device (e.g., a phone or a tablet computer) may detect a wireless beacon associated with the classroom (e.g., "science class wireless beacon #1") via a first wireless connection. As used herein, a "wireless connection" may correspond to one-way or two-way communication via a wireless medium using a particular wireless technology. The wireless beacon may be inside of or relatively close to the classroom. For example, the wireless beacon may broadcast via a personal area network connection or other short range connection, such as Bluetooth^{®} low energy (BLE) (Bluetooth is a registered trademark of Bluetooth SIG, Inc. of Kirkland, Washington). In response to detecting the wireless beacon, the student's device may transmit, via a second wireless connection, a message to the device management server indicating that the student's device has detected the wireless beacon. For example, the first message may be transmitted by the device via an Institute of Electrical and Electronics Engineers (IEEE) 802.11 connection, a third generation (3G) connection, a fourth generation (4G) connection, etc. In response, the device management server may transmit a message to the device to enforce a policy associated with the classroom. The policy may grant the device access to functionality that was inaccessible to the device before when the wireless beacon was detected. As an illustrative non-limiting example, the device may be granted access to a printer located in the classroom.

The functionality (e.g., the ability to communicate with the printer) may remain accessible to the device while the device is in range of the wireless beacon. For example, when the device no longer detects (e.g., the device can no longer interpret an identifier carried by the signal) the wireless beacon, the device may transmit a message to the device management server indicating that the device no longer detects the wireless beacon. Alternatively, such a message may be transmitted in response to receiving a new beacon signal that is stronger than a signal of the wireless beacon or in response to detecting that a signal strength of the signal received from the wireless beacon is below a threshold. In response to the device indicating that the wireless beacon is no longer detected, the device management server may transmit message to the device instructing the device to no longer enforce the policy (e.g., revoking access to the printer).

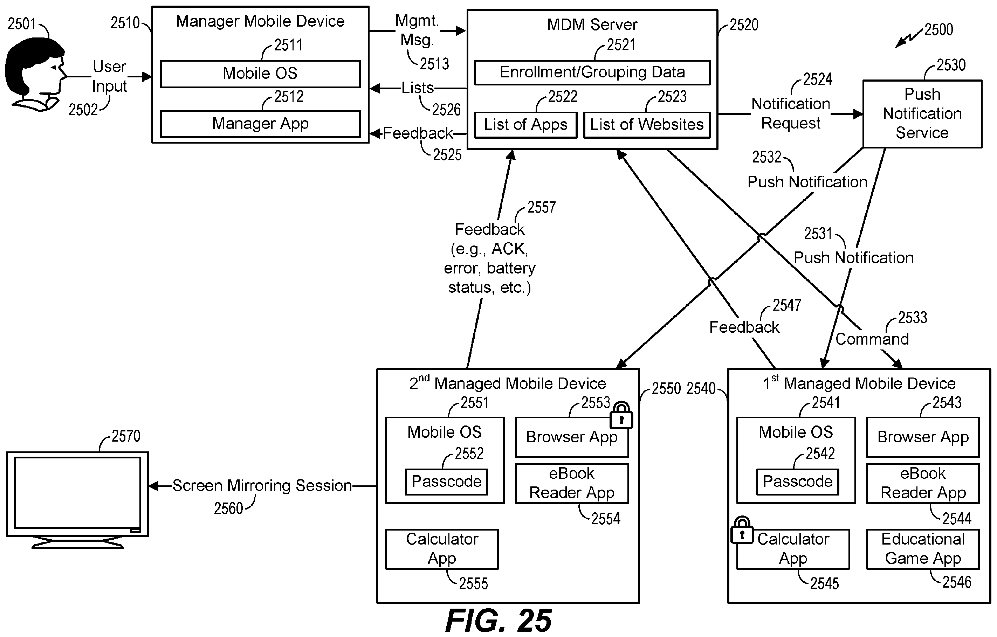

Referring to FIG. 25, a particular embodiment of a system that is operable to enable a manager mobile device 2510 to control operation of managed mobile devices 2540, 2550 is shown and generally designated 2500. It should be noted that although one manager mobile device 2510 and two managed mobile devices 2540, 2550 are shown in FIG. 25, the present disclosure is not limited to any particular configuration or number of devices. In alternate embodiments, a different number of manager mobile devices and/or managed mobile devices may be present.

Each of the mobile devices 2510, 2540, 2550 may be a portable computing device with wireless networking capability. In an illustrative embodiment, the mobile devices 2510, 2540, 2550 are tablet computers, mobile phones, laptop computers, portable media players, electronic book (eBook) readers, or any combination thereof.

The manager mobile device 2510 may include a mobile operating system (OS) 2511. The mobile OS 2511 may control functions of the manager mobile device 2510, such as input/output (e.g., a touchscreen display, speaker, microphone, camera, etc.) and networking (e.g., cellular, Bluetooth, Wi-Fi, global positioning system (GPS), etc.). The mobile OS 2511 may also provide mobile applications (apps) access to mobile device resources. Examples of mobile device apps include, but are not limited to, web browser, e-mail, calendar, social networking, document/eBook reader, media player, etc. Mobile apps may correspond to software instructions that are stored in a memory of the mobile device 2510 and executed by a processor of the mobile device 2510, hardware circuits that implement app functionality, or both. In the example of FIG. 25, the manager mobile device 2510 includes a manager app 2512. As further described herein, the manager app 2512 may enable a user 2501 of the manager mobile device 2510 to control, via user input 2502, selected functions of the managed mobile device 2540, 2550.

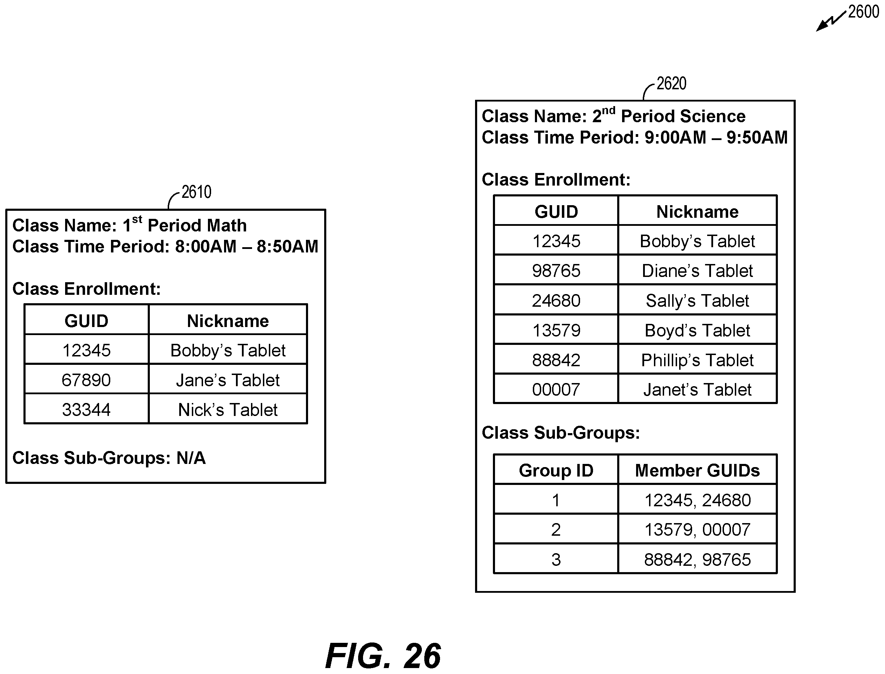

The system 2500 also includes a mobile device management (MDM) server 2520. The MDM server 2520 may correspond to hardware and/or software that implement MDM functions. For example, in an educational context, the MDM server 2520 may manage teacher and student mobile devices. In a particular embodiment, the MDM server 2520 stores (or has access to) enrollment and grouping data 2521. The data 2521 may include enrollee data identifying all mobile devices that are managed by the MDM server 2520, such as data regarding the manager mobile device 2510, the first managed mobile device 2540, and the second managed mobile device 2550. The data 2521 may also include data that classifies managed mobile devices into groups or subgroups, so that the managed mobile devices can be managed individually or as part of a larger group or subgroup. In an educational context, the data 2521 may include a list of all student devices, lists of student devices corresponding to a particular class (e.g., all student devices of a particular school or school district), lists of student devices in subgroups (e.g., lab partner groups or homework/project groups) within a particular class, etc. An illustrative embodiment of enrollment and grouping data is further described with reference to FIG. 26.

It should be noted that although various embodiments may be described herein with reference to educational settings, this is for example only and not to be considered limiting. The teachings of the present disclosure may be applied in other mobile device environments, including but not limited to home environments, corporate environments, retail environments, etc. For example, a parent may use their mobile device to perform MDM functions on mobile devices operated by children. As another example, a person making a presentation in a corporate environment may use their mobile device to direct mobile devices operated by presentation attendees to perform certain functions. As yet another example, a retail store owner or manager may restrict focus of demonstration devices/kiosks within the retail store to a particular demonstration application or website.

The MDM server 2520 may store or have access to a list of applications 2522 and a list of websites 2523, which may be used by the manager mobile device 2510 to restrict focus at the managed mobile devices 2540, 2550. Restricting focus to an application may include activating the application, ignoring or disabling user input (e.g., touchscreen or button input) that deactivates the application, and ignoring or disabling user input that activates another application. Restricting focus to a website may include navigating to the website (e.g., via a browser application) and ignoring or disabling user input that deactivates the browser application or navigates away from the website. In an illustrative embodiment, restricting focus to an application or a website may also disable certain user interface (UI) elements at a managed mobile device, such as e-mail or instant message notifications. Restricting focus may also include automatically terminating execution of one or more other applications or processes (e.g., background processes) at a managed mobile device.

The first managed mobile device 2540 may include a mobile OS 2541, which may be an instance of the same mobile OS as the mobile OS 2511 or an instance of a different mobile OS. In a particular embodiment, the mobile OS 2541 stores a passcode 2542. For example, the passcode 2542 may be used to secure access to the first managed mobile device 2540. When a user (e.g., student) attempts to operate the first managed mobile device 2540, the user may be prompted to input a passcode, and access to the first managed mobile device 2540 may not be enabled unless the input passcode matches the stored passcode 2542. The first managed mobile device 2540 may also include one or more apps. The apps may be pre-installed (e.g., as part of or along with the mobile OS 2541) or may be installed after being downloaded (e.g., via an app storefront). In the example of FIG. 25, which corresponds to an educational setting, the apps include a browser app 2543, an eBook reader app 2544, a calculator app 2545, and an educational game app 2546.

The second managed mobile device 2550 may also include a mobile OS 2551 with a passcode 2552, a browser app 2553, an eBook reader app 2554, and a calculator app 2555. However, as shown in FIG. 25, the second managed mobile device 2550 does not have the educational game app 2546 installed.

During operation, the user 2501 (e.g., a teacher) may provide the user input 2502 to the manager app 2512 to perform certain MDM functions with respect to the managed mobile devices 2540, 2550. In an illustrative embodiment, the user 2501 may be prompted for authentication credentials (e.g., a username, a password, a uniform resource locator (URL) of the MDM server 2520, etc.) prior to being granted access to the manager app 2512. The authentication credentials may be verified by the manager mobile device 2510, the MDM server 2520, or both. In a particular embodiment, communication between the various components of the system 2500 occurs via secure (e.g., encrypted) channels. For example, communication in the system 2500 may occur via encrypted internet protocol (IP) connections.

As a first example of operation, the manager app 2512 may execute a "focus lock" workflow that enables the user 2501 to restrict focus at the managed devices 2540, 2550. To illustrate, the manager app 2512 may display a list of managed mobile devices, including the managed mobile devices 2540, 2550, that are accessible to the user 2501. Different mobile devices may be accessible to the user 2501 at different times. For example, different student devices may be accessible to different teachers at a school depending on which classes students are enrolled in.

The user 2501 may select one or more managed mobile devices from the list of accessible managed mobile devices. For example, the user 2501 may select the first managed mobile device 2540. In response, the manager app 2512 may display the list of apps 2522 and the list of websites 2523. The list of managed mobile devices, the list of apps 2522, and the list of websites 2523 are collectively illustrated as being provided to the manager mobile device 2510 as lists 2526. The user 2501 may select a particular app or website, indicating that focus at the first managed mobile device 2540 is to be restricted to the particular app or website. For example, the user 2501 may select a calculator app. In response, the manager mobile device 2510 may send a management message 2513 to the MDM server 2520. The management message 2513 may include data identifying the first managed mobile device 2540, the selected app or website, and a "restrict focus" command.

In response to receiving the management message 2513, the MDM server 2520 may send a notification request 2524 to a push notification service 2530. The push notification service 2530 may correspond to one or more network accessible servers that are configured to send push notifications 2531, 2532 to the managed mobile devices 2540, 2550. In a particular embodiment, the push notifications 2531, 2532 may cause the managed mobile devices 2540, 2550 to check with the MDM server 2520 to see if there are any commands to be performed by the managed mobile devices 2540, 2550. For example, commands selected by the user 2501 via the manager mobile device 2510 may be queued by the MDM server 2520 and may be retrieved by the managed mobile devices 2540, 2550 in response to the push notifications 2531, 2532. In FIG. 25, the first managed mobile device 2540 retrieves a command 2533 (e.g., the command to restrict focus to the calculator app 2545) in response to the push notification 2531. In an alternate embodiment, the push notifications 2531, 2532 may include or identify the command to be performed by the managed mobile devices 2540, 2550. For example, the push notifications 2531 may utilize an application programming interface (API) of the mobile OS 2541 to instruct the first managed mobile device 2540 to restrict focus to the calculator app 2545 (e.g., while a student that is using the first managed mobile device 2540 takes a math test). In yet another alternate embodiment, a notification or a command may be pushed by the MDM server 2520 or may be communicated directly from a manager mobile device to a managed mobile device (e.g., via a device-to-device (D2D) connection). In an illustrative embodiment, the command is recognized and executed by a managed mobile device. For example, when the managed mobile device is an iOS^{®} device, the command may be compatible with an iOS^{®} MDM API/protocol, such as a device lock command, a clear passcode command, etc. (iOS is a registered trademark of Cisco Systems, Inc. of San Jose, CA and is used by Apple Inc. of Cupertino, CA under license).

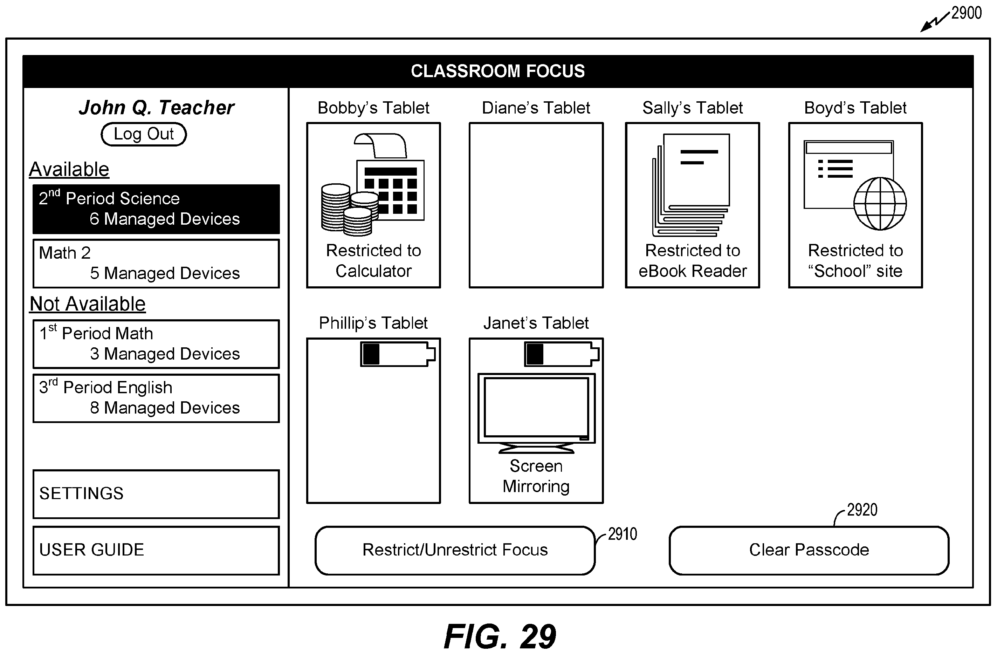

After the first managed mobile device 2540 has restricted focus to the calculator app 2545 (illustrated in FIG. 25 by a lock designator), the first managed mobile device 2540 may send feedback 2547 to the MDM server 2520 including an acknowledgement (ACK). Different managed mobile devices may be locked to different applications or websites. In the example of FIG. 25, the second managed mobile device 2550 is locked to the browser app 2553. If a managed mobile device is unable to restrict focus to a selected app, feedback from the managed mobile device may include an error message or code. For example, feedback 2557 from the second managed mobile device 2550 may include an error if the user 2501 attempts to restrict focus to an uninstalled app (e.g., an educational game app). The MDM server 2520 may forward selected feedback from managed mobile devices to the manager mobile device 2510, illustrated in FIG. 25 as feedback 2525. Based on the feedback 2525, the manager app 2512 may update an interface to indicate statuses of different managed mobile devices, as further described with reference to FIGS. 29-33. In a particular embodiment, the user 2501 may provide input to the manager app 2512 that causes a managed mobile device to automatically obtain (e.g., download and install) and restrict focus to an app. For example, if the feedback 2525 indicates that a managed mobile device does not have a particular app installed, the user 2501 may select an "obtain app" option in the manager app 2512 to cause the managed mobile device to download the app.

Although certain embodiments and workflows are described herein with reference to performing MDM for a single managed device, it should be understood that MDM may also be performed for multiple devices. For example, the user 2501 may select multiple managed devices or a group of managed devices via the manager app 2512. The management message 2513 may identify multiple managed devices or a group of managed devices, and the push notification service 2530 may send push notifications to each managed device.

In another example of operation, the manager app 2512 may execute a "focus unlock" workflow that enables the user 2501 to stop restricting focus at a managed device. After selecting one, multiple, or a group of managed devices, the user 2501 may select an option in the manager app 2512 corresponding to a "focus unlock" command. In this example, the management message 2513 identifies the selected managed device(s) and the "focus unlock" command. The push notification service 2530 sends push notification(s) to the selected managed device(s) to cause the managed device(s) to clear previously implemented focus restrictions. For example, the push notification(s) may use an API at the managed mobile device(s) to unrestrict focus at the managed mobile device(s). To illustrate, at the end of class, a teacher may clear focus restrictions at all student devices, so that the student devices are not restricted at the start of the next class. In a particular embodiment, focus restrictions may be automatically cleared in case the teacher forgets to clear focus restrictions. For example, the MDM server 2520 may store data identifying a start time and an end time of a class period, and may automatically initiate the clearing of focus restrictions at the end of the class period. A focus restriction at a managed mobile device may also be cleared if feedback from the managed mobile device indicates that the managed mobile device has moved to a different location, such as a location outside the school or outside a particular classroom.

In a particular embodiment, a teacher may trigger the "focus unlock" workflow by indicating that a particular student is absent from class, so that if a student is sick at home, focus at the student's mobile device is not restricted to any particular app or website. Alternatively, or in addition, a student device may be automatically removed based on location data (e.g., GPS data, cellular triangulation, proximity to a particular location or device, etc.) indicating that the student is absent from the class.

In another example of operation, the manager app 2512 may execute a clear passcode workflow. Occasionally, a student may forget the passcode for his or her mobile device. Alternatively, a classmate may also set or reset the passcode of the student's mobile device. In such situations, if the passcode is not reset, the student may become a distraction to the rest of the class because the student is unable to use the mobile device. Instead of a teacher contacting IT support, the system 2500 advantageously enables the teacher to clear the passcode on the student's device. For example, the teacher (e.g., the user 2501) may select the student's device and select a "clear passcode" command. The management message 2513 may identify the selected student device and the "clear passcode" command, and the push notification service 2530 may send a push notification to the student device to cause (e.g., via an API) the student device to clear any previously set passcode.

As another example of operation, the manager app 2512 may execute a screen mirroring workflow. The user 2501 may provide user input 2502 that causes a particular managed mobile device to initiate a screen mirroring session with an external display device. For example, a teacher may have the screen of a student's device mirrored to an external display screen, so that classmates can see the student's interactions with an app (e.g., other students can follow along as the student solves a math problem). In the embodiment of FIG. 25, the second managed mobile device 2550 is in a screen mirroring session 2560 with an external display device 2570, such as a projector, a television, a digital media player, etc. A teacher may also initiate a screen mirroring session between his or her own mobile device (e.g., the manager mobile device 2510) and an external display. For example, a teacher may initiate a screen mirroring session to show students how to use certain apps or to display a document to all students in a class.

As another example of operation, the manager app 2512 may execute an "obtain file" workflow. To illustrate, a teacher may distribute a file, such as a homework assignment or reading material, to one or more student mobile devices during class. The file may include at least a portion of an image, a document, audio content, video content, an eBook, an electronic learning (e-learning) lesson, etc. Providing the file to a managed device may include sending the file to the managed device or instructing the managed device to download the file from an external server or online content repository. For example, a push notification, a command, or other message to a managed mobile device may include a file or a download URL for the file.

In a particular embodiment, the managed mobile devices 2540, 2550 are configured to provide status updates to the MDM server 2520 via the feedback 2547, 2557. For example, the status updates may include battery life status information. When the battery life of a particular managed mobile device is less than a threshold, the manager app 2512 may present an alert to the user 2501 (e.g., to cause the user to charge the particular managed mobile device).

The system 2500 of FIG. 1 may thus support various workflows that enable the user 2501 of the manager mobile device 2510 to restrict focus and cause other operations to be performed at the managed mobile devices 2540, 2550. Being able to use the manager mobile device 2510 to perform such MDM operations saves time and effort as compared to having to contact IT personnel. For example, in an educational setting, a teacher may be empowered to quickly control student mobile devices without leaving the classroom or interrupting class time to obtain IT support.

Referring to FIG. 26, a particular embodiment of the enrollment and grouping data 2521 of FIG. 25 is shown and generally designated 2600. In the illustrated example, first data 2610 is associated with a first class and second data 2620 is associated with a second class.

The first data 2610 corresponds to a class named "1^{st} Period Math" that has a class time period of 8:00 AM to 8:50 AM. Class enrollment for the class includes three students: Bobby, Jane, and Nick. Each of the students has a tablet device. For example, Bobby has a tablet nicknamed "Bobby's Tablet" that has a globally unique identifier (GUID) 12345. Similarly, "Jane's Tablet" has a GUID 67890 and "Nick's Tablet" has a GUID 33344. The manager app 2512 of FIG. 25 may display device nicknames, device GUIDs, or both. Similarly, the management message 2513 and the notification request 2524 of FIG. 25 may identify managed devices by device nickname, device GUID, or both. The students in the class are not divided into any subgroups.

The first data 2620 corresponds to a class named "2^{nd} Period Science" that has a class time period of 9:00 AM to 9:50 AM. Class enrollment for the class includes six students: Bobby, Diane, Sally, Boyd, Phillip, and Janet. Each of the students has a tablet device. The students in the class are divided into three subgroups (e.g., subsets) having group identifiers (IDs) 1, 2, and 3, respectively. In a particular embodiment, when a MDM operation is performed for each device of a group, the management message 2513 includes the group ID of the group.

It should be noted that the data 2610, 2620 shown in FIG. 26 is not to be considered limiting. In alternate embodiments, enrollment and grouping data may include data for more or fewer students, more or fewer classes, more or fewer groups, etc. All or a portion of the data shown in FIG. 26 may be sent by the MDM server 2520 to the managed mobile device 2540 during operation of the manager app 2512.

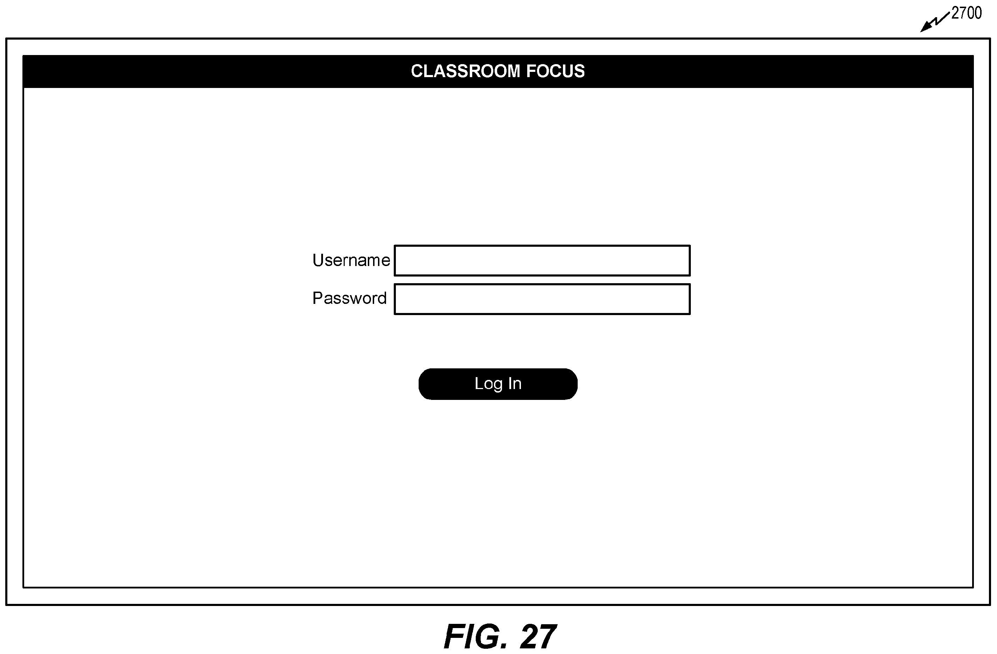

FIGS. 27-33 illustrate particular embodiments of interfaces that may be displayed by the manager mobile device 2510 and/or the managed mobile devices 2540, 2550 of FIG. 25 during operation in an educational setting. In alternate embodiments, different interfaces may be displayed.

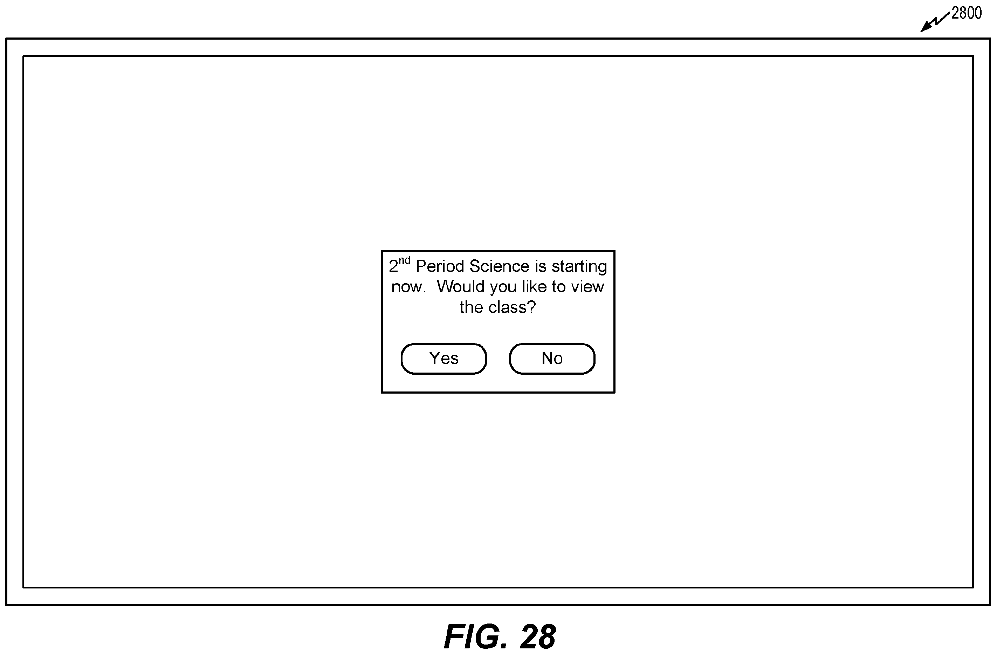

In particular, FIG. 27 illustrates a login interface 2700 that may be displayed when the user 2501 starts the manager app 2512 (entitled "CLASSROOM FOCUS"). In a particular embodiment, the manager app 2512 may be started in response to the user 2501 pressing a "Yes" button on a reminder indicating that a class is about to begin, as shown in a reminder interface 2800 of FIG. 28.

Referring to FIG. 29, a particular embodiment of a manager interface 2900 is shown. The manager interface 2900 may display "Available" and "Not available" classes. For a particular teacher, available classes may correspond to classes that the teacher has taught in the past or is enrolled (e.g., at the MDM server 2520 of FIG. 25) to teach. A class may only be available during the time period of the class (e.g., the "2^{nd} Period Science" class of FIG. 26 may only be available between 9 AM and 9:50 AM on weekdays). Classes that are not available may be listed under the "Not Available" heading, as shown. In the example of FIG. 29, the entry for each class indicates a number of managed devices. The manager interface 2900 also includes selectable options for app settings and a user guide, as shown.

In FIG. 29, the entry for "2^{nd} Period Science" is selected. In response, the manager app 2512 shows icons corresponding to the six managed devices enrolled in the "2^{nd} Period Science" class. Each icon may indicate an MDM status of the corresponding student device. For example, Bobby's Tablet is restricted to the calculator app and Sally's Tablet is restricted to the eBook Reader app. Boyd's tablet is restricted to a "school" website and Janet's tablet is in a screen mirroring session. Device icons may also indicate whether a device has low battery life (e.g., less than a threshold). In the illustrated example, Phillip's Tablet and Janet's Tablet are indicated as having low battery life.

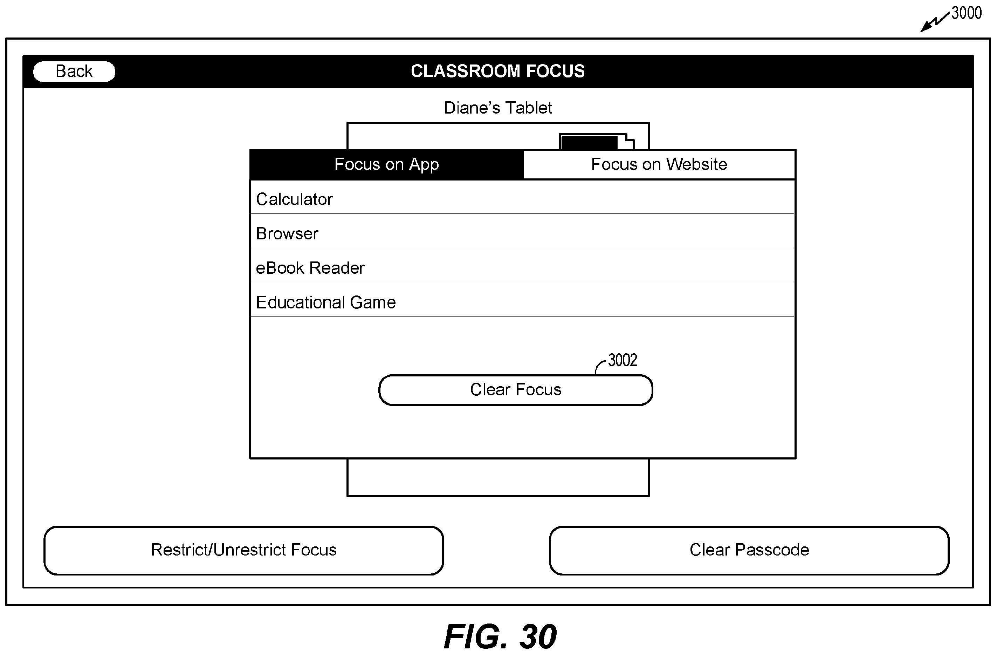

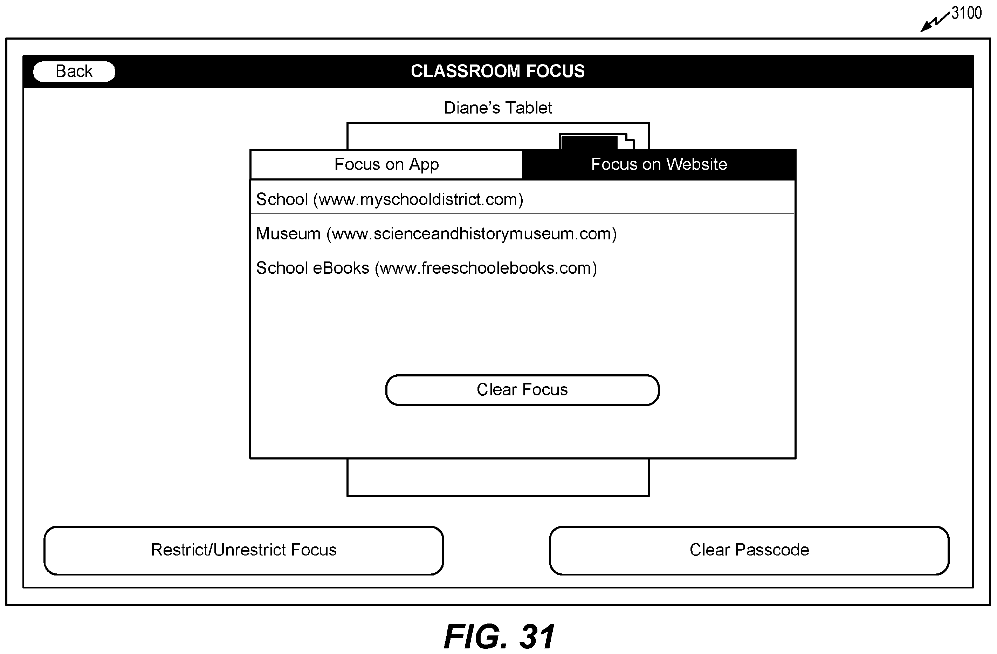

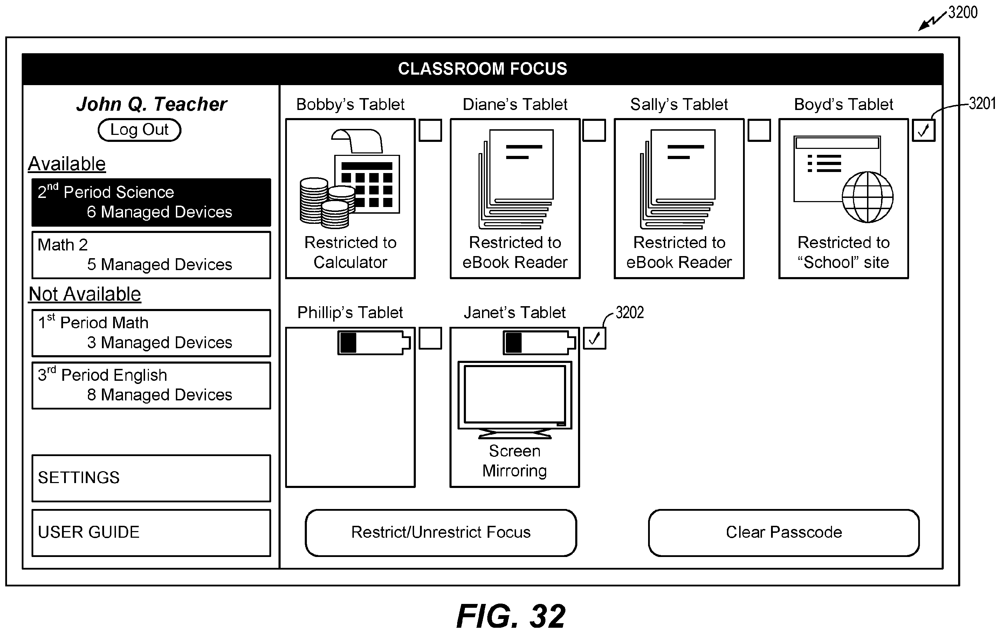

The manager interface 2900 also includes a restrict/unrestrict focus button 2910 and a clear passcode button 2920. To restrict or unrestrict focus at a particular student device, a teacher may select the student device and tap the button 2910. For example, selecting the Diane's Tablet icon followed by the button 2910 may display the interface 3000 of FIG. 30. Using the interface 3000, the teacher may restrict focus on Diane's Tablet to a particular app. The list of available apps may correspond to the list of apps 2522 of FIG. 25. Selection of a clear focus button 3002 may clear focus restrictions at Diane's Tablet. Alternately, the teacher may select a "Focus on Website" tab to show the interface 3100 of FIG. 31 and the teacher may then select a particular website from a list of websites corresponding to the list of websites 2523 of FIG. 25. In a particular embodiment, a list of applications (e.g., the list of FIG. 30), a list of websites (e.g., the list of FIG. 31), a list of eBooks, etc. displayed by a teacher's mobile device is sorted based on frequency of use. When focus at Diane's Tablet is successfully restricted to a selected app or website, the teacher's mobile device may receive an acknowledgement. For example, as shown by interface 3200 of FIG. 32, the icon for Diane's Tablet may be transformed to indicate that Diane's Tablet is locked to the eBook Reader app.

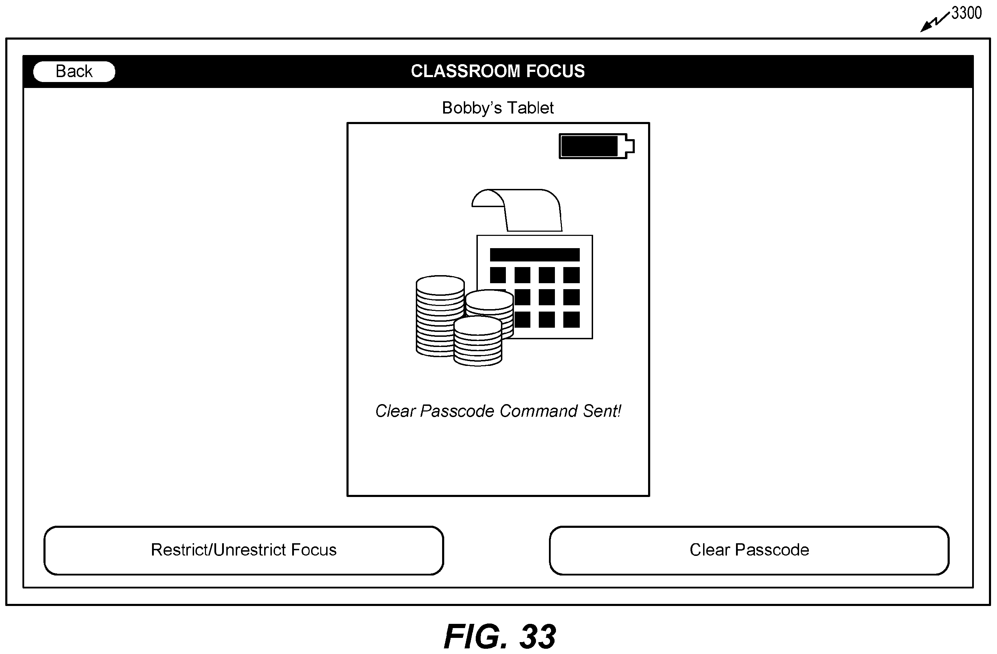

The clear passcode button 2920 of FIG. 29 may be selected to clear the passcode of one or more student devices. For example, to clear the passcode on Bobby's Tablet, the teacher may select the icon for Bobby's Tablet and the clear passcode button 2920. In response, the interface 3300 of FIG. 33 may be displayed, including confirmation that a clear passcode command was sent to Bobby's Tablet. To select multiple managed devices, a teacher may select an icon for one of the managed devices for a time period that exceeds a "long-tap" threshold, which causes checkboxes to be displayed for each icon. The teacher may select checkboxes corresponding to multiple managed devices. For example, in the embodiment shown in FIG. 32, the teacher has selected Boyd's Tablet and Janet's Tablet via checkboxes 3201 and 3202, respectively. In a particular embodiment, a "Select All" button may also be displayed by a manager app (e.g., the manager app 2512 of FIG. 25) to select all accessible managed mobile devices (e.g., all student devices in a class).

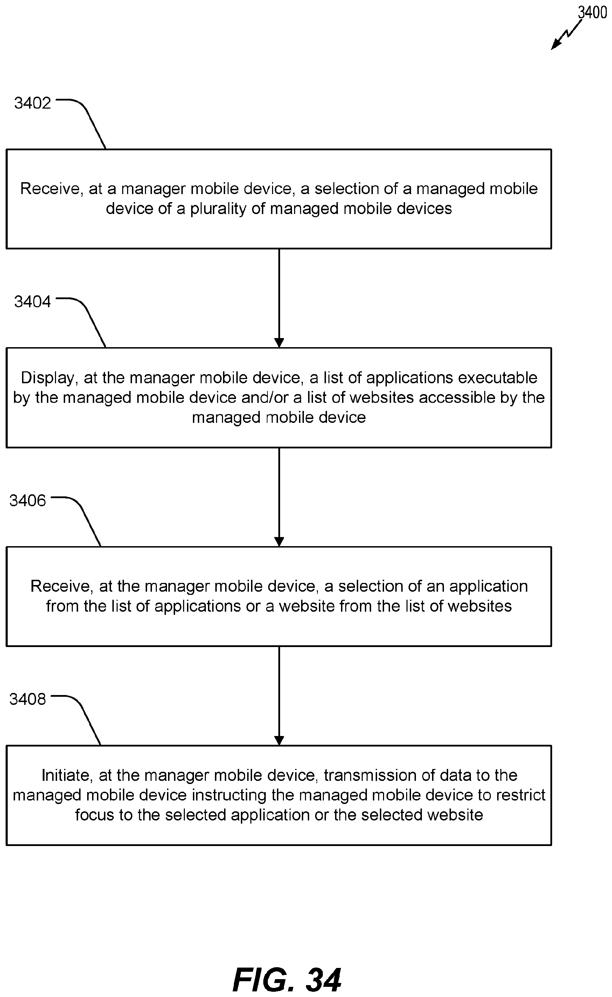

Referring to FIG. 34, a particular embodiment of a method of operation at a manager mobile device is shown and generally designated 3400. In an illustrative embodiment, the method 3400 may be performed by the manager mobile device 2510 of FIG. 25.

The method 3400 includes receiving, at a manager mobile device, a selection of a managed mobile device of a plurality of managed mobile devices, at 3402. For example, in FIG. 25, the manager mobile device 2510 may receive user input 2502 selecting the first managed mobile device 2540. In an illustrative embodiment, an icon corresponding to the first managed mobile device 2540 may be selected, as described with reference to the student tablet icons in FIGS. 29-33.

The method 3400 also includes displaying, at the manager mobile device, a list of applications executable by the managed mobile device and/or a list of websites accessible by the managed mobile device, at 3404. For example, in FIG. 25, the manager app 2512 may display the list of apps 2522 and/or the list of websites 2523. In an illustrative embodiment, the displayed list of apps and list of websites may correspond to the lists displayed in FIGS. 30-31.

The method 3400 further includes receiving, at the manager mobile device, a selection of an application from the list of applications or a website from the list of websites, at 3406. For example, in FIG. 25, the calculator app 2545 at the first managed mobile device 2540 may be selected via the user input 2502. In an illustrative embodiment, the calculator app may be selected from a list of apps as shown in FIG. 30.

The method 3400 includes initiating, at the manager mobile device, transmission of data to the managed mobile device instructing the managed mobile device to restrict focus to the selected application or the selected website, at 3408. For example, the manager app 2512 may send the management message 2513 to the MDM server 2520, where the management message 2513 identifies the first managed mobile device 2540, the calculator app 2545, and a "focus lock" command. In response to the management message 2513, the MDM server 2520 may send the notification request 2524 to the push notification service 2530 to cause transmission of the push notification 2531 to the first managed mobile device 2540. In response to the push notification 2531, the first managed mobile device 2540 may retrieve the command 2533. Thus, in response to the user input 2502 from the user 2501, the manager mobile device 2510 may initiate a sequence of messages between the manager mobile device 2510, the MDM server 2520, the push notification service 2530, and/or the first managed mobile device 2540. After focus at the first managed mobile device 2540 is restricted to the calculator app 2545 (as shown in FIG. 25 by a lock icon), the first managed mobile device 2540 may provide the feedback 2547 to the MDM server 2520, which may provide the feedback 2525 to the manager app 2512. In response to the feedback 2525, the manager app 2512 may display an icon corresponding to the first managed mobile device 2540 to indicate that the first managed mobile device 2540 is locked to the calculator app 2545. For example, a calculator app icon may be displayed, as illustrated for Bobby's Tablet in FIGS. 29 and 32.

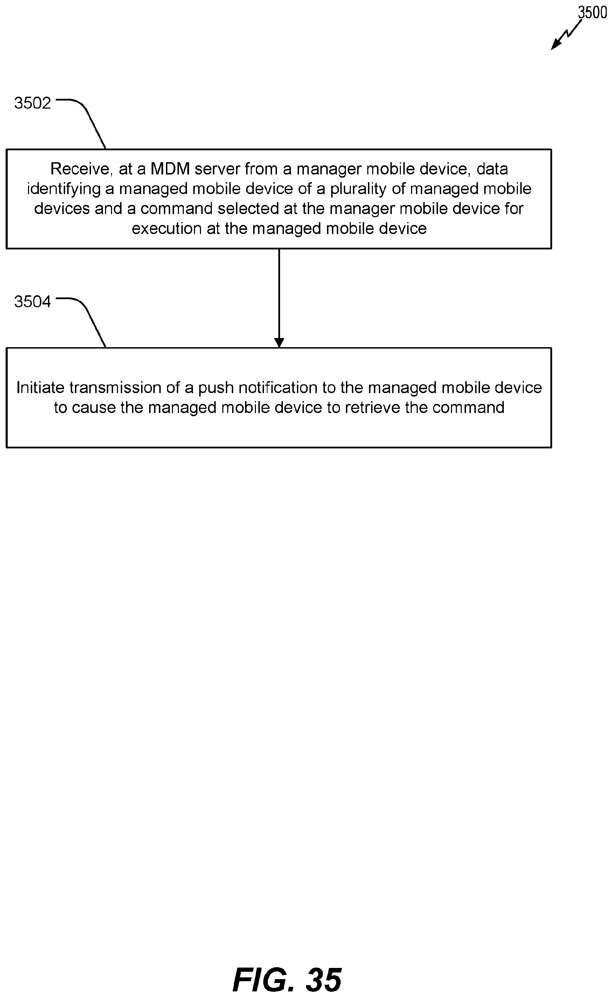

Referring to FIG. 35, a particular embodiment of a method of operation at a MDM server is shown and generally designated 3500. In an illustrative embodiment, the method 3500 may be performed by the MDM server 2520 of FIG. 25.

The method 3500 includes receiving, at a MDM server from a manager mobile device, data identifying a managed mobile device of a plurality of managed mobile devices and a command selected at the manager mobile device for execution at the managed mobile device, at 3502. For example, referring to FIG. 25, the MDM server 2520 may receive the management message 2513, where the management message 2513 identifies one of the managed mobile devices 2540 or 2550 and a selected command (e.g., focus restrict/lock, focus unrestrict/unlock, clear passcode, start screen mirroring, stop screen mirroring, obtain a document, etc.). In an alternate embodiment, multiple managed mobile devices may be selected, such as via checkboxes as shown in FIG. 32.

The method 3500 also includes initiating transmission of a push notification to the managed mobile device to cause the managed mobile device to retrieve the command, at 3504. For example, referring to FIG. 25, the MDM server 2520 may send the notification request 2524 to the push notification service 2530 to cause the push notification service 2530 to transmit the push notification 2531 or the push notification 2532. If multiple managed devices are selected, push notifications may be sent to each of the selected managed devices. In response to a push notification (e.g., the push notification 2531), a managed mobile device (e.g., the first managed mobile device 2540) may retrieve a command for execution (e.g., the command 2533).

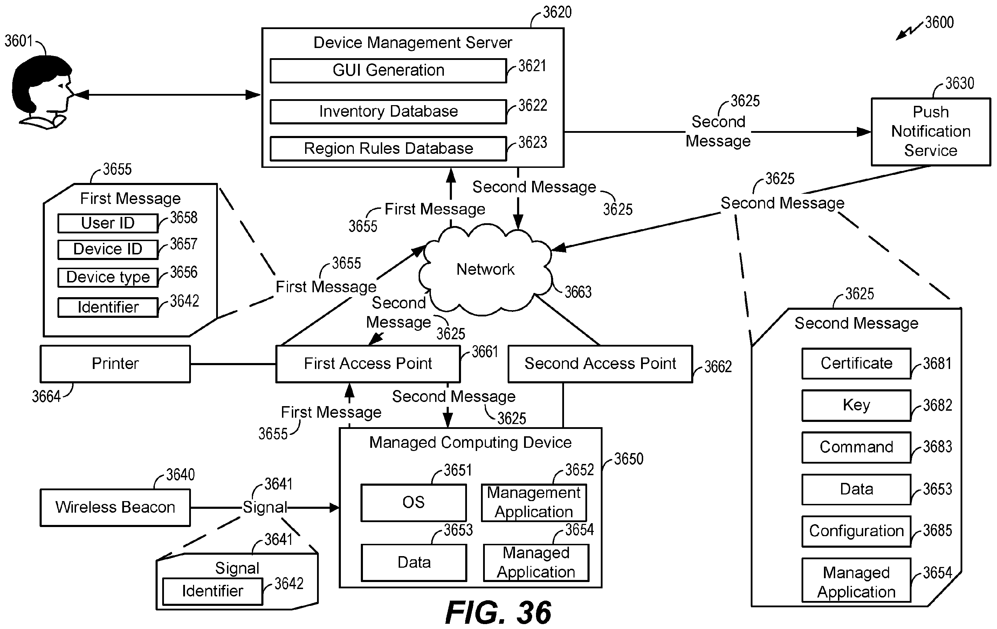

Referring to FIG. 36, a particular embodiment of a system 3600 that is operable to grant a managed computing device access to functionality based on detection of a wireless beacon is shown. The system 3600 includes a device management server 3620 (e.g., a mobile device management server) that is communicably coupled to a push notification service 3630 (e.g., a push notification server) and to a network 3663. The network 3663 may be a public (e.g., the Internet) and/or private network, and, in some examples, the device management server 3620 is coupled to the notification service 3630 via the network 3663. In an illustrative embodiment, the push notification service 3630 corresponds to the push notification service 2530 of FIG. 25.

The device management server 3620 may correspond to hardware and/or software that implements device management functions. For example, the device management server 3620 may be a mobile device management (MDM) server. In a particular embodiment, the device management server 3620 corresponds to the MDM server 2520 of FIG. 25. In an illustrative non-limiting example, in an educational context, the device management server 3620 may manage teacher and student computers and mobile devices. It should be noted that although various embodiments are described herein with reference to educational settings, this is for example only and not to be considered limiting. The teachings of the present disclosure may be applied to other environments, including but not limited to home environments, corporate environments, retail environments, etc.

Examples of device management actions may include, but are not limited to, installing an application at a managed device, adjusting a configuration setting at a managed device, providing content to a managed device, sending a message to a managed device, setting or clearing a passcode, editing one or more inventory data attributes, sending a communication/message (e.g., an e-mail or a SMS message), deleting data, sending remote commands, granting the managed device access to particular functionality, restricting certain functionality at a managed device, etc.

The device management server 3620 may include a graphical user interface (GUI) generation module 3621, an inventory database 3622, and a region rules database 3623. The GUI generation module 3621 may be configured to generate various GUIs related to managing computing devices. The inventory database 3622 may store registration information and inventory information related to computing devices managed by the device management server 3620.

As an illustrative non-limiting example, inventory data for a managed computer may include values for one or more of the following inventory attributes:
Active Directory Status, Application Title, Application Version, Architecture Type, Asset Tag, Available RAM Slots, Available SWUs, Bar Code, Battery Capacity, Boot Drive Percentage Full, Boot ROM, Building, Bus Speed MHz, Cached Packages, Computer Group, Computer Name, Department, Disk Encryption Configuration, Drive Capacity MB, Customer Care ID, Encrypted Volumes Eligibility, Encrypted Volumes Individual Key Validation, Encrypted Volumes Institutional Key, Encrypted Volumes Partition Encryption State, Encrypted Volumes Recovery Key Type, Encrypted Volumes Status, Encrypted Volumes User, Email Address, Enrollment Method: PreStage enrollment, Font Title, Font Version, Full Name, IP Address, Last Check-in, Last Enrollment, Last Inventory Update, Lease Expiration, Licensed Software, Life Expectancy, Local User Accounts, MAC Address, Make, Mapped Printers, Master Password Set, MDM Platform Binary Version, MDM Server ID, Model, Model Identifier, NIC Speed, Number of Available Updates, Number of Processors, Operating System, Optical Drive, Packages Installed By MDM Suite, Packages Installed By Native Installer/SWU, Partition Name, Phone Number, Platform, Plug-in Title, Plug-in Version, PO Date, PO Number, Position, Processor Speed MHz, Processor Type, Purchase Price, Purchased or Leased, Purchasing Account, Purchasing Contact, Room, Running Services, S.M.A.R.T. Status, Scheduled Tasks, Serial Number, Service Pack, SMC Version, Total RAM MB, Username, Vendor, Warranty Expiration

As another illustrative non-limiting example, inventory data for a managed mobile device may include values for one or more of the following inventory attributes:
Activation Lock Bypass Enabled, App Identifier, App Name, App Version, Asset Tag, Available Space MB, Battery Level, Block Encryption Capability, Bluetooth^{®} MAC Address, Building, Capacity MB, Carrier Settings Version, Cellular Technology, Certificate Name, Current Carrier Network, Current Mobile Country Code, Current Mobile Network Code, Customer Care ID, Data Protection, Data Roaming Enabled, Department, Device ID, Device Locator Service Enabled, Device Phone Number, Display Name, Do Not Disturb Enabled, Email Address, Enrollment Method: Enrollment profile, Enrollment Method: PreStage enrollment, Enrollment Method: User-initiated - invitation, Enrollment Method: User-initiated - no invitation, Expires, File Encryption Capability, Full Name, Hardware Encryption, Home Carrier Network, Home Mobile Country Code, Home Mobile Network Code, ICCID, Identifier, Identity, IMEI, IP Address, Languages, Last Backup, Last Enrollment, Last Inventory Update, Lease Expiration, Life Expectancy, Locales, MDM Profile Removal Allowed, MEID, Mobile Device Group, Model, Model Identifier, Modem Firmware Version, OS Build, OS Version, Passcode Compliance, Passcode Compliance with Profile(s), Passcode Status, PO Date, PO Number, Position, Profile Name, Provisioning Profile Name, Purchase Price, Purchased or Leased, Purchasing Account, Purchasing Contact, Roaming, Room, Serial Number, Subscriber MCC, Subscriber MNC, Supervised, UDID, Used Space Percentage, User Phone Number, Username, Vendor, Version, Voice Roaming Enabled, Warranty Expiration, Wi-Fi MAC Address, Wireless Media Streaming Password

The region rules database 3623 may store rules for managing computing devices that are located in particular regions that may be defined by one or more wireless beacons, as further described herein.

The system 3600 may include managed computing devices, such as an illustrative managed computing device 3650. The managed computing device 3650 may be a portable computing device with wired and/or wireless networking capability. For example, the managed computing device 3650 may be a desktop computer, a laptop computer, etc. Alternatively, the managed computing device 3650 may be a portable device with wireless networking capability. For example, the managed computing device 3650 may be a tablet computer, a mobile phone, a portable media player, an electronic book (eBook) reader, or any combination thereof. In an illustrative embodiment, the managed computing device 3650 corresponds to the managed mobile devices 2540, 2550 of FIG. 25.

The managed computing device 3650 may communicate with the device management server 3620 via the network 3663, a first access point 3661, and/or a second access point 3662. In a particular example, the first access point 3661 may permit open (e.g., unauthenticated and/or unsecured) communication via the network 3663. Use of the second access point 3662 may require authentication and may provide secured (e.g., encrypted) communication via the network 3663. The access points 3661-3662 may correspond to wireless access points, such as IEEE 3202.11 access points or 3G/4G base stations. In example of FIG. 36, a printer 3664 is coupled to the first access point 3661. It should be noted that the printer 3664 may be also or alternatively be coupled to the second access point 3662 and/or to the network 3663. In some embodiments, the printer 3664 includes wireless capabilities that enable the printer 3664 to receive print requests from a requesting device without communicating via one of the access points 3661, 3662 or via the network 3663. In alternative embodiments, different devices may be coupled to and accessible via an access point

The managed computing device 3650 may be managed by the device management server 3620, and data regarding the managed computing device 3650 may be included in the inventory database 3622. The inventory database 3622 may store configuration settings, data, software, rules associated with the region rules database 3623, or a combination thereof, related to the managed computing device 3650. For example, the inventory database 3622 may store data indicating whether particular rules stored in the region rules database 3623 are being applied to the managed computing device 3650. Further, the inventory database 3622 may identify whether particular software or data is stored at the managed computing device 3650 or whether particular configuration settings are in place at the managed computing device 3650. To illustrate, the managed computing device 3650 may periodically provide inventory data updates to the device management server 3620. Alternatively, the computing device 3650 may report an update to the device management server 3620 in response to a triggering event (e.g., polling from the device management server 3620, installation of software, storing of data, setting of a configuration setting, etc.). It should be noted that although a single managed computing device 3650 is shown in FIG. 36, the present disclosure is not limited to any particular configuration or number of devices. In alternate embodiments, a different number of managed computing devices may be present and/or included in the inventory database 3622. The device management server 3620 may manage access to functions at the managed computing device 3650. In particular examples, the managed computing device 3650 may be associated with a particular user (not shown).

The managed computing device 3650 may include an operating system (OS) 3651. The OS 3651 may control computing functions, such as input/output (e.g., a touchscreen display, speaker, microphone, camera, etc.) and networking (e.g., cellular, Bluetooth^{®}, IEEE 3202.11, Ethernet, etc.). The OS 3651 may also support execution of applications, such as a management application 3652 and a managed application 3654, and provide such applications access to device resources and data 3653. As further described herein, the management application 3652 may communicate with the device management server 3620 to implement device management. The managed application 3654 may be an application whose operation can be initiated, terminated, and/or affected by the device management server 3620. Examples of the managed application 3654 include, but are not limited to, a web browser, e-mail, a calendar, social networking, a document/eBook reader, a media player, etc. The applications 3652, 3654 may correspond to software instructions that are stored in a memory and executed by a processor, hardware circuits that implement application functionality, or both. The applications 3652, 3654 may be pre-installed (e.g., as part of or along with an OS) or may be installed after being downloaded (e.g., via a storefront) or sideloaded (e.g., from an external storage device).

The system 3600 further includes a wireless beacon 3640. The wireless beacon 3640 may be associated with (e.g., located within or near) a particular region (e.g., a particular room, such as a classroom or a conference room, a particular building, such as a school or a hospital, a particular street, etc.). The wireless beacon 3640 may, continuously or periodically, wirelessly transmit a signal 3641 that includes an identifier 3642. The identifier 3642 may be associated with the particular region and may correspond to a region for which rules are stored in the region rules database 3623. In an illustrative embodiment, the wireless beacon 3640 transmits the signal 3641 via a personal area network connection or other short range connection, such as Bluetooth^{®} low energy (BLE).

Although a single wireless beacon 3640 is shown in FIG. 36, the disclosure is not so limited. For example, a plurality of wireless beacons may be included in the system 3600 and the device management server 3620 may manage rules for a plurality of regions. Each region of the plurality of regions may correspond to one or more wireless beacons of the plurality of wireless beacons. Each wireless beacon (e.g., the wireless beacon 3640) may have an adjustable transmission range that may be set via user input or via input from the device management server 3620. In some examples, a region may be defined by transmission/coverage areas of multiple wireless beacons. For example, a location of the managed computing device 3650 within a particular region may be triangulated based on signal strengths of signals received from three or more wireless beacons of the region.

In operation, the device management server 3620 may receive input from a user 3601 (e.g., a system administrator) defining regional rules to be stored in the region rules database 3623. The regions may be based on transmission areas of beacons, such as the wireless beacon 3640. The regional rules may further be further based on an identity of a user associated with a device, a device type, a device identifier or a combination thereof. For example, interacting with a GUI provided by the GUI generation module 3621, the user 3601 may define a rule associated with a region associated with wireless beacon 3640. The rule may cause the device management server 3620 to perform a particular management action for a device in response to determining that the device is located in the corresponding region. In one example, the particular management action may include granting the device access to particular functionality, such as use of the printer 3664, use of the second access point 3662, use of the managed application 3654, or access to a virtual private network (VPN), access to the data 3653, or access to some other functionality.

For example, the OS 3651 may receive the signal 3641 and report the signal 3641 to the management application 3652. The management application 3652 may cause a first message 3655 to be transmitted to the device management server 3620 via the first access point 3661 (e.g., an unsecured access point) and the network 3663. The first message 3655 may include a user identifier (ID) 3658 associated with a user of the managed computing device 3650, a device ID 3657 associated with the managed computing device 3650, a device type 3656 of the managed computing device 3650, the identifier 3642, or a combination thereof. In alternative embodiments, the first message 3655 may include more, fewer, and or/different types of data.

The device management server 3620 may receive the first message 3655 and may determine, based on data included in the first message (e.g., the identifier 3642), that the managed computing device 3650 is a particular wireless beacon region associated with the wireless beacon 3640. In response, the device management server 3620 may determine whether any rules associated with the wireless beacon region are stored in the region rules database 3623. When rule(s) for the wireless beacon region are stored in the region rules database 3623 (and the rule(s) have not already been applied to the managed computing device 3650), the device management server 3620 may generate a second message 3625 based on the rule(s). For example, when the rule(s) indicate that access to particular functionality is to be granted to managed computing devices in the wireless beacon region, the second message 3625 may grant the managed computing device 3650 access to the particular functionality. The management application 3652 may receive the second message 3625 and may perform one or more actions based on the second message 3625, such as action(s) that enable access by the managed computing device 3650 to particular functionality.

As an illustrative non-limiting example, the second message 3625 may grant the managed computing device 3650 access to the printer 3664. Thus, the second message 3625 may include a certificate 3681 or a key 3682 used to authenticate the managed computing device 3650 with the printer 3664. In addition or in the alternative, the second message 3625 may include configuration settings 3685 that configure the managed computing device 3650 to use the printer 3664. In alternative embodiments, the second message 3625 granting access to the printer 3664 may include more, fewer, and/or different types of data (e.g., an IP address of the printer, a printer driver to be installed at the managed computing device 3650, a network location from which to download the print driver, etc.).

As another illustrative non-limiting example, the second message 3625 may grant access to the second access point 3662 (e.g., a secured access point). For example, the certificate 3681 may be used to authenticate the managed computing device 3650 and/or the key 3682 may be used for encrypted communication with the second access point 3662. In addition or in the alternative, the second message 3625 may include the configuration settings 3685 to configure the managed computing device 3650 to communicate using the second access point 3662. In alternative embodiments, the second message 3625 granting access to the second access point 3662 may include more, fewer, and/or different types of data.

As another illustrative non-limiting example, the second message 3625 may grant access to data 3653. For example, the second message 3625 may be the source of the data 3653 stored at the managed computing device 3650. In addition or in the alternative, the second message 3625 may include the key 3682 to enable decryption of the data 3653 at the managed computing device. In particular examples, the data may correspond to a document or to an eBook. In alternative embodiments, the second message 3625 granting access to the data 3653 may include more, fewer, and/or different types of data. For example, the second message 3625 may include a location (e.g., a web address) from which the managed computing device may download the data 3653.

As another illustrative non-limiting example, the second message 3625 may grant access to the managed application 3654 (or particular functionality thereof). For example, the second message 3625 may include an installation package or link corresponding to the managed application 3654. In addition or in the alternative, the second message 3625 may include the key 3682 to enable decryption of the managed application 3654. In particular examples, the managed application 3654 may correspond to an eBook reader, a web browser, a video game, a media player, etc. In some examples, the second message 3625 may grant the managed computing device 3650 access to a portion of the managed application 3654 or turn on/unlock a feature of the managed application 3654. For example, the second message 3625 may enable a secure test taking feature of a word processing application when the managed computing device 3650 is in a wireless beacon region corresponding to a test taking environment at a school. The secure test taking feature may enable the word processing application to download and display a test prompt and to upload an answer. As another example, the second message 3625 may turn on a subtitle function of a movie player application when the wireless beacon 3640 is associated with a library region. In alternative embodiments, the second message 3625 granting access to the managed application 3654 may include more, fewer, and/or different types of data. For example, the second message 3625 may include a location (e.g., a web address) from which the managed computing device 3650 may download the managed application 3654.

As another non-limiting example, the second message 3625 may grant access to a VPN. For example, the certificate 3681 may be used to authenticate the managed computing device 3650 and/or the key 3682 may be used to communicate with the VPN. In addition or in the alternative, the second message 3625 may include the configuration settings 3685 to configure the managed computing device 3650 to communicate using the VPN. In alternative embodiments, the second message 3625 granting access to the second access point 3662 may include more, fewer, and/or different types of data.

In particular embodiments, the device management server 3620 determines whether the one or more rules associated with the wireless beacon 3640 are already in effect at the managed computing device 3650 by performing a device lookup in the inventory database 3622. To illustrate, a rule may indicate that the managed device 3650 is to be given access to the printer 3664 when the managed computing device 3650 is in range of the wireless beacon 3640. However, the inventory database 3622 may indicate that the managed computing device 3650 already has access to the printer 3664. Accordingly, in this case, the device management server 3620 may not initiate transmission of the second message 3625. Furthermore, when the second message 3625 is transmitted to the managed computing device 3650 to apply the one or more rules (e.g., granting access to the printer 3664), or in response to receiving an acknowledgement from the managed computing device 3650, the device management server 3620 may update an entry in the inventory database 3622 associated with the managed computing device 3650 to reflect that the one or more rules have been applied to the managed computing device 3650. Thus, the inventory database 3622 may be updated to reflect a current "state" of the managed computing device 3650.

In a particular embodiment, the second message 3625 includes a command 3683 that is to be executed at the managed computing device 3650. For example, the command 3683 may include a file management command (e.g., to copy, to delete, or to move a file). In other examples, the command 3683 may correspond to a command to output an alert (e.g., a tone, a video, or a text message). As another example, the command 3683 may include instructions to encrypt the data 3653, the managed application 3654, or other information stored at the managed computing device 3650 using the key 3682.

In a particular embodiment, the device management server 3620 may also revoke access by the managed computing device 3650 to particular functionality in response to determining that the managed computing device 3650 is in a particular wireless beacon region. For example, the command 3683 or the configuration settings 3685 may revoke access to the printer 3664, the second access point 3662, the managed application 3654, the data 3653, etc. To illustrate, the managed computing device 3650 may be prevented from accessing a web browsing application or a game application in response to the first message 3655 indicating that the managed computing device 3650 has detected a wireless beacon associated with a classroom. As another example, the managed computing device 3650 may be restricted to accessing a specific educational application (e.g., a calculator) or website when the managed computing device 3650 is in the classroom. That is, "focus" of the managed computing device 3650 may be restricted to the particular application or website.

It should be noted that while the second message 3625 is shown as including a single certificate 3681, a single key 3682, a single command 3683, a single instance of data 3653, a single configuration setting 3685, and a single managed application 3654, more or fewer of each of these elements may be included in the second message 3625. For example, the second message 3625 may include two certificates 3681. A first certificate may be used by the managed device 3650 to authenticate with a VPN and a second certificate may be used to authenticate with the second access point 3662. Moreover, it should be noted that the various management actions described herein are for examples and not to be considered limiting. Additional management actions may also be performed based on proximity of a managed computing device to a wireless beacon device, such as management actions corresponding to changes in one or more of inventory data attributes (e.g., enabling/disabling hard disk encryption, data roaming, etc.). Moreover, in particular embodiments, a set of available management actions for managed computers may differ from a set of available management actions for managed mobile devices.

In some examples, the device management server 3620 may add the managed computing device 3650 to a "smart" group based on the first message 3655. As used herein, a "smart" group may be a group of managed computing devices, where membership in the group is dynamically determined by the managed computing device 3650. For example, the user 3601 may define a smart group based on grouping criteria that includes a criterion that is satisfied when a managed computing device is in the region of the wireless beacon 3640. To illustrate, the wireless beacon 3640 may be inside a math class and the smart group may be "Math class devices with low battery," corresponding to the grouping criteria (Region=MathClass AND BatteryLevel<20%). The user 3601 may also provide input indicating that a particular device management action is to be performed for devices in the smart group (e.g., sending a reminder "Don't forget to charge your device using the outlets at the back wall of the math classroom"). In response to the first message 3655, the device management server 3620 may determine that the managed computing device 3650 is in the math class. When the inventory database 3622 indicates that the managed computing device 3650 has a battery level less than 20%, the device management server 3620 may initiate sending the reminder to the managed computing device 3650 (e.g., by sending the second message 3625).

In some examples, the device management server 3620 may generate reports associated with wireless beacons, such as the wireless beacon 3640. For example, each report may include information regarding devices in range of the associated wireless beacon. In such embodiments, the user ID 3658, the device ID 3657, the device type 3656, the identifier 3642, or a combination thereof may be included in the report. Further, the command 3683 may include instructions that cause the managed computing device 3650 to transmit additional information to the device management server 3620 to be included in the report. For example, additional information may include inventory information, such as whether a particular application is installed at the managed computing device 3650, or may include data, such as the data 3653.

Thus, the device management system 3600 may enable the device management server 3620 to manage access by the managed computing device 3650 to particular functionality based on proximity managed computing device 3650 to the wireless beacon 3640. Managing a computing device based on proximity to a wireless beacon may enable the computing device to be managed based on location with reduced power consumption and increased privacy as compared to GPS-based methods. For example, unlike in GPS-based methods, an accurate location of the managed computing device 3650 may not be communicated to the device management server 3620 when the managed computing device 3650 is outside the school. Further, detecting the signal 3641 (e.g., via BLE) may consume less power than operating a GPS receiver at the managed computing device 3650.

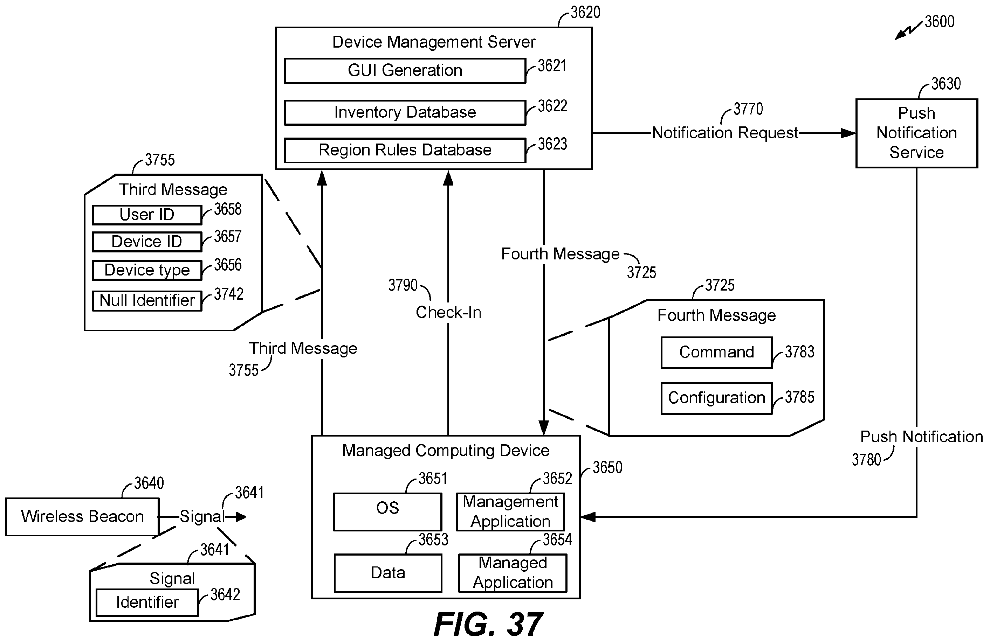

The example of FIG. 36 illustrates the system 3600 at a first time, during which the managed computing device 3650 is within range of the wireless beacon 3640. FIG. 37 illustrates the system 3600 at a second time, during which the managed computing device is not within range of the wireless beacon 3640 (e.g., when the managed computing device 3650 no longer detects the signal 3641).

In FIG. 37, the OS 3651 may report to the management application 3652 that the managed computing device 3650 has exited a transmission range of the wireless beacon 3640. Certain components shown in FIG. 36, such as the network 3663, the access points 3661-3662, and the printer 3664 are not shown in FIG. 37 for ease of illustration. The OS 3651 may report the exit in response to detecting that the signal 3641 is absent (e.g., no longer being received). As another example, the managed computing device 3650 may be determined to have exited the transmission range of the wireless beacon 3640 when a detected signal strength of the signal 3641 is below a threshold and/or when a second detected signal strength of a second signal associated with a second wireless beacon is stronger than the signal strength of the signal 3641. The threshold may correspond to an ability to interpret the signal to identify the identifier 3642. For example, the exit may be reported in response to the signal strength of the signal 3641 being too weak for the managed computing device 3650 to correctly decode the signal to obtain the identifier 3642.

In response to the OS 3651 indicating that the managed computing device 3650 has exited the transmission range of the wireless beacon 3640, the management application 3652 may initiate transmission of a third message 3755 to the device management server 3620. The third message may be transmitted via the first access point 3661, the second access point 3662, and/or and the network 3663.

The third message 3755 may include the user ID 3658, the device ID 3657, the device type 3656, and a null identifier 3742. The null identifier 3742 may indicate that no wireless beacon is in range of the managed computing device 3650. Alternatively, the null identifier 3742 may indicate which wireless beacon (e.g., the wireless beacon 3640) was previously in range of the managed computing device 3650. In some examples, if another wireless beacon is detected by the managed computing device 3650, the third message 3755 may include an identifier of the other wireless beacon. Thus, in a particular embodiment, a message sent from the managed computing device 3650 to the device management server 3620 may include a list of detected wireless beacon identifiers and corresponding signal strengths.

Based on the third message 3755, the device management server 3620 may generate a fourth message 3725. For example, the device management server 3620 may compare the null identifier 3742 with an entry in the inventory database 3622 to determine which rules from the region rules database 3623 were applied to the managed computing device 3650 in response to the first message 3655. The fourth message 3725 may include a command 3783 and/or configuration settings 3785 that revoke the application of the rules to the computing device 3650. For example, the command 3783 and or the configuration settings 3785 may revoke access to the printer 3664, to the second access point 3662, to the managed application 3654, to the management application 3652, to a VPN, etc. For example, the command 3783 may cause the managed computing device 3650 to delete or encrypt the certificate 3681, the key 3682, the command 3683, the data 3653, the configuration settings 3685, the managed application 3654, or other data received a part of the second message 3625. In addition or in the alternative, the configuration settings 3785 may configure the mobile computing device 3650 to use a different (or no) printer, a different (or no) access point, a different (or no) application, different (or no) data, a different (or no) VPN, or a combination thereof.

In a particular embodiment, to communicate a message (e.g., the second message 3625 and/or the fourth message 3725) to the managed computing device 3650, the device management server 3620 sends the message to a push notification service 3630 along with data indicating that the managed computing device 3650 is an intended recipient of the message (e.g., as illustrated in FIG. 36). The push notification service 3630 may forward the message to the managed computing device 3650 using a push notification system. In an alternative embodiment, as illustrated in FIG. 37, the device management server 3620 may initiate transmission of a message to the managed computing device 3650 by sending a notification request 3770 to the push notification service 3630, where the notification request 3770 identifies the managed computing device 3650. In response to the notification request 3770, the push notification service 3630 may send a push notification 3780 to the managed computing device 3650. The push notification 3780 may represent an instruction to the managed computing device 3650 that causes the managed computing device 3650 to check-in with the device management server 3620 (e.g., send a check-in message 3790 to the device management server 3620). The device management server 3620 may send the message (e.g., the second message 3625, the fourth message 3755, and/or and any other queued messages or actions for the managed computing device 3650) to the managed computing device 3650 in response to receiving the check-in message 3790.

Thus, the fourth message 3725 may be used to "undo" configuration settings or policies that were applied to the managed computing device 3650 in response to the managed computing device 3650 being in the region of the wireless beacon 3640. To illustrate, the fourth message 3725 may be sent when a student leaves school, so that school-specific configuration settings or policies are not enforced while the student is at home.

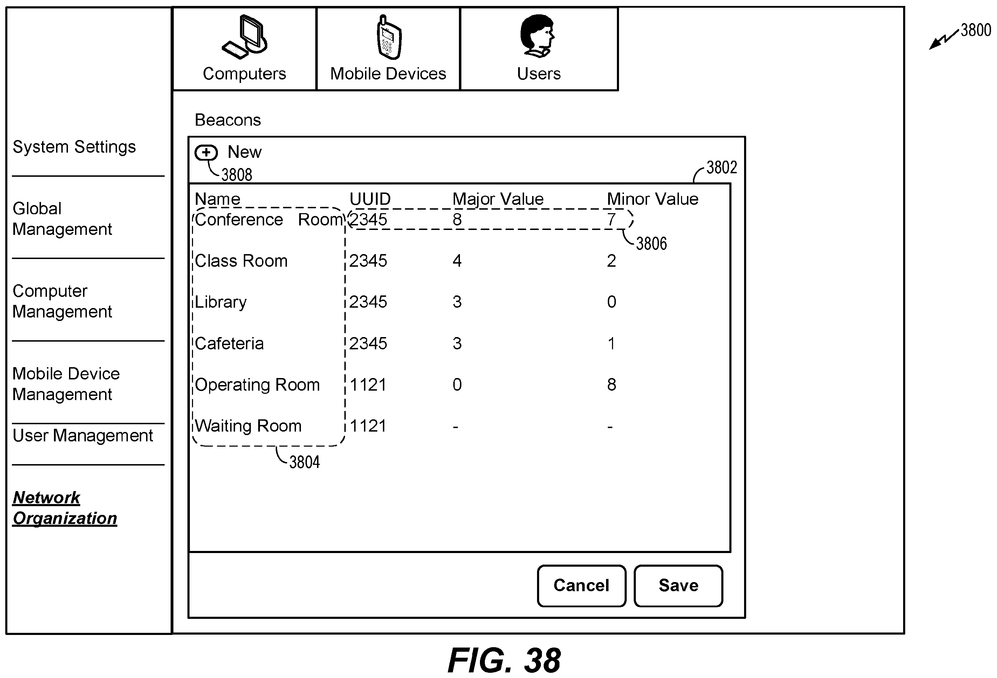

Referring to FIG. 38, an example of a GUI 3800 that may be generated by a device management server is shown. The GUI 3800 may be generated, for example, by the GUI generation module 3621 of the device management server 3620. The GUI 3800 includes a window 3802 including a plurality of entries 3804. Each of the entries 3804 may correspond to a region (e.g., a wireless beacon region). The entries 3804 may correspond to entries in a region rules database, such as the region rules database 3623. Each of the entries 3804 may have an associated identifier. For example, a conference room entry has an associated identifier 3806. One of the identifiers may correspond to the identifier 3642.

Each identifier may include sub-identifiers. In the illustrated example, the identifiers include a universal unique identifier (UUID), a major value, and a minor value. In a particular embodiment, the UUID may correspond to a region while the major value corresponds to sub-regions within the region and the minor value corresponds to sub-sub-regions within a sub-region. In the example of FIG. 38, a conference room entry, a classroom entry, and a library entry each have a UUID 26345, which may be associated with a school. Certain rules in a rule database, such as the rules database 3623, may be associated with the UUID 26345 (e.g., associated with the school). For example, a device management server, (e.g., the device management server 3620) may prevent managed computing devices (e.g., the managed computing device 3650) from accessing a managed multimedia application (e.g., the managed application 3654), such as a video player, and/or may provide textbook data to the managed computing devices while the managed computing devices are located in any part of the school.

The major values may be associated with sub-regions within a region. For example, the library entry and the cafeteria entry may share a major value of 3. The major value 3 may be associated with common areas or sub-regions in particular building, floor, hallway, etc. of the school. Certain rules in the rules database 3623 may be associated with major values. For example, managed computing devices (e.g., the managed computing device 3650) in sub-regions associated with the major value 3 may be allowed to access managed application (e.g., the managed application 3654), such as a web browser. Managed computing devices in sub-regions of the school associated with other major values (e.g., 8 or 4) may be prevented from accessing the managed application.

The minor values may be associated with sub-sub-regions within a sub-region. For example, the cafeteria entry may have a minor value of 1 that differs from a minor value 0 associated with the library entry. Each sub-sub-region may have different associated rules in a region rules database (e.g., the region rules database 3623). For example, audio output may be muted for managed computing devices (e.g., the managed computing device 3650) that detect a signal (e.g., the signal 3641) with an identifier (e.g., the identifier 3642) associated with the library entry (e.g., having a UUID value =2345, a major value =3, and a minor value=0).

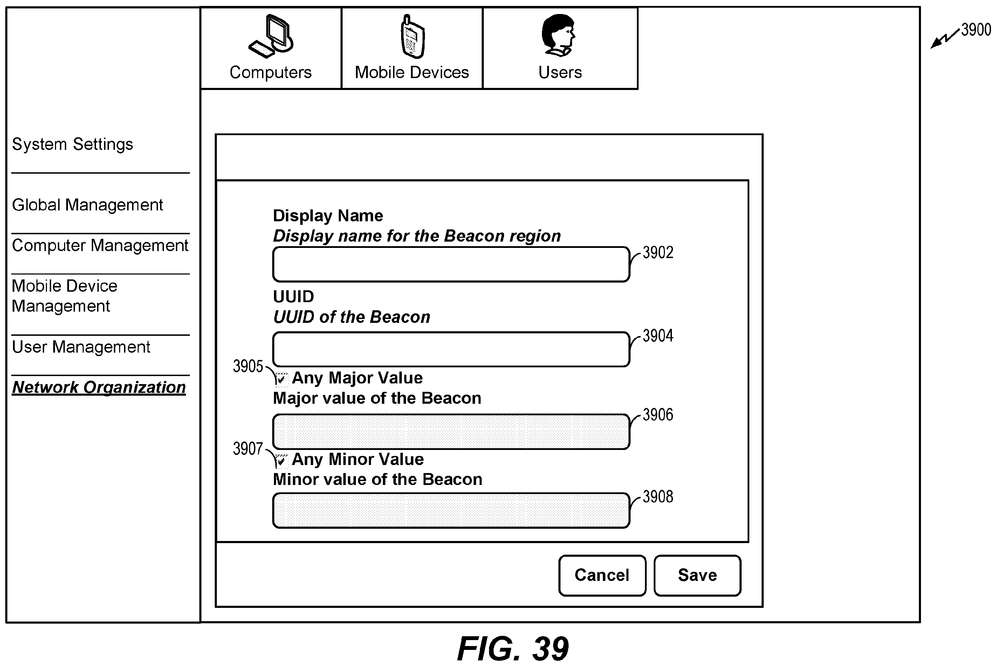

The GUI 3800 may further include an "add" button 3808. In response to a selection of the "add" button 3808, a device management server (e.g., the device management server 3620) may display another GUI configured to receive input from a user (e.g., the user 3601) to identify a new region to be added to a region rules database (e.g., the region rules database 3623). Although not shown in FIG. 38, in alternative embodiments the GUI 3800 may also include buttons operable to edit, delete, and/or clone a region. Referring to FIG. 39, an example of a GUI 3900 that may be generated in response selection of the "add" button 3808 is shown. A device management server may receive user input via the GUI 3900 that includes information used to add an entry to the entries 3804. The GUI 3900 includes a display name field 3902. The display name field 3902 may receive a display name (e.g., conference room, classroom, library, etc.) to be associated with the wireless beacon region being defined. The GUI 3900 further includes a UUID field 3904. The UUID field 3904 may receive input indicating a UUID of the region.

The GUI 3900 further includes any major value checkbox 3905. Selection of the checkbox 3905 may indicate that the region corresponds to wireless beacons having identifiers the UUID input into the UUID field 3904, regardless of major value. Similarly, selection of any minor value checkbox 3907 may indicate that the region corresponds to wireless beacons having identifiers the UUID input into the UUID field 3904, regardless of minor value. If specific major or minor value(s) are to be associated with the region, a major value field 3906 or a minor value field 3908 may be used to input the major or minor value(s).

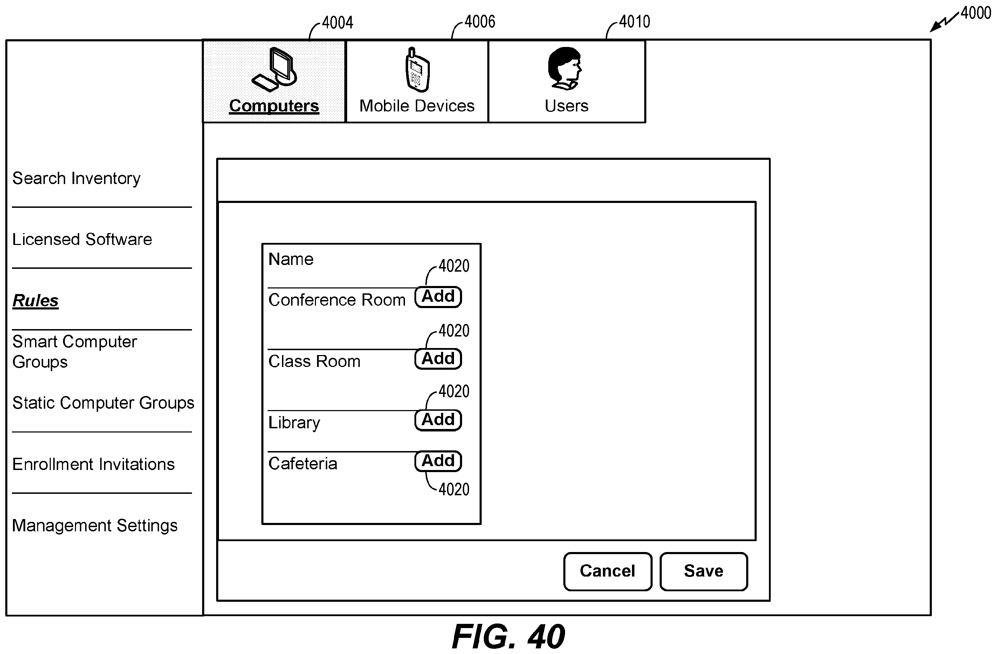

Referring to FIG. 40, an example of a GUI 4000 that may be generated by a device management server is shown. The GUI 4000 may be generated, for example, by the GUI generation module 3621 of the device management server 3620. The GUI 4000 may be configured to receive input defining region rules to be stored in a region rules database (e.g., the region rules database 3623). In the example of FIG. 40, the GUI 4000 includes a "computers" tab 4004 to define region rules for managed computers and a "mobile devices" tab 4006 to define region rules for managed mobile devices. The GUI 4000 also includes a "users" tab 4010 to define region rules for managed users. For example, a region rule for a managed user may result in granting access or restricting access to particular functionality at some or all managed computing devices associated with the managed user. In alternative embodiments, the GUI 4000 may also operable to define region rules for all managed entities and/or for specific managed entities based on device ID (e.g., the device ID 3657) or user ID (e.g., the user ID 3658). The user ID 3658 may identify an individual (e.g., "Sally") and/or a set of individuals (e.g., "student").

In the GUI 4000, an "add" button 4020 is displayed for each of the wireless beacon regions. Selection of the "add" button 4020 for a particular region may cause display of GUI operable to add a region rule for the particular region.

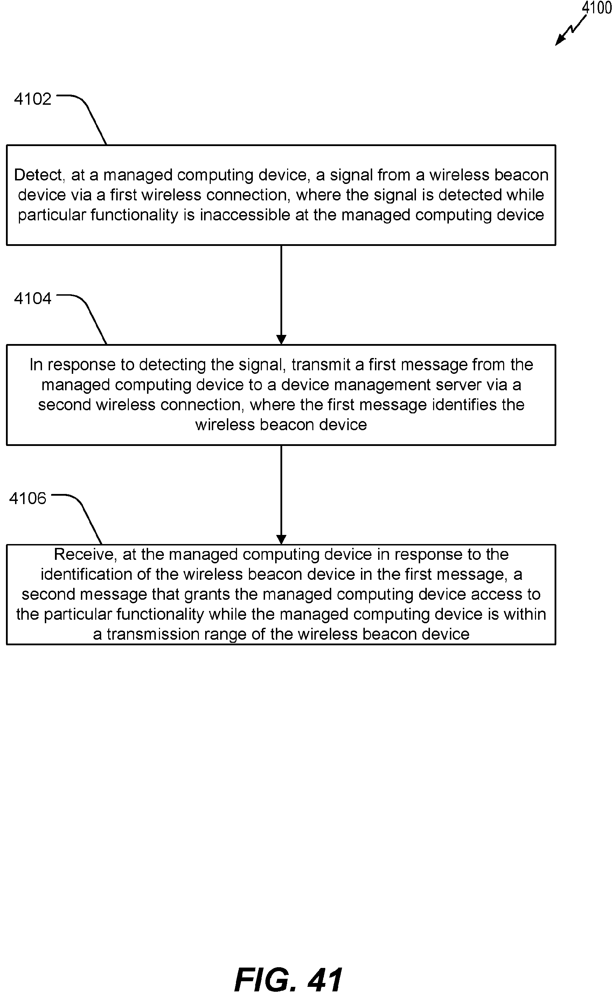

Referring to FIG. 41, a flowchart illustrating a method 4100 of managing functionality based on proximity to a wireless beacon is shown. In an illustrative embodiment, the method 4100 may be performed by a managed computing device, such as the managed computing device 3650. The method 4100 includes detecting, at a managed computing device, a signal from a wireless beacon device via a first wireless connection, at 4102. The signal may be detected while particular functionality is inaccessible at the managed computing device. For example, in FIG. 36, the managed computing device 3650 may detect the signal 3641 from the wireless beacon 3640 while the managed computing device 3650 does not have access to the printer 3664.

The method 4100 further includes, in response to detecting the signal, transmitting a first message from the managed computing device to a device management server via a second wireless connection, at 4104. The first message may identify the wireless beacon device. For example, the managed computing device 3650 may transmit the first message 3655 to the device management server 3620 in response to detecting the signal 3641. The first message 3655 may include the identifier 3642 identifying the wireless beacon 3640.

The method 4100 further includes receiving, at the managed computing device in response to the identification of the wireless beacon device in the first message, a second message that grants the managed computing device access to the particular functionality while the managed computing device is within a transmission range of the wireless beacon device, at 4106. For example, the managed computing device 3650 may receive the second message 3625 from the device management server 3620 in response to the first message 3655. The second message 3625 may grant the managed computing device 3650 access to the printer 3664. When the managed computing device 3650 detects that the managed computing device 3650 has exited the transmission range of wireless beacon 3640, the managed computing device 3650 may send the third message 3755 to the device management server 3620 and may receive the fourth message 3725 that revokes access by the managed computing device 3650 to the printer 3664.

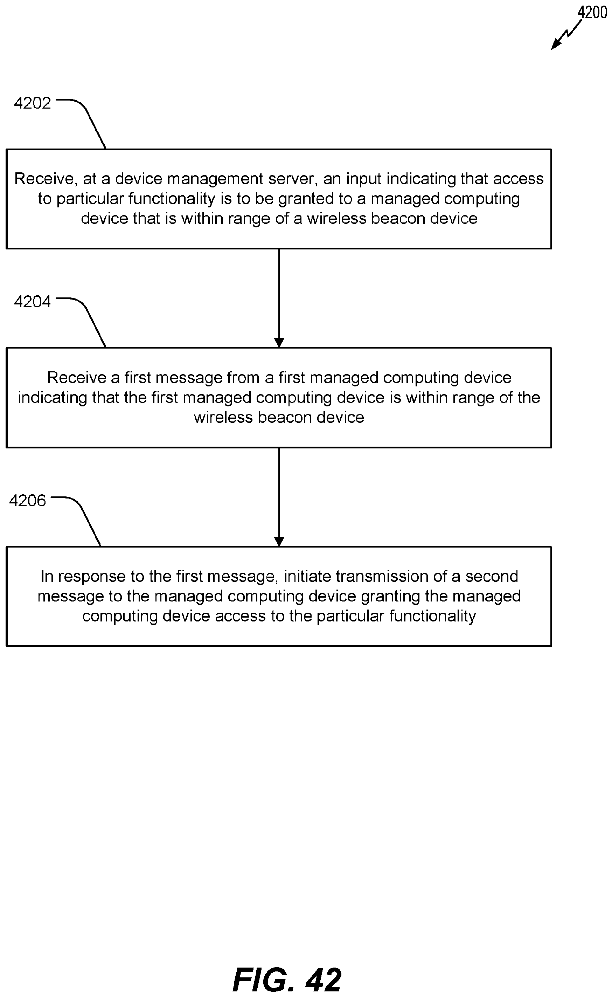

Referring to FIG. 42, a method 4200 of managing functionality of a managed device based on proximity of the managed device to a wireless beacon is shown. In an illustrative embodiment, the method 4200 may be performed by the device management server 3620. The method 4200 includes receiving, at a device management server, an input indicating that access to particular functionality is to be granted to a managed computing device that is within range of a wireless beacon device, at 4202. For example, in FIG. 36, the device management server 3620 may receive input from the user 3601 defining a rule to be stored in the region rules database 3623. The rule may indicate that managed computing devices are to have access to the printer 3664 while the managed computing devices are in a particular wireless beacon region (e.g., corresponding to a transmission range of the wireless beacon 3640).

The method 4200 further includes receiving a first message from a first managed computing device indicating that the first managed computing device is within range of the wireless beacon, at 4204. For example, the device management server 3620 may receive the first message 3655. The first message 3655 may include the device ID 3657 identifying the managed computing device 3650 and the identifier 3642 associated with the wireless beacon 3640.

The method 4200 further includes, in response to the first message, initiating transmission of a second message to the first managed computing device granting the first managed computing device access to the particular functionality, at 4206. For example, the device management server 3620 may send the second message 3625 to the managed computing device 3650 in response to the first message 3655. The second message 3625 may enable the managed computing device 3650 to access the printer 3664. For example, the second message 3625 may include the configuration settings 3685 that configure the managed computing device 3650 to use the printer 3664, the certificate 3681 that authenticates the managed computing device 3650 with the printer 3664, or other data that enables the managed computing device 3650 to use the printer 3664. In an illustrative embodiment, the second message 3625 may be sent via the push notification service 3630.

Although certain embodiments may be described separately herein, it should be understood that aspects of one or more embodiments may be removed, replaced, and/or combined with aspects of other embodiments without departing from the scope of the present disclosure. Thus, according to particular aspects, one or more components illustrated and described with reference to FIG. 36 may be additionally configured to operate as described with reference to corresponding components in FIG. 25, and vice versa. To illustrate, the device management server 3620 may alternatively or additionally operate as described with reference to the MDM server 2520, the push notification service 3630 may alternatively or additionally operate as described with reference to the push notification service 2530, the managed computing device 3650 may alternatively or additionally operate as described with reference to one or more of the mobile devices 2510, 2540, 2550, etc.

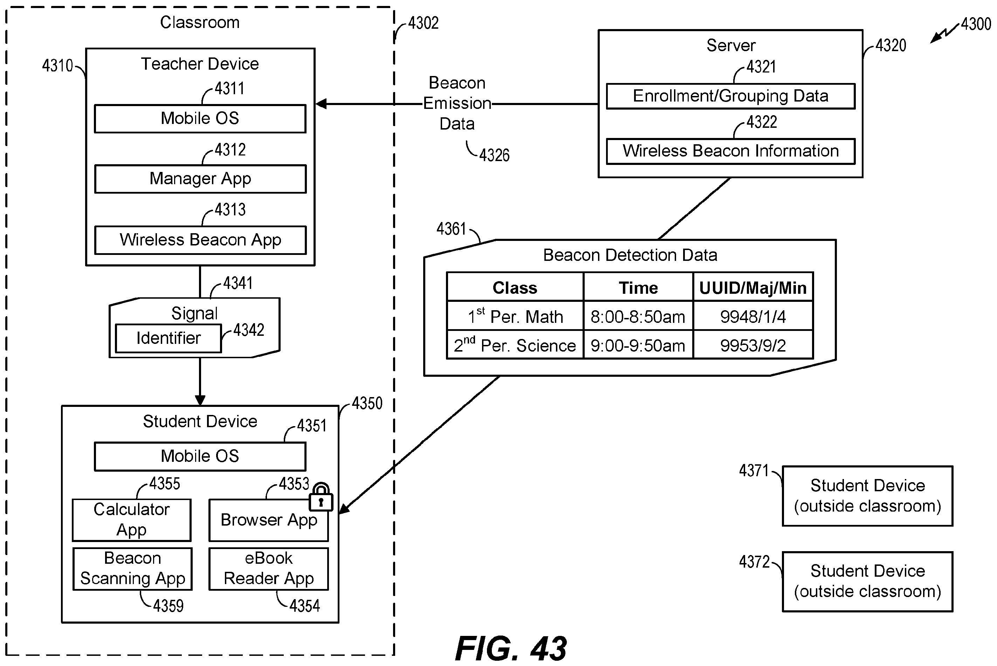

FIG. 43 illustrates a particular embodiment of a system 4300 that supports determining whether a managed device is present in a particular area based on a wireless beacon signal emitted by a manager device. In the example of FIG. 43, a teacher device 4310 and a student device 4350 are located within a classroom 4302.

The teacher device 4310 may include a mobile operating system (OS) 4311 and a manager app 4312. In an illustrative embodiment, the mobile OS 4311 and the manager app 4312 operate as described with reference to the mobile OS 2511 and the manager app 2512 of FIG. 25. For example, as described with reference to FIG. 25, the manager app 4312 may enable a teacher to restrict the student device 4350 to accessing a particular app, website, eBook, etc.

The wireless beacon app 4311, when executed at the teacher device 4310, may cause the teacher device 4310 to perform one or more wireless beacon operations. In an illustrative embodiment, the wireless beacon app 4311 may enable the teacher device 4310 to operate as described with reference to the wireless beacon 3640 of FIG. 36. For example, the wireless beacon app 4311 may cause the teacher device 4310 to continuously or periodically emit a signal 4341 that includes an identifier 4342.

The student device 4350 may include a mobile OS 4351, a browser app 4353, an eBook reader app 4354, and a calculator app 4355. In an illustrative embodiment, the mobile OS 4351 operates as described with reference to the mobile OS 2551 of FIG. 25, the browser app 4353 operates as described with reference to the browser app 2553 of FIG. 25, the eBook reader app 4354 operates as described with reference to the eBook reader app 2554 of FIG. 25, and the calculator app 4355 operates as described with reference to the calculator app 2555 of FIG. 25.

The student device 4350 may also include a beacon scanning app 4359. The beacon scanning app 4359, when executed at the student device 4350, may cause the student device 4350 to scan particular wireless frequencies for wireless beacon signals, such as the signal 4341 from the teacher device 4310. In a particular embodiment, the beacon scanning app 4359 is automatically pushed and installed to student devices, as described with reference to FIG. 25.

As shown in FIG. 43, the teacher device 4310 and the student device 4350 may communicate with a server 4320. In an illustrative embodiment, the server 4320 corresponds to the MDM server 2520 of FIG. 25 or to the device management server 3620 of FIG. 36. The server 4320 may store enrollment and grouping data 4321. For example, the enrollment and grouping data 4321 may identify devices, including the student device 4350, that are managed by the server 4320. The enrollment and grouping data 4321 may also include data that classifies managed devices into groups or subgroups, so that the managed mobile devices can be managed individually or as part of a larger group or subgroup. In an educational context, the enrollment and grouping data 4321 may include a list of all student devices, lists of student devices corresponding to a particular class (e.g., all student devices of a particular school or school district), lists of student devices in subgroups (e.g., lab partner groups or homework/project groups) within a particular class, etc.

The server 4320 may also store wireless beacon information 4322. The wireless beacon information 4322 may include information identifying when (e.g., which class time periods) and where (e.g., in which classrooms) each teacher devices is to function as a wireless beacon. The wireless beacon information 4322 may also indicate which wireless beacon signal ID each teacher device is to transmit while functioning as a wireless beacon. In one example, wireless beacon signal IDs are unique to teacher devices, and a teacher device transmits the same wireless beacon signal ID each time the teacher device functions as a wireless beacon, regardless of class time period and classroom. In another example, wireless beacon signal IDs are unique to classrooms, and student devices search for the same wireless beacon signal ID in a particular classroom, regardless of teacher device and class time period. In yet another example, wireless beacon signal IDs vary based on a combination of teacher device, class time period, and/or classroom.

During operation, when a teacher enters the classroom 4302 and starts a class using the manager app 4312 (e.g., selects "Yes" on the interface of FIG. 28, which indicates that 2nd period science class is starting), the teacher device 4310 may transmit a message to the server 4320. In response to the message, the server 4320 may access the wireless beacon information 4322. The wireless beacon information 4322 may indicate that during the 2nd period science class, the teacher device 4310 is to operate as a wireless beacon that is assigned a particular UUID, major value, and minor value. The server 4320 may send (e.g., directly or via a push notification service, such as the push notification service 2530 of FIG. 25) the UUID, the major value, and the minor value to the teacher device 4310 as beacon emission data 4326, as shown. Alternatively, the teacher device 4310 may have previously received and cached the beacon emission data 4326 (e.g., during the 2nd period science class on a previous school day). The wireless beacon app 4313 may perform one or more operations to provision the teacher device 4310 as a wireless beacon, and the teacher device 4310 may begin transmitting (e.g., broadcasting) the signal 4341. The identifier 4342 in the signal 4341 may include or may be based on the UUID, the major value, and/or the minor value assigned to the teacher device 4310.

When the student device 4350 enrolls in classes, the server 4320 may send, directly or via a push notification service, beacon detection data 4361 to the student device. In a particular embodiment, as shown in FIG. 43, the beacon detection data 4361 includes UUIDs, major values, and/or minor values that the student device 4350 is to scan for during different classes. When the student device 4350 enters the classroom 4302, the student device 4350 may begin scanning wireless frequencies for the signal 4341 including the identifier 4342. When the student device 4350 detects the signal 4341 including the identifier 4342, the student device 4350 may send the server 4320, the teacher device 4310, or both a message indicating that the student device 4350 is present in the classroom 4302. The system 4300 of FIG. 43 may thus enable automatically determining student classroom attendance based on a wireless beacon signal emitted by a teacher's device. In an illustrative embodiment, such data may be used for device management purposes, as further described herein.

If a student device is present in the classroom 4302, the student device may be bound by commands issued by the teacher device 4310, such as commands to restrict focus to a particular app, website, or eBook, commands to initiate screen mirroring, etc. Conversely, if a student device is not present in the classroom 4302 (e.g., the student is home sick), the student device may be automatically excluded by the server 4320 from app restrictions, website restrictions, eBook restrictions, screen mirroring actions, other group actions, etc. Thus, in the example of FIG. 43, student devices 4371 and 4372, which are outside of the classroom 4302, may be excluded from restrictions made by the teacher device 4310 during 2nd period science class.

In a particular embodiment, after student devices have detected the signal 4341 and confirmed their presence in the classroom 4302, the server 4320 may provide the teacher device 4310 a list of the student devices that are present in the classroom. GUIs presented by the teacher device 4310 (e.g., one or more of the GUIs of FIGS. 29-33) may include the student devices that are present and may exclude student devices that are absent from the classroom 4302. When the 2nd period science class ends, the teacher device 4310 may cease transmitting the signal 4341. The teacher device 4310 may transmit a different signal 4341 with a different identifier 4342 during the next class, which may or may not take place in the classroom 4302. Similarly, the student device 4350 may search for a different wireless beacon signal during the next class, which may or may not take place in the classroom 4302.

The system 4300 of FIG. 43 thus enables a manager device (e.g., the teacher device 4310) to control a managed device (e.g., the student device 4350) based on the managed device being present in a particular area (e.g., the classroom 4302 within which the teacher device 4310 is transmitting the wireless beacon signal 4341). Managed devices that are outside of the area may be excluded from focus restrictions and other group commands. It should be noted that in alternative embodiments, such operations may be performed in environments other than school classrooms. As an illustrative non-limiting example, the techniques described with reference to FIG. 43 may be used to provide documents and/or authorization to view such documents (e.g., a certificate or a decryption key) to devices that are located in a particular office building, in a particular conference room, etc.

In a particular embodiment, the systems and methods of the present disclosure enable a manager (e.g., a teacher) to group a sequence of commands together and create a "macro" that can be saved and executed on demand. For example, a teacher may define a macro that locks different groups of student devices to different apps and initiates screen mirroring, and the teacher may indicate that the macro is to be automatically executed at the start of class. The macro includes commands that focus a first group of student devices to an app, focus a second group of student devices to a different app, and initiate screen mirroring on a particular student device. When class starts, the teacher may select the macro for execution. Thus, the macro may enable the teacher to spend less time performing device management tasks during class, because the teacher may push a single button at the start of class to execute the macro instead of having to manually focus student device groups and initiate screen mirroring at the start of each class.

Alternatively, the macro can be configured to be automatically executed based on an event. For example, the teacher may configure the macro to automatically execute once class has started and it is determined which students are present in the classroom 4302 and which students are absent from the classroom 4302. At the designated time, the teacher device 4310 may communicate the commands of the macro to the server 4320. Alternatively, the macro may have previously been stored at the server 4320, and the server 4320 may transmit the notifications to the appropriate student devices at the designated time to restrict focus, initiate screen mirroring, etc.

It should be noted that the order of steps or operations described with reference to FIGS. 25-43 is to be considered illustrative, and not limiting. In alternate embodiments, the order of steps may be different. Further, one or more steps may be optional and/or replaced by other steps. In addition, one or more steps may be consolidated. For example, in particular embodiments the step 4202 may be optional (e.g., a rule may have been previously defined and the method 4200 may begin at 4204). In addition, one or more steps may be consolidated or performed at least partially concurrently.

In accordance with various embodiments of the present disclosure, one or more methods, functions, and modules described herein may be implemented by software programs executable by a computer system. Further, implementations can include distributed processing, component/object distributed processing, and/or parallel processing.

Particular embodiments can be implemented using a computer system executing a set of instructions that cause the computer system to perform any one or more of the methods or computer-based functions disclosed herein. A computer system may include a laptop computer, a desktop computer, a server computer, a mobile phone, a tablet computer, a media player, one or more other computing devices, or any combination thereof. The computer system may be connected, e.g., using a network, to other computer systems or peripheral devices. For example, the computer system or components thereof can include or be included within any one or more of the manager mobile device 2510 of FIG. 25, the MDM server 2520 of FIG. 25, a computing device or server corresponding to the push notification service 2530 of FIG. 25, the first managed mobile device 2540 of FIG. 25, the second managed mobile device 2550 of FIG. 25, the external display device 2570 of FIG. 25, the device management server 3620 of FIG. 36, a computing device or server corresponding to the push notification service 3630 of FIG. 36, the managed computing device 3650 of FIG. 36, the teacher device 4310 of FIG. 43, the student device 4350 of FIG. 43, the server 4320 of FIG. 43, an output device that displays a GUI generated by one of the devices described herein, an input device that receives user input responsive to the GUI, and/or a device that includes the output device and the input device.

In a networked deployment, the computer system may operate in the capacity of a server or as a client user computer in a server-client user network environment. The term "system" can include any collection of systems or sub-systems that individually or jointly execute a set, or multiple sets, of instructions to perform one or more computer functions.

In a particular embodiment, the instructions can be embodied in a computer-readable or a processor-readable device (e.g., storage device). The terms "computer-readable device" and "processor-readable device" include a single storage device or multiple storage devices, such as a centralized or distributed memory, and/or associated caches and servers that store one or more sets of instructions. The terms "computer-readable device" and "processor-readable device" also include any device that is capable of storing a set of instructions for execution by a processor or that cause a computer system to perform any one or more of the methods or operations disclosed herein. For example, a computer-readable or processor-readable device or storage device may include random access memory (RAM), flash memory, read-only memory (ROM), programmable read-only memory (PROM), erasable programmable read-only memory (EPROM), electrically erasable programmable read-only memory (EEPROM), registers, a hard disk, a removable disk, a disc-based memory (e.g., compact disc read-only memory (CD-ROM)), a solid-state memory, or any other form of storage device. A computer-readable or processor-readable device is not a signal.

In a particular embodiment, a method includes receiving, at a manager mobile device, a selection of a managed mobile device of a plurality of managed mobile devices. The method also includes displaying, at the manager mobile device, a list of applications executable by the managed mobile device, a list of websites accessible by the managed mobile device, or both. The method further includes receiving, at the manager mobile device, a selection of an application from the list of applications or a selection of a website from the list of websites. The method includes initiating, at the manager mobile device, transmission of data to the managed mobile device instructing the managed mobile device to restrict focus to the selected application or the selected website.

In another particular embodiment, a method includes receiving, at a managed mobile device, data that indicates that the managed mobile device is to scan for a particular wireless beacon signal during a particular time period. The method also includes, in response to detecting that the particular time period has started, scanning one or more wireless frequencies for the particular wireless beacon signal. The method further includes, in response to receiving the particular wireless beacon signal from a manager mobile device: transmitting a message from the managed mobile device that the managed mobile device has received the particular wireless beacon signal and receiving, based at least part on the message, a command (e.g., from the manager mobile device or from a mobile device management (MDM) server) instructing the managed mobile device to perform at least one operation.

In another particular embodiment, a computer-readable storage device stores instructions that, when executed by a processor, cause the processor to perform operations including receiving data at a mobile device management (MDM) server from a manager mobile device. The data identifies a managed mobile device of a plurality of managed mobile devices and a command selected at the manager mobile device for execution at the managed mobile device. The operations also include initiating transmission of a push notification to the managed mobile device to cause the managed mobile device to retrieve the command.

In another particular embodiment, an apparatus includes a processor and a memory storing instructions that, when executed by the processor, cause the processor to perform operations including receiving, at a manager mobile device, a selection of a managed mobile device of a plurality of managed mobile devices. The operations also include displaying, at the manager mobile device, a list of applications executable by the managed mobile device, a list of websites accessible by the managed mobile device, or both. The operations further include receiving, at the manager mobile device, a selection of an application from the list of applications or a selection of a website from the list of websites. The operations include initiating, from the manager mobile device, transmission of data to the managed mobile device instructing the managed mobile device to restrict focus to the selected application or the selected website.

Healthcare facilities are increasingly finding ways to improve patient experience. For example, a hospital may provide patient information, such as test results, via a website that a patient can access via a personal mobile device. A patient without a personal mobile device may be unable to access the patient information via the website. Maintaining confidentiality of sensitive patient information is a priority for healthcare facilities. Having hospital administrators (e.g., information technology (IT) professionals) delete sensitive information from each mobile device provided to a patient before giving the same mobile device to another patient is expensive in terms of time and human resources, and also likely susceptible to human error. Even a small risk of a hospital administrator failing to delete sensitive patient information from a mobile device before providing the mobile device to another patient may be prohibitive in a healthcare setting.

Systems and methods of managing mobile devices in a healthcare facility are disclosed. Mobile devices are available at a healthcare facility for patient use. The mobile devices are assigned to various locations at the healthcare facility (e.g., a hospital, a clinic, or both). For example, a mobile device may be assigned to a hospital bed, a hospital room, or both. To illustrate, the mobile device may be attached to the hospital bed or a wall of the hospital room with a cable. A healthcare system maintains a mapping between a location and an assigned mobile device. For example, location-to-device mapping data indicates a mapping between a location identifier (ID) of the location and a device ID of the assigned mobile device. A user (e.g., a hospital administrator) may assign the hospital bed to a patient when the patient is admitted to the hospital or when the patient is transferred from another location in the hospital. For example, the healthcare system includes a healthcare management system. The user provides user input to the healthcare management system indicating that the location (e.g., the hospital bed) is assigned to the patient on admittance, or that the patient is transferred to the location from another location of the healthcare facility. Alternatively, the user may provide input to the healthcare system indicating that the patient is no longer assigned to the location. For example, the user provides user input to the healthcare management system indicating that the patient is transferred from the location to another location of the healthcare facility or that the patient is discharged from the healthcare facility. The healthcare management system is configured to generate, based on the user input, a first message indicating that the patient is assigned to a location upon admittance, a message indicating that the patient is transferred from one location to another location of the healthcare facility, or a message indicating that the patient is discharged from the healthcare facility.

The healthcare system includes a healthcare listener coupled to the healthcare management system and to a mobile device management (MDM) server. The healthcare listener is configured to receive messages from the healthcare management system. The MDM server is configured to determine whether a patient is admitted, transferred, or discharged based on the messages received by the healthcare listener. For example, the MDM server may query the healthcare listener to determine which messages have been received by the healthcare listener. The healthcare listener sends a second message to the MDM server indicating that the healthcare listener received a first message from the healthcare management system. In a particular implementation, the healthcare listener sends the second message to the MDM server in response to receiving an update request from the MDM server. For example, the MDM server sends the update request to the healthcare listener at particular time intervals (e.g., periodically). Alternatively, or in addition, the healthcare listener may send the second message to the MDM server independently of receiving an update request from the MDM server. For example, the healthcare listener sends a message update (e.g., the second message) to the MDM server in response to receiving each message (e.g., the first message) from the healthcare management system. As another example, the healthcare listener sends a message update (e.g., the second message) to the MDM server at particular time intervals. The second message may correspond to one or more messages received by the healthcare listener from the healthcare management system during a particular time window. The second message indicates that the patient is assigned to a location upon admittance, that the patient is transferred from one location to another location of the healthcare facility, or that the patient is discharged from the healthcare facility.

The MDM server is configured to manage mobile devices of the healthcare facility. The MDM server determines that a patient is assigned to a location (e.g., the hospital bed) in response to determining that the second message indicates that the patient has been assigned to the location upon admittance to the healthcare facility or that the patient has been transferred to the location. The MDM server, in response to determining that the patient is assigned to the location, identifies a mobile device assigned to the location based on the location-to-device mapping data. The MDM server may initiate provisioning of data (and applications) associated with the patient to the identified mobile device. The data includes patient records, medical information, application data, or a combination thereof. For example, the patient records may indicate names of hospital staff assigned to treat the patient. The application data may correspond to an entertainment application (e.g., a gaming application) that is targeted to a user characteristic (e.g., age, gender, education, profession, etc.) associated with the patient. The application data includes the application (e.g., an executable file), an identifier of the application, a universal resource locator (URL) associated with the application, or a combination thereof. The medical information may be related to a symptom or a diagnosis associated with the patient.

The MDM server determines that a patient is no longer assigned to the location (e.g., the hospital bed) in response to determining that the second message indicates that the patient has been discharged from the healthcare facility or that the patient has been transferred from the location to another location (e.g., another hospital bed) at the healthcare facility. The MDM server is configured to, in response to determining that the patient is no longer assigned to the location, send a reset command to the mobile device. The reset command indicates that personally identifiable information associated with the patient, protected health information associated with the patient, or both, is to be deleted from the mobile device. For example, the reset command may correspond to a factory reset command and may indicate that all user data is to be deleted from the mobile device. The mobile device may delete the user data (e.g., including information associated with the patient) in response to receiving the reset command.

A push notification service is coupled to the MDM server and the mobile device. The push notification service corresponds to a trusted source for the mobile device. For example, the push notification service may be associated with (e.g., provided by) a manufacturer of the mobile device. The MDM server is configured to send a notification request to the push notification service in response determining that the mobile device is assigned to the location. The push notification service is configured to send a push notification to the mobile device in response to receiving the notification request from the MDM server. The push notification may indicate that the mobile device is to check-in with the MDM server. The mobile device may send a message (e.g., a check-in message) to the MDM server in response to receiving the push notification. The MDM server may send the data associated with the patient to the mobile device based on determining that the patient is assigned to the location and based on receiving the message from the mobile device. In a particular example, the MDM server sends the reset command to the mobile device prior to sending the data to the mobile device. To illustrate, the MDM server may send the reset command to the mobile device to "clear" the mobile device prior to sending the data to the mobile device. The MDM server may send the reset command to the mobile device based on determining that the patient is no longer assigned to the location and based on receiving the message from the mobile device.

In a particular aspect, a method includes receiving, at a mobile device management (MDM) server, a message indicating a location at a healthcare facility. The method also includes identifying, at the MDM server, a mobile device assigned to the location. The method further includes sending a remote reset command from the MDM server to the mobile device. For example, the MDM server sends a notification request to a push notification service in response to determining that the message indicates that the patient has been transferred from the location or discharged from the healthcare facility. The push notification service sends a push notification to the mobile device in response to receiving the notification request from the MDM server. The mobile device sends a message to the MDM server in response to receiving the push notification from the push notification service. The MDM server sends the remote reset command to the mobile device in response to receiving the message from the mobile device.

In another particular aspect, a computer-readable storage device stores instructions that, when executed by a processor, cause the processor to perform operations including receiving a message including a patient identifier, the message indicating a location at a healthcare facility. The operations also include identifying a mobile device assigned to the location. The operations further include initiating provision of data associated with the patient identifier to the mobile device. For example, the data may be provided to the mobile device based at least in part on determining that the message indicates that the patient has been assigned to the location upon admittance to the healthcare facility or that the patient has been transferred to the location from another location of the healthcare facility.

In another particular aspect, a computer system includes a healthcare listener device and a mobile device management (MDM) server. The healthcare listener device is configured to receive a first message indicating a location at a healthcare facility. The healthcare listener device is also configured to send a second message to the MDM server indicating the location. The MDM server is configured, in response to receiving the second message from the healthcare listener device, to identify a mobile device assigned to the location, and to send a remote reset command to the mobile device.

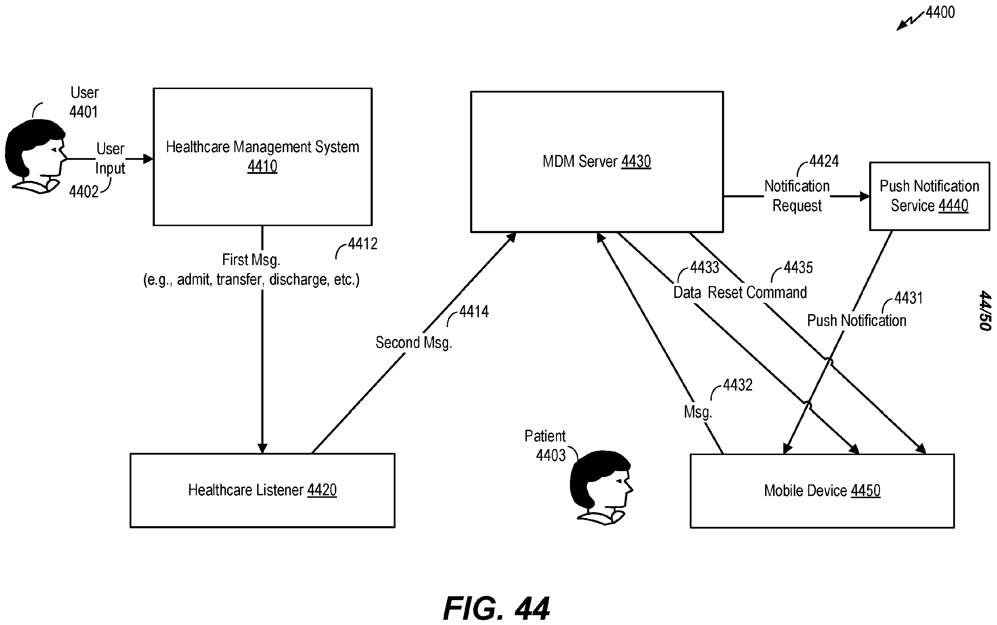

Referring to FIG. 44, a system is shown and generally designated 4400. The system 4400 (e.g., a computer system) includes a healthcare management system 4410 coupled, via a healthcare listener 4420, to a MDM server 4430. The MDM server 4430 is coupled to a push notification service 4440 and to a mobile device 4450. The healthcare management system 4410 is configured to generate admit-discharge-transfer (ADT) messages indicating a patient status. For example, the healthcare management system 4410 generates a message when a patient is admitted to a healthcare facility, a message when the patient is transferred from one location to another location at the healthcare facility, a message when the patient is discharged from the healthcare facility, or a combination thereof.

The healthcare listener 4420 is configured to track the ADT messages. For example, the healthcare listener 4420 receives the messages from the healthcare management system 4410. The healthcare listener 4420 may store data in a memory indicating that the messages have been received. The MDM server 4430 may be configured to query the healthcare listener 4420 to determine whether any ADT messages have been received from the healthcare management system 4410. The MDM server 4430 is configured to, in response to determining that an ADT message has been received from the healthcare management system 4410, send a reset command 4435 to the mobile device 4450 or initiate provisioning of data 4433 to the mobile device 4450.

During operation, a user 4401 (e.g., a healthcare administrator) admits a patient 4403 (e.g., "Tom Snowman") to a healthcare facility. The user 4401 provides user input 4402 to the healthcare management system 4410 indicating that the patient 4403 has been admitted and that the patient 4403 has been assigned to a particular location at the healthcare facility. The particular location includes a bed, a room, a floor, a building, a unit, a facility, a section, or a combination thereof. For example, the particular location may correspond to a particular bed (e.g., Bed number 2) in a particular unit (e.g., Coronary Care Unit) of a particular building (e.g., Building A) of the healthcare facility. As another example, the particular location may correspond to a particular room (e.g., Room 2) of a particular section (e.g., Emergency Room) of the healthcare facility. The healthcare management system 4410 generates a first message 4412 indicating that the patient 4403 is assigned to the particular location.

The first message 4412 may correspond to an ADT message. A value (e.g., "ADT_A01") of a first field of the first message 4412 may indicate that the first message 4412 corresponds to an admit message. The first field of the first message 4412 may include a message header field, a message type field, an event type field, an event type code field, or a combination thereof. A value (e.g., "460001055") of a second field of the first message 4412 identifies the patient 4403. The second field may include a patient identification field, a patient ID list field, a patient name field, a patient alias field, a social security number (SSN) field, a driver's license number field, or a combination thereof. A value (e.g., "CCU02") of a third field of the first message 4412 may indicate the particular location (e.g., Bed number 2 of a Coronary Care Unit). The third field may include a bed status update field, a patient visit field, an assigned patient location field, or a combination thereof.

The healthcare listener 4420 receives the first message 4412. The healthcare listener 4420 sends a second message 4414 to the MDM server 4430. The healthcare listener 4420 sends the second message 4414 to the MDM server 4430 in response to receiving the first message 4412 from the healthcare management system 4410. In a particular aspect, the healthcare listener 4420 sends the second message 4414 to the MDM server 4430 in response to receiving an update request from the MDM server 4430. For example, the healthcare listener 4420 may maintain a record of messages received from the healthcare management system 4410. The healthcare listener 4420, in response to receiving the first message 4412 at a first time, adds an entry in memory indicating that the first message 4412 has been received from the healthcare management system 4410 at the first time. The MDM server 4430 may send the update request to the healthcare listener 4420 at particular time intervals. The particular time intervals may be based on a configuration setting, a default value, user input, or a combination thereof. The healthcare listener 4420, in response to receiving an update request from the MDM server 4430, generates the second message 4414 based on the entry and sends the second message 4414 to the MDM server 4430.

In a particular aspect, the healthcare listener 4420 sends the second message 4414 to the MDM server 4430 independently of receiving an update request from the MDM server 4430. For example, the healthcare listener 4420 sends a message update (e.g., the second message 4414) to the MDM server 4430 in response to receiving each message (e.g., the first message 4412) from the healthcare management system 4410 and determining that the message has a particular message type (e.g., admit, transfer, or discharge). In this example, the second message 4414 corresponds to a single message (e.g., the first message 4412) received from the healthcare management system 4410. As another example, the healthcare listener 4420 sends a message update (e.g., the second message 4414) to the MDM server 4430 at particular time intervals (e.g., periodically). In this example, the second message 4414 corresponds to one or more messages received by the healthcare listener 4420 from the healthcare management system 4410 during a particular time window.

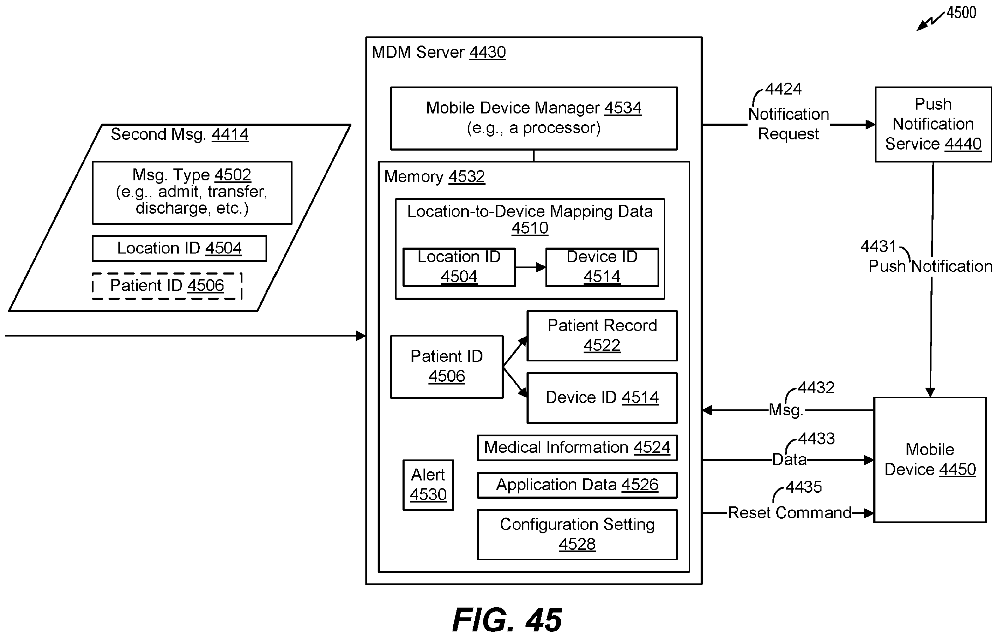

The second message 4414 indicates that the patient 4403 is assigned to the particular location. For example, the second message 4414 indicates that the patient 4403 is assigned to the particular location upon admittance to the healthcare facility or that the patient 4403 is transferred to the particular location from another location at the healthcare facility. In a particular aspect, each of the first message 4412 and the second message 4414 includes a patient ID of the patient 4403, a location ID of the particular location, a message type (e.g., admit, transfer, or discharge) of the first message 4412, or a combination thereof, as further described with reference to FIG. 45. For example, each of the first message 4412 and the second message 4414 includes the message type (e.g., discharge) of the first message 4412 and the patient ID of the patient 4403. In a particular implementation, each of the first message 4412 and the second message 4414 includes the location ID of the particular location (e.g., a hospital bed) indicating that the patient 4403 is discharged from the particular location of the healthcare facility. In an alternative implementation, the location ID is absent from the first message 4412, the second message 4414, or both. In this implementation, each of the first message 4412 and the second message 4414 indicates that the patient 4403 is discharged from the healthcare facility. Each of the first message 4412 and the second message 4414 may implicitly indicate that the patient 4403 is discharged from a previously assigned location (e.g., the particular location) without explicitly including the location ID.

The MDM server 4430 determines that the mobile device 4450 is assigned to the particular location, as further described with reference to FIG. 45. For example, the MDM server 4430 may determine that location-to-device mapping data indicates that the location ID of the particular location corresponds to (e.g., is assigned to) a device ID of the mobile device 4450.

The MDM server 4430 may send a notification request 4424 to the push notification service 4440 to initiate transmission of a push notification 4431 to the mobile device 4450. The push notification service 4440 sends the push notification 4431 to the mobile device 4450 in response to receiving the notification request 4424 and determining that the notification request 4424 indicates the mobile device 4450. The push notification 4431 instructs the mobile device 4450 to check-in with the MDM server 4430. For example, the push notification service 4440 may be a trusted source for the mobile device 4450 and the push notification 4431 may indicate that the MDM server 4430 is a trusted device. The MDM server 4430 may receive a message 4432 from the mobile device 4450 responsive to the push notification 4431. For example, the mobile device 4450 sends the message 4432 to the MDM server 4430 in response to receiving the push notification 4431. The MDM server 4430 may, in response to receiving the message 4432, send data 4433 to the mobile device 4450, as further described with reference to FIG. 45. The data 4433 is associated with the patient 4403, as further described with reference to FIG. 45. For example, the data 4433 includes at least one of a patient record, medical information, application data, or a configuration setting that is associated with the patient 4403.

In a particular aspect, the MDM server 4430 sends the reset command 4435 to the mobile device 4450 prior to sending the data 4433 to the mobile device 4450. The reset command 4435 may correspond to a factory reset command. To improve patient confidentiality (e.g., patient privacy), the mobile device 4450 may delete user data stored at the mobile device 4450 in response to receiving the reset command 4435. The user data may correspond to a user (e.g., a patient) that previously used the mobile device 4450. The mobile device 4450 may receive the data 4433 from the MDM server 4430 subsequent to deleting the user data stored at the mobile device 4450.

In a particular aspect, the healthcare management system 4410 generates the first message 4412 in response to determining that the patient 4403 is transferred from a first location to a second location. A value (e.g., "ADT_A02") of a first field of the first message 4412 may indicate that the first message 4412 corresponds to a transfer message. A value (e.g., "30001055") of a second field of the first message 4412 may identify the patient 4403. A value (e.g., "CCU02") of a third field of the first message 4412 may indicate the first location (e.g., Bed number 2 of a Coronary Care Unit). The third field may include a bed status update field, a patient visit field, a prior location field, or a combination thereof. A value (e.g., "PTU05") of a fourth field of the first message 4412 may indicate the second location (e.g., Room number 5 of a Patient Treatment Unit). The fourth field may include a bed status update field, a patient visit field, an assigned patient location field, or a combination thereof.

The MDM server 4430 may send the reset command 4435 to the mobile device 4450 in response to receiving the message 4432 indicating that the patient 4403 is transferred from the first location, determining that the mobile device 4450 is assigned to the first location, determining that the mobile device 4450 is assigned to the patient 4403, or a combination thereof. The reset command 4435 may indicate that personally identifiable information associated with the patient 4403, protected health information associated with the patient 4403, or both, are to be deleted from the mobile device 4450. The mobile device 4450 may, in response to receiving the reset command 4435, delete the data 4433 stored at the mobile device 4450. Alternatively, the MDM server 4430 may, in response to receiving the message 4432 indicating that the patient 4403 is transferred to the second location and that the mobile device 4450 is assigned to the second location, send the data 4433 to the mobile device 4450. In a particular aspect, the MDM server 4430 sends the reset command 4435 to the mobile device 4450 prior to sending the reset command 4435 to the mobile device 4450. The mobile device 4450 may, in response to receiving the reset command 4435, delete user data corresponding to a previous user of the mobile device 4450.

In a particular aspect, the healthcare management system 4410 generates the first message 4412 in response to determining that the patient 4403 is discharged from a particular location (e.g., the hospital bed or the hospital room) or from the healthcare facility. A value (e.g., "ADT_A03") of a first field of the first message 4412 indicates that the first message 4412 corresponds to a discharge message. A value (e.g., "30001055") of a second field of the first message 4412 identifies the patient 4403. A value (e.g., "ICU10") of a third field of the first message 4412 may indicate the particular location (e.g., Bed 10 of an Intensive Care Unit). The third field may include a bed status update field, a patient visit field, a prior location field, or a combination thereof.

The MDM server 4430 may send the reset command 4435 to the mobile device 4450 in response to receiving the message 4432 indicating that the patient 4403 is discharged from the particular location and that the mobile device 4450 is assigned to the particular location. Alternatively, the MDM server 4430 may send the reset command 4435 to the mobile device 4450 in response to receiving the message 4432 indicating that the mobile device 4450 was assigned to the patient 4403 and that the patient 4403 is discharged.

The system 4400 may thus enable the patient 4403 to access sensitive information or targeted information using the mobile device 4450 provided by the healthcare facility. To improve patient privacy, the information (e.g., the data 4433) may be deleted from the mobile device 4450 once the particular location (e.g., the hospital bed or the hospital room) is no longer assigned to the patient 4403. For example, the MDM server 4430 may send the reset command 4435 instructing the mobile device 4450 to delete patient data (e.g., the data 4433) in response to a determination that the patient will no longer be associated with the mobile device 4450.

Referring to FIG. 45, a system is disclosed and generally designated 4500. The system 4500 may correspond to the system 4400. For example, the system 4500 includes the MDM server 4430 coupled to the push notification service 4440 and to the mobile device 4450. The MDM server 4430 includes a mobile device manager 4534 (e.g., a processor) coupled to a memory 4532.

In a particular aspect, the mobile device manager 4534 corresponds to a processor configured to perform one or more operations described herein. In a particular aspect, the mobile device manager 4534 corresponds to instructions that, when executed by a processor, cause the processor to perform one or more operations described herein. In a particular aspect, the mobile device manager 4534 corresponds to a computer-readable storage device that stores instructions that are executable to perform one or more operations described herein.

The mobile device manager 4534 may be configured to send the reset command 4435, the data 4433, or both, to the mobile device 4450, as described herein. The memory 4532 may be configured to store location-to-device mapping data 4510. The location-to-device mapping data 4510 may indicate that one or more mobile devices are assigned to one or more locations at the healthcare facility. For example, the location-to-device mapping data 4510 indicates that a device ID 4514 of the mobile device 4450 is assigned to a location ID 4504 of a particular location of the healthcare facility. The device ID 4514 may include a media access control (MAC) address of the mobile device 4450, an internet protocol (IP) address of the mobile device 4450, or another device ID.

In a particular aspect, the MDM server 4430 receives the location-to-device mapping data 4510 from another device. In an alternative aspect, the MDM server 4430 generates the location-to-device mapping data 4510. For example, the user 4401 of FIG. 44 (or another user) may assign the mobile device 4450 to the particular location (e.g., a hospital bed or a hospital room). The MDM server 4430 may, in response to receiving a user input indicating that the mobile device 4450 is assigned to the particular location, generate (or update) the location-to-device mapping data 4510 indicating that the mobile device 4450 is assigned to the particular location.

The memory 4532 is configured to store patient data. For example, the memory 4532 stores a patient record 4522 of the patient 4403. The memory 4532 may indicate that the patient record 4522 is assigned to the patient 4403 having a patient ID 4506. The memory 4532 may be configured to store medical information 4524. The medical information 4524 may be associated with a particular symptom (e.g., high cholesterol), a particular diagnosis (e.g., heart disease), or both. The memory 4532 may be configured to store application data 4526. The application data 4526 corresponds to an application, such as an entertainment application, an educational application, a healthcare application, or a combination thereof. The application data 4526 includes the application (e.g., an executable file), an identifier of the application, a universal resource locator (URL) associated with the application, or a combination thereof. The memory 4532 may include a configuration setting 4528. The configuration setting 4528 may include a username, a password, or both.

During operation, as described with reference to FIG. 44, the MDM server 4430 receives the second message 4414 from the healthcare listener 4420. The second message 4414 indicates a message type 4502 (e.g., admit, transfer, or discharge), a location ID 4504, a patient ID 4506 of the patient 4403, or a combination thereof. For example, the second message 4414 is based on the first message 4412. The healthcare listener 4420 may determine the message type 4502 based on a value of a first field of the first message 4412. For example, a first value (e.g., "ADT_01"), a second value (e.g., "ADT_02"), and a third value (e.g., "ADT_03") of the first field corresponds to a first message type (e.g., an admit message type), a second message type (e.g., a transfer message type), and a third message type (e.g., a discharge message type), respectively. The healthcare listener 4420 may determine the patient ID 4506 based on a value (e.g., "30001055") of a second field of the first message 4412.

The healthcare listener 4420 may determine the location ID 4504 based on a value of a third field of the first message 4412 or a value of a fourth field of the first message 4412. For example, the healthcare listener 4420, in response to determining that the first message 4412 corresponds to an admit message, determines the location ID 4504 based on an assigned patient location field of the first message 4412. The healthcare listener 4420, in response to determining that the first message 4412 corresponds to a discharge message, determines the location ID 4504 based on a prior location field of the first message 4412.

The healthcare listener 4420, in response to determining that the first message 4412 corresponds to a transfer message, determines a first location ID based on a prior location field of the first message 4412, a second location ID based on an assigned patient location field of the first message 4412, or both. The first message 4412 may indicate that the patient 4403 is transferred from a first location corresponding to the first location ID to a second location corresponding to the second location ID. The healthcare listener 4420 generates the second message 4414 to indicate the first location ID, the second location ID, or both. The location ID 4504 may correspond to the first location ID or the second location ID.

The mobile device manager 4534 may determine whether the patient 4403 is assigned to a particular location based on the second message 4414. For example, the mobile device manager 4534 determines that the patient 4403 is assigned to the particular location in response to a determination that the message type 4502 indicates an admit message and that the second message 4414 indicates that the patient 4403 (corresponding to the patient ID 4506) is assigned to the particular location based on the location ID 4504. The mobile device manager 4534, in response to determining that the patient 4403 is assigned to the particular location, identifies one or more mobile devices assigned to the particular location. For example, the mobile device manager 4534 determines that the mobile device 4450 is assigned to the particular location in response to determining that the location-to-device mapping data 4510 indicates that the location ID 4504 corresponds to the device ID 4514.

The mobile device manager 4534 may, in response to determining that the location ID 4504 corresponds to the device ID 4514, store data in the memory 4532 indicating that the patient ID 4506 corresponds to the device ID 4514. For example, the mobile device manager 4534 stores data in the memory 4532 indicating that the mobile device 4450 is assigned to the patient 4403 of FIG. 44.

The mobile device manager 4534 may send the notification request 4424 to the push notification service 4440 in response to determining that the location ID 4504 corresponds to the device ID 4514. The notification request 4424 includes the device ID 4514. The push notification service 4440 sends the push notification 4431 to the mobile device 4450 in response to receiving the notification request 4424 from the MDM server 4430 and determining that the notification request 4424 indicates the device ID 4514. The push notification 4431 may identify the MDM server 4430. For example, the push notification 4431 indicates an address (e.g., a MAC address, an IP address, or both) of the MDM server 4430. The mobile device 4450 sends the message 4432 to the MDM server 4430 in response to receiving the push notification 4431 and determining that the push notification 4431 identifies the MDM server 4430. The push notification service 4440 may be a trusted source for the mobile device 4450. The mobile device 4450 may communicate with the MDM server 4430 in response to determining that the push notification 4431 from the push notification service 4440 identifies the MDM server 4430.

The mobile device manager 4534 generates the data 4433 in response to receiving the second message 4414 from the healthcare listener 4420 of FIG. 44, receiving the message 4432 from the mobile device 4450, or both. The data 4433 may include the patient record 4522, the medical information 4524, the application data 4526, the configuration setting 4528, or a combination thereof. The mobile device manager 4534 retrieves the patient record 4522 based on the patient ID 4506. The patient record 4522 may indicate (or identify) medical personnel assigned to care for the patient 4403, a medication prescribed to the patient 4403, a test result of the patient 4403, a message for the patient 4403, a symptom (e.g., high cholesterol) indicated by the patient 4403, a diagnosis (e.g., heart disease) of the patient 4403, a profession (e.g., a stunt person) of the patient 4403, a habit (e.g., a smoker) of the patient 4403, an educational level of the patient 4403, the age of the patient 4403, or a combination thereof.

The mobile device manager 4534 may retrieve (or identify) the medical information 4524 based on the patient record 4522. For example, the mobile device manager 4534 retrieves the medical information 4524 corresponding to the symptom, the diagnosis, the profession, the habit, the educational level, the age, or a combination thereof, indicated by the patient record 4522. The medical information 4524 may include educational material that is selected by a medical professional and that is targeted to the patient 4403.

The mobile device manager 4534 may select the application data 4526 based on the patient record 4522. For example, the mobile device manager 4534 selects an application based on the age, the educational level, the symptom, the diagnosis, the profession, the habit, or a combination thereof, indicated by the patient record 4522. The application is targeted to the patient 4403. For example, the application includes computer games that are targeted to users of the same age as the patient 4403. The application data 4526 corresponds to the selected application. For example, the application data 4526 includes the selected application, an identifier of the selected application, a download URL of the selected application, or a combination thereof. The download URL indicates a location from which the selected application is retrievable. The location may be associated with the MDM server 4430 or another device.

In a particular aspect, the application data 4526 includes a manifest URL of a manifest file. The manifest URL indicates a location of the manifest file, and the manifest file indicates the download URL of the selected application. The mobile device manager 4534 generates (or selects) the manifest file based on the patient record 4522. For example, the mobile device manager 4534 selects the application based on the patient record 4522 and generates the manifest file to indicate the selected application. As another example, the mobile device manager 4534 selects the manifest file based on the age, the educational level, the symptom, the diagnosis, the profession, the habit, or a combination thereof, indicated by the patient record 4522. The manifest file indicates one or more applications targeted to the patient 4403.

The mobile device manager 4534 may generate the configuration setting 4528 based on the patient ID 4506, the patient record 4522, or both. For example, the mobile device manager 4534 generates the configuration setting 4528 to indicate the patient ID 4506, the age, the educational level, the symptom, the diagnosis, the profession, the habit, or a combination thereof.

The mobile device manager 4534 may send the data 4433 to the mobile device 4450 in response to receiving the message 4432 from the mobile device 4450. In an alternative aspect, the mobile device manager 4534 sends the data 4433 independently of receiving the message 4432 from the mobile device 4450. In this aspect, the MDM server 4430 may be a trusted source for the mobile device 4450 and the mobile device 4450 may accept the data 4433 from the MDM server 4430 independently of having sent the message 4432 to the MDM server 4430.

In a particular aspect, the data 4433 includes the patient record 4522. In this aspect, the mobile device 4450 enables the patient 4403 to access the patient record 4522. For example, the patient 4403 uses the mobile device 4450 to identify the medical personnel assigned to care for the patient 4403. As another example, the patient 4403 uses the mobile device 4450 to verify whether the patient record 4522 includes accurate information about the patient 4403. To illustrate, the patient 4403 may confirm whether allergy information of the patient 4403 is accurately indicated in the patient record 4522. The patient 4403 may inform hospital personnel in response to detecting inaccurate information in the patient record 4522.

In a particular aspect, the data 4433 includes the medical information 4524. In this aspect, the mobile device 4450 enables the patient 4403 to access the medical information 4524. For example, the patient 4403 uses the mobile device 4450 to review the medical information 4524 associated with a diagnosis of the patient 4403. Having access to the medical information 4524 enables the patient 4403 to make well-informed healthcare decisions.

In a particular aspect, the data 4433 includes the application data 4526. In this aspect, the mobile device 4450 enables the patient 4403 to access an application corresponding to the application data 4526. For example, the application data 4526 includes the application and the mobile device 4450 stores (e.g., installs) the application at the mobile device 4450. As another example, the mobile device 4450 retrieves the application based on an application identifier (e.g., URL) indicated by the application data 4526. The application identifier is associated with the MDM server 4430 or another device. In a particular example, the application data 4526 includes a manifest URL indicating a location of a manifest file. In this example, the MDM server 4430 may send the application data 4526 as an install application command to the mobile device 4450. The install application command may indicate the manifest URL. The mobile device 4450 retrieves the manifest file based on the manifest URL. The manifest file indicates the application identifier (e.g., URL). The mobile device 4450 retrieves the application based on the application identifier indicated by the manifest file. In a particular aspect, the manifest file indicates multiple application identifiers associated with multiple applications. The mobile device 4450 retrieves the applications based on the application identifiers. The application data 4526 may correspond to one or more targeted applications. For example, the patient 4403 uses the mobile device 4450 to play computer games (e.g., chess) that are targeted to users of the same age as the patient 4403.

In a particular aspect, the data 4433 includes the configuration setting 4528. In this aspect, the mobile device 4450 is configured for the patient 4403 based on the configuration setting 4528. For example, the mobile device 4450 provides a username and a password to a web-based application based on the configuration setting 4528, and the patient 4403 accesses the web-based application via the mobile device 4450 without having to type the username and the password.

In a particular aspect, the mobile device manager 4534 sends the reset command 4435 to the mobile device 4450 prior to sending the data 4433 to the mobile device 4450. The mobile device 4450 may, in response to receiving the reset command 4435, delete user data stored at the mobile device 4450. For example, the mobile device 4450 deletes a patient record, medical information, application data, an application, a configuration, or a combination thereof, associated with a previous user of the mobile device 4450.

The mobile device manager 4534 may thus enable the mobile device 4450 to be automatically set up for use by the patient 4403 in response to receiving a message (e.g., the second message 4414 based on the first message 4412 of FIG. 44) indicating that the patient 4403 is admitted to the healthcare facility. The functionality to automatically set up mobile devices may be added to the system 4400 independently of modifications to the healthcare management system 4410. The healthcare management system 4410 may include a legacy healthcare management system, an independently managed healthcare management system, or both.

In a particular aspect, the mobile device manager 4534 generates an alert 4530 (e.g., a message) in response to determining that the message 4432 has not been received from the mobile device 4450 within a particular duration of sending the notification request 4424 to the push notification service 4440. The particular duration may correspond to a configuration setting, a default value, a user input, or a combination thereof. The mobile device manager 4534 may send the alert 4530 to a device, a user, or both. For example, the mobile device manager 4534 sends the alert 4530 to an electronic mail (e-mail) account of the user 4401 (or another healthcare administrator).

The user 4401 (or another healthcare administrator) may check on the mobile device 4450 in response to receiving the alert 4530. For example, if the mobile device 4450 is not powered up, the user 4401 powers up the mobile device 4450. The mobile device 4450 may receive the push notification 4431 from the push notification service 4440 subsequent to powering up. As another example, if the mobile device 4450 is not working properly, the user 4401 assigns another mobile device to the particular location (e.g., hospital bed or hospital room) that corresponds to the location ID 4504. In this example, the mobile device manager 4534, in response to receiving updated location-to-device mapping data indicating that a second mobile device having a second device ID is assigned to the particular location corresponding to the location ID 4504, sends an updated notification request 4424 to the push notification service 4440 indicating the second device ID. The push notification service 4440 sends the push notification 4431 to the second mobile device corresponding to second device ID. The second mobile device sends the message 4432 to the MDM server 4430 and receives the data 4433 from the MDM server 4430.

In a particular aspect, the mobile device manager 4534 determines that the patient 4403 is assigned to a particular location in response to determining that the message type 4502 indicates a transfer message and that the second message 4414 indicates that the patient 4403 (e.g., "Tom Snowman") corresponding to the patient ID 4506 is transferred to a particular location corresponding to the location ID 4504. Operations performed by the mobile device manager 4534 in response to determining that the patient 4403 is transferred to the particular location may include one or more operations performed by the mobile device manager 4534 in response to determining that the patient 4403 is admitted to the healthcare facility and assigned to the particular location.

In a particular aspect, the mobile device manager 4534 determines, based on the second message 4414, that the patient 4403 is no longer assigned to a particular location. For example, the mobile device manager 4534 determines that the patient 4403 is no longer assigned to a particular location in response to determining that the message type 4502 indicates a transfer message and that the second message 4414 indicates that the patient 4403 is transferred from the particular location. As another example, the mobile device manager 4534 determines that the patient 4403 is no longer assigned to a particular location in response to determining that the message type 4502 indicates a discharge message.

Operations performed by the mobile device manager 4534 in response to determining that the patient 4403 is discharged may include one or more operations performed by the mobile device manager 4534 in response to determining that the patient 4403 is transferred from the particular location. For example, the mobile device manager 4534 identifies the mobile device 4450 in response to determining that the patient 4403 is no longer assigned to a particular location. In a particular aspect, the second message 4414 indicates the location ID 4504 of the particular location, and the mobile device manager 4534 identifies the mobile device 4450 based on the location-to-device mapping data 4510. In an alternative aspect, the mobile device manager 4534 identifies the mobile device 4450 in response to determining that data stored in the memory 4532 indicates that the mobile device 4450 having the device ID 4514 is assigned to the patient 4403 having the patient ID 4506.

The mobile device manager 4534, in response to identifying the mobile device 4450, sends the reset command 4435 to the mobile device 4450. The mobile device 4450 may, in response to receiving the reset command 4435, delete user information associated with the patient 4403 stored at the mobile device 4450. For example, the mobile device 4450, in response to receiving the reset command 4435, deletes the data 4433 stored at the mobile device 4450. As another example, the mobile device 4450, in response to receiving the reset command 4435, performs a factory reset of the mobile device 4450. Performing the factory reset may restore the mobile device 4450 to original manufacturer settings. For example, the mobile device 4450 performs the factory reset by deleting all user data, including the data 4433, stored at the mobile device 4450. The mobile device manager 4534 may update the memory 4532 to remove the association between the patient ID 4506 and the device ID 4514.

The system 4500 thus enables automatic set up of the mobile device 4450 for use by the patient 4403 while the patient 4403 is assigned to a particular location corresponding to the mobile device 4450. The system 4500 also improves patient privacy by enabling automatic deletion of user data of the patient 4403 stored at the mobile device 4450 once the patient 4403 is no longer assigned to the particular location. For example, the mobile device manager 4534 sends the reset command 4435 instructing the mobile device 4450 to delete patient data (e.g., the data 4433) in response to a determination that the patient will no longer be associated with the mobile device 4450.

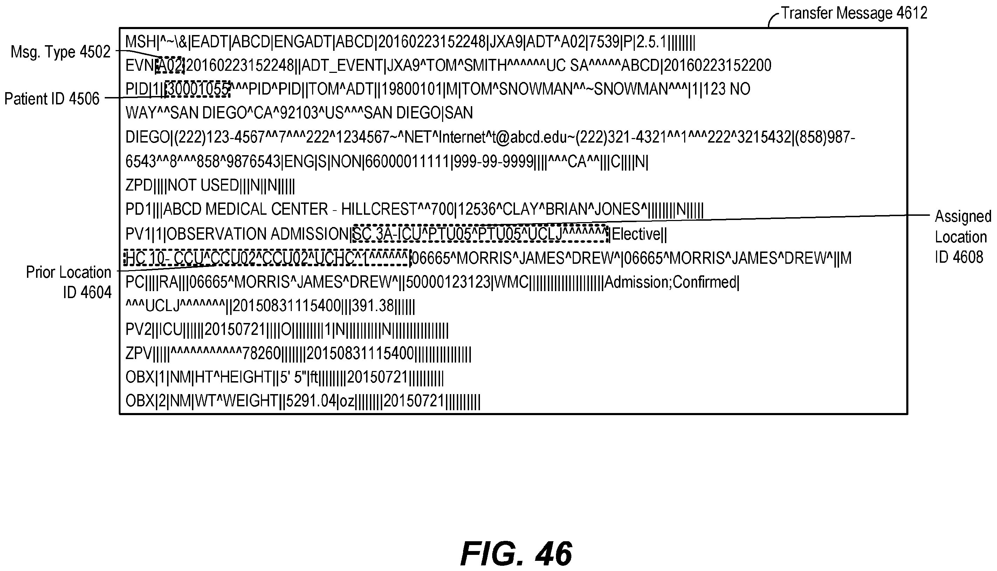

Referring to FIG. 46, a transfer message is shown and generally designated 4612. The transfer message 4612 may be generated by the healthcare management system 4410, the healthcare listener 4420, the system 4400 of FIG. 44, or a combination thereof. The transfer message 4612 may correspond to the first message 4412, the second message 4414 of FIG. 44, or both. The transfer message 4612 may comply with an ADT message specification. In a particular aspect, the transfer message 4612 complies with a health level seven (HL7) format. For example, the transfer message 4612 complies with a HL7 version 1 format, a HL7 version 2 format, a HL7 version 3 format, a HL7 fast healthcare interoperability resources (FHIR) format, another HL7 format, or a combination thereof.

The transfer message 4612 indicates the message type 4502 (e.g., "A02"). A value (e.g., "A02") of the message type 4502 indicates that the transfer message 4612 corresponds to a transfer message. The transfer message 4612 indicates the patient ID 4506 (e.g., "30001055"). A value (e.g., "30001055") of the patient ID 4506 indicates that the corresponding patient 4403 is transferred. The transfer message 4612 indicates a prior location ID 4604 (e.g., "HC 10- CCU^CCU02^CCU02^UCHC^1^^^^^^"). A value (e.g., "HC 10- CCU^CCU02^CCU02^UCHC^1^^^^^^") of the prior location ID 4604 indicates that the patient 4403 is transferred from a corresponding first location (e.g., Coronary Care Unit Bed 2). It should be understood that a particular field (e.g., "HC 10- CCU^CCU02^CCU02^UCHC^1^^^^^^") of the transfer message 4612 is indicated as corresponding to the prior location ID 4604 for ease of illustration, in some implementations one or more portions of the field, multiple fields of the transfer message 4612, one or more portions of multiple fields of the transfer message 4612, or a combination thereof, correspond to the prior location ID 4604. In a particular example, a particular portion (e.g., "CCU02") of the field corresponds to the prior location ID 4604. In an alternate example, the healthcare facility may include multiple hospital beds with the same name (e.g., "CCU02"). In this example, a particular hospital bed is uniquely identified by a portion (e.g., "CCU02") of the field combined with additional information indicating a location (e.g., a room, a building, a floor, a unit, a section, a facility, or a combination thereof) of the particular hospital bed. The additional information is indicated by one or more additional portions of the field of the transfer message 4612, one or more additional fields of the transfer message 4612, or a combination thereof.

The transfer message 4612 indicates an assigned location ID 4608 (e.g., "SC 3A-ICU^PTU05^PTU05^UCLJ^^^^^^^"). A value (e.g., "SC 3A-ICU^PTU05^PTU05^UCLJ^^^^^^^") of the assigned location ID 4608 indicates that the patient 4403 is transferred to a corresponding second location (e.g., Room number 5 of a Patient Treatment Unit). It should be understood that a particular field (e.g., "SC 3A-ICU^PTU05^PTU05^UCLJ^^^^^^^") of the transfer message 4612 is indicated as corresponding to the assigned location ID 4608 for ease of illustration, in some implementations one or more portions of the field, multiple fields of the transfer message 4612, one or more portions of multiple fields of the transfer message 4612, or a combination thereof, correspond to the assigned location ID 4608.

In a particular aspect, the transfer message 4612 corresponds to the first message 4412. The healthcare listener 4420 generates the second message 4414 based on the transfer message 4612. For example, the second message 4414 includes the message type 4502, the patient ID 4506, the prior location ID 4604, and the assigned location ID 4608. The prior location ID 4604 or the assigned location ID 4608 may correspond to the location ID 4504.

As described with reference to FIG. 45, the mobile device manager 4534, based on the second message 4414, determines that the patient 4403 is no longer assigned to a first location corresponding to the prior location ID 4604 (e.g., the location ID 4504) and is assigned to a second location corresponding to the assigned location ID 4608. The mobile device manager 4534 may identify a first mobile device that was previously assigned to the patient 4403. For example, the mobile device manager 4534 determines that the first device was previously assigned to the patient 4403 in response to determining that data in the memory 4532 indicates that the patient ID 4506 is associated with a device ID of the first mobile device. The mobile device manager 4534 identifies, based on the location-to-device mapping data 4510, a second mobile device assigned to the second location, as described with reference to FIG. 45.

In a particular aspect, the first mobile device is the same as the second mobile device. For example, the first mobile device is reassigned from the first location to the second location concurrently with the transfer of the patient 4403 from the first location to the second location. The mobile device manager 4534, in response to determining that the first device is the same as the second device, refrains from sending the reset command 4435, the data 4433, or both, to the device (e.g., the first device and the second device).

In a particular aspect, the first mobile device is distinct from the second mobile device. In this aspect, the mobile device manager 4534, in response to determining that the patient 4403 is no longer assigned to the first location, sends the reset command 4435 to the first mobile device (e.g., the mobile device 4450), removes an association between the patient 4403 and the first mobile device from the memory 4532, or both, as described with reference to FIG. 45. The mobile device manager 4534, in response to determining that the patient 4403 is assigned to the second location, may send the reset command 4435 to the second mobile device (e.g., the mobile device 4450), send the data 4433 to the second mobile device, add an association between the patient 4403 and the second mobile device in the memory 4532, or a combination thereof. The transfer message 4612 thus enables the mobile device manager 4534 to automatically delete user information from the first mobile device, set up the second mobile device, or both.

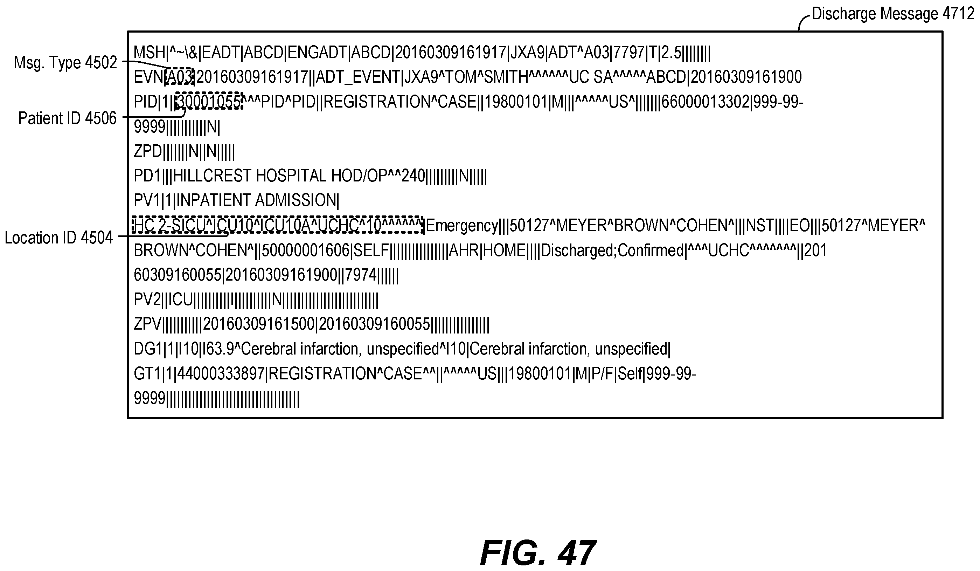

Referring to FIG. 47, a discharge message is shown and generally designated 4712. The discharge message 4712 may be generated by the healthcare management system 4410, the healthcare listener 4420, the system 4400 of FIG. 44, or a combination thereof. The discharge message 4712 may correspond to the first message 4412, the second message 4414 of FIG. 44, or both. The discharge message 4712 may comply with an ADT message specification. In a particular aspect, the discharge message 4712 complies with a HL7 format. For example, the discharge message 4712 complies with a HL7 version 1 format, a HL7 version 2 format, a HL7 version 3 format, a HL7 FHIR format, another HL7 format, or a combination thereof.

The discharge message 4712 indicates the message type 4502 (e.g., "A03"). A value (e.g., "A03") of the message type 4502 indicates that the discharge message 4712 corresponds to a discharge message. The discharge message 4712 indicates the patient ID 4506 (e.g., "30001055"). A value (e.g., "30001055") of the patient ID 4506 indicates that the corresponding patient 4403 is discharged. The discharge message 4712 indicates the location ID 4504 (e.g., "HC 2-SICU^ICU10^ICU10A^UCHC^10^^^^^^"). A value (e.g., "HC 2-SICU^ICU10^ICU10A^UCHC^10^^^^^^") of the location ID 4504 indicates that the patient 4403 is discharged from a corresponding location (e.g., Room number 10A of a Care Unit). It should be understood that a particular field (e.g., "HC 2-SICU^ICU10^ICU10A^UCHC^10^^^^^^") of the discharge message 4712 is indicated as corresponding to the location ID 4504 for ease of illustration, in some implementations one or more portions of the field, multiple fields of the discharge message 4712, one or more portions of multiple fields of the discharge message 4712, or a combination thereof, correspond to the location ID 4504.

In a particular aspect, the discharge message 4712 corresponds to the first message 4412. The healthcare listener 4420 generates the second message 4414 based on the discharge message 4712. For example, the second message 4414 includes the message type 4502, the patient ID 4506, and the location ID 4504.

As described with reference to FIG. 45, the mobile device manager 4534, based on the second message 4414, determines that the patient 4403 is no longer assigned to the particular location corresponding to the location ID 4504. The mobile device manager 4534 may identify the mobile device 4450 in response to determining that data in the memory 4532 indicates that the patient ID 4506 is associated with the device ID 4514. Alternatively, the mobile device manager 4534 may identify the mobile device 4450 based on the location ID 4504 and the location-to-device mapping data 4510, as described with reference to FIG. 45.

The mobile device manager 4534 may, in response to determining that the patient 4403 is no longer assigned to the particular location, send the reset command 4435 to the mobile device 4450, remove an association between the patient 4403 and the mobile device 4450 from the memory 4532, or both, as described with reference to FIG. 45. The discharge message 4712 thus enables the mobile device manager 4534 to automatically delete user information (e.g., the data 4433 of FIG. 44) from the mobile device 4450.

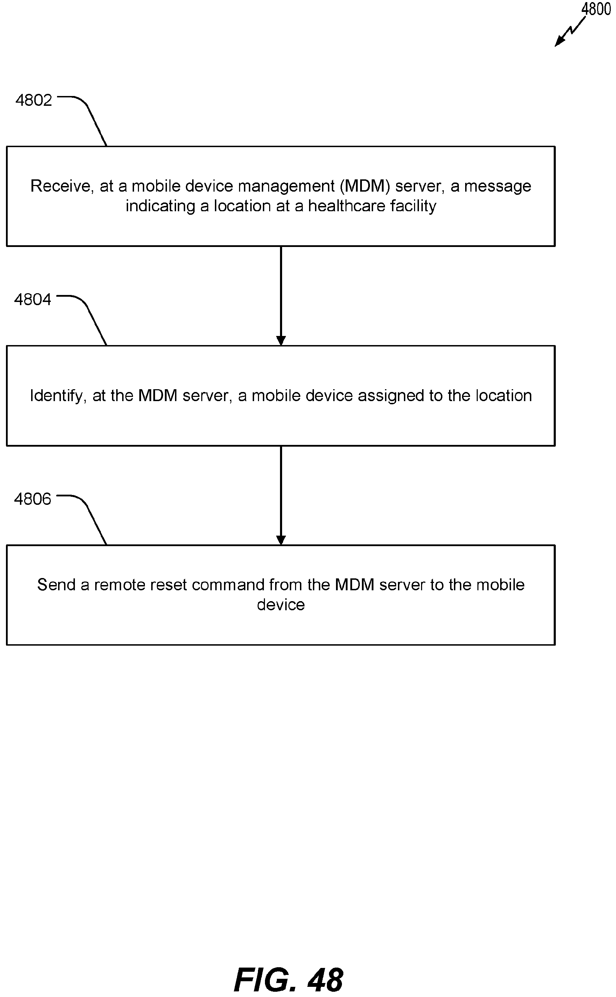

Referring to FIG. 48, a method of mobile device management is shown and generally designated 4800. The method 4800 may be performed by the MDM server 4430, the system 4400 of FIG. 44, the mobile device manager 4534, the system 4500 of FIG. 45, or a combination thereof.

The method 4800 includes receiving, at a mobile device management (MDM) server, a message indicating a location at a healthcare facility, at 4802. For example, the MDM server of FIG. 44 receives the second message 4414 including the location ID 4504 of FIG. 45. The location ID 4504 may indicate a location at a healthcare facility, as described with reference to FIG. 45.

The method 4800 also includes identifying, at the MDM server, a mobile device assigned to the location, at 4804. For example, the MDM server 4430 identifies the mobile device 4450 assigned to the location corresponding to the location ID 4504, as further described with reference to FIG. 45.

The method 4800 further includes sending a remote reset command from the MDM server to the mobile device, at 4806. For example, the mobile device manager 4534 sends the reset command 4435 (e.g., a remote reset command) from the MDM server 4430 to the mobile device 4450, as described with reference to FIG. 45.

The method 4800 thus enables the MDM server 4430 to automatically send the reset command 4435 to the mobile device 4450 in response to receiving the second message 4414. The mobile device 4450 may, in response to receiving the reset command 4435, delete personally identifiable user information stored at the mobile device 4450. The MDM server 4430 thus reduces (e.g., eliminates) the likelihood of the patient 4403 accessing sensitive information associated with a previous user of the mobile device 4450.

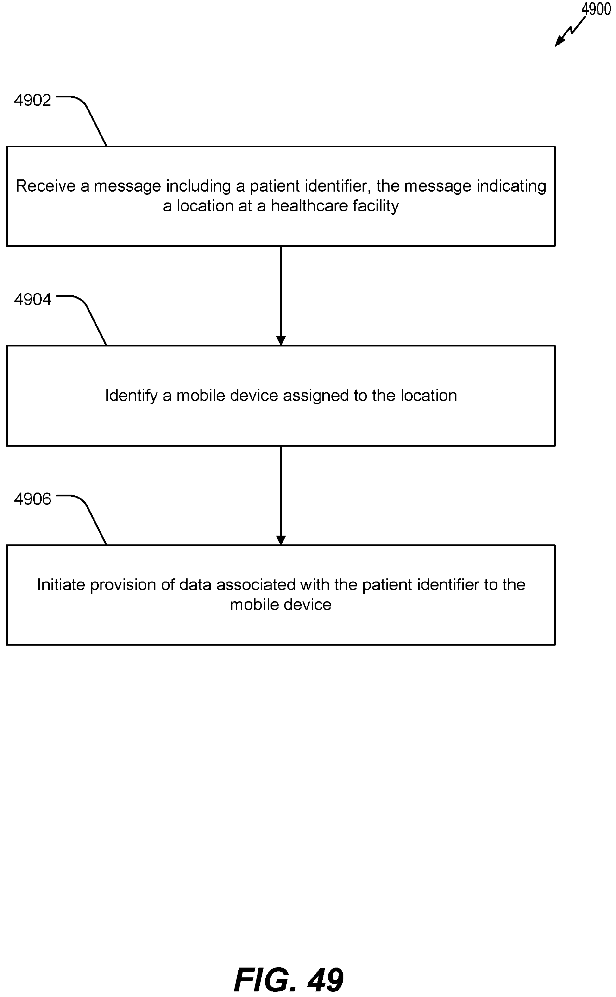

Referring to FIG. 49, a method of mobile device management is shown and generally designated 4900. The method 4900 may be performed by the healthcare listener 4420, the MDM server 4430, the system 4400 of FIG. 44, the mobile device manager 4534, the system 4500 of FIG. 45, or a combination thereof.

The method 4900 includes receiving a message including a patient identifier, at 4902. For example, the healthcare listener 4420 receives the first message 4412 including the patient ID 4506. The first message 4412 includes the location ID 4504 indicating a location at a healthcare facility, as further described with reference to FIG. 45. As another example, the mobile device manager 4534 receives the second message 4414 including the patient ID 4506. The second message 4414 includes the location ID 4504 indicating a location at a healthcare facility, as further described with reference to FIG. 45.

The method 4900 also includes identifying a mobile device assigned to the location, at 4904. For example, the mobile device manager 4534 identifies the mobile device 4450 assigned to the location corresponding to the location ID 4504, as described with reference to FIG. 45.

The method 4900 further includes initiating provision of data associated with the patient identifier to the mobile device, at 4906. For example, the healthcare listener 4420 sends the second message 4414 to the MDM server 4430 to initiate provision of the data 4433 associated with the patient ID 4506 from the MDM server 4430 to the mobile device 4450. As another example, the mobile device manager 4534 initiates provision of the data 4433 to the mobile device 4450 by sending the notification request 4424 to the push notification service 4440, sending the data 4433 to the mobile device 4450, or both.

The method 4900 thus enables the MDM server 4430 to automatically provide the data 4433 associated with the patient 4403 to the mobile device 4450 in response to receiving the second message 4414. The MDM server 4430 thus automatically sets up (e.g., configures) the mobile device 4450 for use by patient 4403.

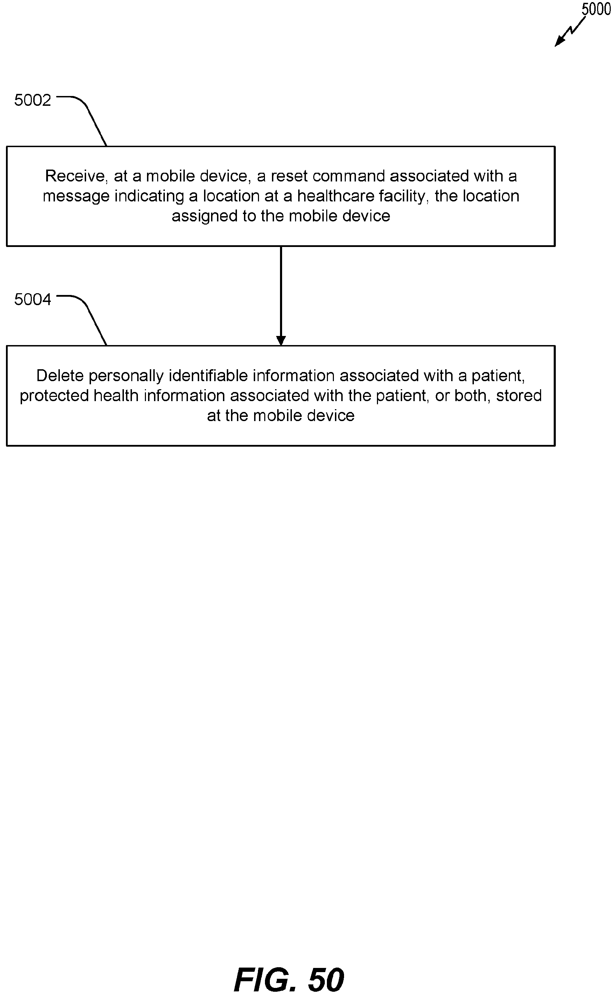

Referring to FIG. 50, a method of mobile device management is shown and generally designated 5000. The method 5000 may be performed by the mobile device 4450, the system 4400 of FIG. 44, the system 4500 of FIG. 45, or a combination thereof.

The method 5000 includes receiving, at a mobile device, a reset command associated with a message indicating a location at a healthcare facility, the location assigned to the mobile device, at 5002. For example, the mobile device 4450 of FIG. 44 receives the reset command 4435. The reset command 4435 is associated with the first message 4412, the second message 4414, or both. The first message 4412, the second message 4414, or both, include the location ID 4504 indicating a location at a healthcare facility, as described with reference to FIG. 45.

The method 5000 also includes deleting personally identifiable information associated with a patient, protected health information associated with the patient, or both, stored at the mobile device, at 5004. For example, the mobile device 4450 of FIG. 44 deletes the data 4433 stored at the mobile device 4450. The data 4433 may include the patient record 4522, the medical information 4524, the application data 4526, the configuration setting 4528, or a combination thereof. The patient record 4522, the medical information 4524, the application data 4526, the configuration setting 4528, or a combination thereof, corresponds to personally identifiable information associated with the patient 4403, protected health information associated with the patient 4403, or both.

The method 5000 thus enables the mobile device 4450 to delete personally identifiable information associated with the patient 4403, protected health information associated with the patient 4403, or both. The mobile device 4450 thus reduces (e.g., eliminates) the likelihood of sensitive information of the patient 4403 being accessed by a subsequent user of the mobile device 4450.

Although one or more of FIGS. 1-50 may illustrate systems, devices, and/or methods according to the teachings of the disclosure, the disclosure is not limited to these illustrated systems, devices, and/or methods. Aspects of the disclosure may be suitably employed in any device that includes integrated circuitry including memory, a processor, and on-chip circuitry.

One or more functions or components of any of FIGS. 1-50 as illustrated or described herein may be combined with one or more other portions of another of FIGS. 1-50. Accordingly, no single aspect described herein should be construed as limiting and aspects of the disclosure may be suitably combined without departing form the teachings of the disclosure.

Those of skill would further appreciate that the various illustrative logical blocks, configurations, modules, circuits, and algorithm steps described in connection with the aspects disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or processor executable instructions depends upon the particular application and design constraints imposed on the overall system. Skilled artisans may implement the described functionality in varying ways for each particular application, but such implementation decisions should not be interpreted as causing a departure from the scope of the present disclosure.

The steps of a method or algorithm described in connection with the aspects disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transient storage medium known in the art. An exemplary storage medium (e.g., a computer-readable storage device) is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal. A storage device is not a signal.

The previous description of the disclosed aspects is provided to enable a person skilled in the art to make or use the disclosed aspects. Various modifications to these aspects will be readily apparent to those skilled in the art, and the principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method comprising:
sending, from a mobile device management, MDM, server, a group list to a mobile device, the group list indicating a plurality of MDM groups that are available to the mobile device for enrollment;
receiving, at the MDM server, a join group request from the mobile device, the join group request indicating a group of the plurality of MDM groups;
in response to receiving the join group request, updating, at the MDM server, group membership data to indicate that the mobile device is added to the group;
identifying, based on the group membership data at the MDM server, an action associated with the group;
automatically, in response to receiving the join group request, initiate performance of the action by sending a command from the MDM server to the mobile device to perform the action
identifying, by the MDM server, a first set of applications that the group is authorized to access, wherein the action includes downloading the first set of applications to the mobile device, and/or
identifying, by the MDM server, a first set of configuration settings for the group, wherein the action includes downloading the first set of configuration settings to the mobile device.

2. The method of claim 1, further comprising identifying, based on the group membership data, that the group is authorized to access a first set of applications, wherein the action includes showing, at a display of the mobile device, a first set of icons of the first set of applications.

3. The method of claim 1, further comprising identifying, based on the group membership data, that the group is restricted from accessing a second set of applications, wherein the action includes hiding, at a display of the mobile device, a second set of icons of the second set of applications.

4. The method of claim 1, further comprising, in response to receiving the join group request from the mobile device:
determining, based on the group membership data, that the group includes a second computing device; and
sending a second command to the second computing device to perform a second action.

5. The method of claim 4, wherein the second action includes updating application data at the second computing device to indicate that the mobile device is added to the group.

6. The method of claim 4, further comprising:
sending a notification request from the MDM server to a push notification service to initiate sending of a push notification to the second computing device; and
receiving, at the MDM server, a check-in request from the second computing device responsive to the push notification, wherein the second command is sent from the MDM server to the second computing device in response to receiving the check-in request.

7. A computer system comprising:
a mobile device configured to:
receive a group list from a mobile device management, MDM, server, the group list indicating a plurality of MDM groups that are available to the mobile device for enrollment;
receive a first user input indicating a selection of a group of the plurality of MDM groups; and
send a join group request to a mobile device management, MDM, server indicating the group; and
the MDM server configured to, in response to receiving the join group request from the mobile device:
update group membership data to indicate that the mobile device is added to the group;
identify, based on the group membership data, an action associated with the group; and
automatically, in response to receiving the join group request, initiate performance of the action by sending a command to the mobile device to perform the action
identify a first set of applications that the group is authorized to access, wherein the action includes downloading the first set of applications to the mobile device, and/or
identify a first set of configuration settings for the group, wherein the action includes downloading the first set of configuration settings to the mobile device.

8. The computer system of claim 7, further comprising a second computing device configured to:
receive a push notification from a push notification service responsive to a notification request, wherein the MDM server is configured to, in response to receiving the join group request from the mobile device, send the notification request to the push notification service;
in response to receiving the push notification, send a check-in request to the **MDM** server;
receive a second command to perform a second action; and
perform the second action.

9. The computer system of claim 8, wherein the second action includes updating application data to indicate that the group includes the mobile device.

10. The computer system of claim 7, wherein the MDM server is further configured to identify a set of applications that the group is authorized to access, wherein the action includes downloading the set of applications to the mobile device.

11. The computer system of claim 7,
wherein the mobile device is further configured to:
receive a second user input indicating selection of a reset option; and
send a reset request to the MDM server;
wherein the MDM server is further configured to:
in response to receiving the reset request from the mobile device, send a notification request to a push notification service to initiate sending of a push notification from the push notification service to the mobile device;
receive a check-in message from the mobile device responsive to the push notification; and
in response to receiving the check-in message, send a remote reset command from the MDM server to the mobile device to initiate a reset of the mobile device, wherein the remote reset command indicates that user notifications are to be suppressed during the reset of the mobile device.

12. The computer system of claim 11, wherein the remote reset command includes a factory reset command, or
wherein the mobile device is configured to, in response to determining that the remote reset command indicates that user notifications are to be suppressed during the reset of the mobile device, suppress user notifications during the reset of the mobile device, or
wherein the mobile device is configured to, in response to determining that an activation bypass parameter of the remote reset command has a first value, remove an activation lock during reset of the mobile device.

## Patentansprüche

1. Verfahren, umfassend:
Senden, von einem Server zur Verwaltung mobiler Vorrichtungen, MDM, einer Gruppenliste an eine mobile Vorrichtung, wobei die Gruppenliste eine Vielzahl von **MDM-**Gruppen angibt, die für die mobile Vorrichtung zur Anmeldung verfügbar ist;
Empfangen, an dem **MDM**-Server, einer Gruppenbeitrittsanfrage von der mobilen Vorrichtung, wobei die Gruppenbeitrittsanfrage eine Gruppe der Vielzahl von MDM-Gruppen angibt;
als Reaktion auf das Empfangen der Gruppenbeitrittsanfrage, Aktualisieren, auf dem MDM-Server, von Gruppenmitgliedsdaten, um anzugeben, dass die mobile Vorrichtung der Gruppe hinzugefügt wird;
Identifizieren, basierend auf den Gruppenmitgliedsdaten auf dem MDM-Server, einer Handlung, die der Gruppe zugeordnet ist;
als Reaktion auf das Empfangen der Gruppenbeitrittsanfrage, automatisches Initiieren von Durchführung der Handlung durch Senden eines Befehls von dem MDM-Server an die mobile Vorrichtung, um die Handlung durchzuführen
Identifizieren, durch den MDM-Server, eines ersten Satzes von Anwendungen, für den die Gruppe zum Zugriff autorisiert ist, wobei die Handlung Herunterladen des ersten Satzes von Anwendungen auf die mobile Vorrichtung beinhaltet, und/oder
Identifizieren, durch den MDM-Server, eines ersten Satzes von Konfigurationseinstellungen für die Gruppe, wobei die Handlung Herunterladen des ersten Satzes von Konfigurationseinstellungen auf die mobile Vorrichtung beinhaltet.

2. Verfahren nach Anspruch 1, ferner umfassend Identifizieren, basierend auf den Gruppenmitgliedsdaten, dass die Gruppe zum Zugriff auf einen ersten Satz von Anwendungen autorisiert ist, wobei die Handlung Zeigen, auf einer Anzeige der mobilen Vorrichtung, eines ersten Satzes von Symbolen des ersten Satzes von Anwendungen beinhaltet.

3. Verfahren nach Anspruch 1, ferner umfassend Identifizieren, basierend auf den Gruppenmitgliedsdaten, dass der Zugriff auf einen zweiten Satz von Anwendungen für die Gruppe gesperrt ist, wobei die Handlung Verbergen, auf einer Anzeige der mobilen Vorrichtung, eines zweiten Satzes von Symbolen des zweiten Satzes von Anwendungen beinhaltet.

4. Verfahren nach Anspruch 1, ferner umfassend als Reaktion auf das Empfangen der Gruppenbeitrittsanfrage von der mobilen Vorrichtung:
Bestimmen, basierend auf den Gruppenmitgliedsdaten, dass die Gruppe eine zweite Rechenvorrichtung beinhaltet; und
Senden eines zweiten Befehls an die zweite Rechenvorrichtung, um eine zweite Handlung durchzuführen.

5. Verfahren nach Anspruch 4, wobei die zweite Handlung Aktualisieren von Anwendungsdaten an der zweiten Rechenvorrichtung beinhaltet, um anzugeben, dass die mobile Vorrichtung der Gruppe hinzugefügt wird.

6. Verfahren nach Anspruch 4, ferner umfassend:
Senden einer Benachrichtigungsanfrage von dem MDM-Server an einen Push-Benachrichtigungsdienst, um Senden einer Push-Benachrichtigung an die zweite Rechenvorrichtung zu initiieren; und
Empfangen, an dem MDM-Server, einer Check-in-Anfrage von der zweiten Rechenvorrichtung als Reaktion auf die Push-Benachrichtigung, wobei der zweite Befehl von dem MDM-Server als Reaktion auf das Empfangen der Check-in-Anfrage an die zweite Rechenvorrichtung gesendet wird.

7. Computersystem, umfassend:
eine mobile Vorrichtung, die zu Folgendem konfiguriert ist:
Empfangen einer Gruppenliste von einem Server zur Verwaltung mobiler Vorrichtungen, MDM, wobei die Gruppenliste eine Vielzahl von **MDM**-Gruppen angibt, die für die mobile Vorrichtung zur Anmeldung verfügbar ist;
Empfangen einer ersten Benutzereingabe, die eine Auswahl einer Gruppe der Vielzahl von MDM-Gruppen angibt; und
Senden einer Gruppenbeitrittsanfrage an einen Server zur Verwaltung mobiler Vorrichtungen, MDM, welche die Gruppe angibt; und
wobei der MDM-Server als Reaktion auf Empfangen der Gruppenbeitrittsanfrage von der mobilen Vorrichtung zu Folgendem konfiguriert ist:
Aktualisieren von Gruppenmitgliedsdaten, um anzugeben, dass die mobile Vorrichtung der Gruppe hinzugefügt wird;
Identifizieren, basierend auf den Gruppenmitgliedsdaten, einer Handlung, die der Gruppe zugeordnet ist; und
als Reaktion auf das Empfangen der Gruppenbeitrittsanfrage, automatisches Initiieren von Durchführung der Handlung durch Senden eines Befehls an die mobile Vorrichtung, um die Handlung durchzuführen
Identifizieren eines ersten Satzes von Anwendungen, für den die Gruppe zum Zugriff autorisiert ist, wobei die Handlung Herunterladen des ersten Satzes von Anwendungen auf die mobile Vorrichtung beinhaltet, und/oder
Identifizieren eines ersten Satzes von Konfigurationseinstellungen für die Gruppe, wobei die Handlung Herunterladen des ersten Satzes von Konfigurationseinstellungen auf die mobile Vorrichtung beinhaltet.

8. Computersystem nach Anspruch 7, ferner umfassend eine zweite Rechenvorrichtung, die zu Folgendem konfiguriert ist:
Empfangen einer Push-Benachrichtigung von einem Push-Benachrichtigungsdienst als Reaktion auf eine Benachrichtigungsanfrage, wobei der MDM-Server als Reaktion auf das Empfangen der Gruppenbeitrittsanfrage von der mobilen Vorrichtung dazu konfiguriert ist, die Benachrichtigungsanfrage an den Push-Benachrichtigungsdienst zu senden;
als Reaktion auf das Empfangen der Push-Benachrichtigung, Senden einer Check-in-Anfrage an den **MDM**-Server;
Empfangen eines zweiten Befehls, um eine zweite Handlung durchzuführen; und
Durchführen der zweiten Handlung.

9. Computersystem nach Anspruch 8, wobei die zweite Handlung Aktualisieren von Anwendungsdaten beinhaltet, um anzugeben, dass die Gruppe die mobile Vorrichtung beinhaltet.

10. Computersystem nach Anspruch 7, wobei der MDM-Server ferner dazu konfiguriert ist, einen Satz von Anwendungen, für den die Gruppe zum Zugriff autorisiert ist, zu identifizieren, wobei die Handlung Herunterladen des Satzes von Anwendungen auf die mobile Vorrichtung beinhaltet.

11. Computersystem nach Anspruch 7,
wobei die mobile Vorrichtung ferner zu Folgendem konfiguriert ist:
Empfangen einer zweiten Benutzereingabe, die eine Auswahl einer Zurücksetzungsoption angibt; und
Senden einer Zurücksetzungsanfrage an den MDM-Server;
wobei der MDM-Server ferner zu Folgendem konfiguriert ist:
als Reaktion auf Empfangen der Zurücksetzungsanfrage von der mobilen Vorrichtung, Senden einer Benachrichtigungsanfrage an einen Push-Benachrichtigungsdienst, um Senden einer Push-Benachrichtigung von dem Push-Benachrichtigungsdienst an die mobile Vorrichtung zu initiieren;
Empfangen einer Check-in-Nachricht von der mobilen Vorrichtung als Reaktion auf die Push-Benachrichtigung; und
als Reaktion auf das Empfangen der Check-in-Nachricht, Senden eines Fernzurücksetzungsbefehls von dem MDM-Server an die mobile Vorrichtung, um ein Zurücksetzen der mobilen Vorrichtung zu initiieren, wobei der Fernzurücksetzungsbefehl angibt, dass Benutzerbenachrichtigungen während des Zurücksetzens der mobilen Vorrichtung zu unterdrücken sind.

12. Computersystem nach Anspruch 11, wobei der Fernzurücksetzungsbefehl einen Werkszurücksetzungsbefehl beinhaltet oder
wobei die mobile Vorrichtung als Reaktion auf Bestimmen, dass der Fernzurücksetzungsbefehl angibt, dass Benutzerbenachrichtigungen während des Zurücksetzens der mobilen Vorrichtung zu unterdrücken sind, dazu konfiguriert ist, Benutzerbenachrichtigungen während des Zurücksetzens der mobilen Vorrichtung zu unterdrücken, oder wobei die mobile Vorrichtung als Reaktion auf Bestimmen, dass ein Aktivierungsumgehungsparameter des Fernzurücksetzungsbefehls einen ersten Wert aufweist, dazu konfiguriert ist, eine Aktivierungssperre während des Zurücksetzens der mobilen Vorrichtung zu entfernen.

## Revendications

1. Procédé comprenant :
l'envoi, provenant d'un serveur de gestion de dispositif mobile, MDM, d'une liste de groupes à un dispositif mobile, la liste de groupes indiquant une pluralité de groupes de **MDM** qui sont disponibles pour le dispositif mobile pour un enrôlement ;
la réception, au niveau du serveur de **MDM,** d'une demande de ralliement de groupe provenant du dispositif mobile, la demande de ralliement de groupe indiquant un groupe de la pluralité de groupes de MDM ;
en réponse à la réception de la demande de ralliement de groupe, la mise à jour, au niveau du serveur de MDM, de données d'appartenance de groupe pour indiquer que le dispositif mobile est ajouté au groupe ;
l'identification, sur la base des données d'appartenance de groupe au niveau du serveur de MDM, d'une action associée au groupe ;
automatiquement, en réponse à la réception de la demande de ralliement de groupe, l'initiation de la réalisation de l'action par l'envoi d'une commande provenant du serveur de MDM au dispositif mobile pour réaliser l'action
l'identification, par le serveur de MDM, d'un premier ensemble d'applications auquel le groupe est autorisé à accéder, dans lequel l'action inclut le téléchargement du premier ensemble d'applications vers le dispositif mobile, et/ou
l'identification, par le serveur de MDM, d'un premier ensemble de paramètres de configuration pour le groupe, dans lequel l'action inclut le téléchargement du premier ensemble de paramètres de configuration vers le dispositif mobile.

2. Procédé selon la revendication 1, comprenant en outre l'identification, sur la base des données d'appartenance de groupe, du fait que le groupe est autorisé à accéder à un premier ensemble d'applications, dans lequel l'action inclut l'affichage, au niveau d'un écran du dispositif mobile, d'un premier ensemble d'icônes du premier ensemble d'applications.

3. Procédé selon la revendication 1, comprenant en outre l'identification, sur la base des données d'appartenance de groupe, du fait que le groupe fait l'objet d'une restriction d'accès à un second ensemble d'applications, dans lequel l'action inclut le masquage, au niveau d'un écran du dispositif mobile, d'un second ensemble d'icônes du second ensemble d'applications.

4. Procédé selon la revendication 1, comprenant en outre, en réponse à la réception de la demande de ralliement de groupe provenant du dispositif mobile :
la détermination, sur la base des données d'appartenance de groupe, du fait que le groupe inclut un second dispositif informatique ; et
l'envoi d'une seconde commande au second dispositif informatique pour réaliser une seconde action.

5. Procédé selon la revendication 4, dans lequel la seconde action inclut la mise à jour de données d'application au niveau du second dispositif informatique pour indiquer que le dispositif mobile est ajouté au groupe.

6. Procédé selon la revendication 4, comprenant en outre :
l'envoi d'une demande de notification provenant du serveur de MDM à un service de notification push pour initier l'envoi d'une notification push au second dispositif informatique ; et
la réception, au niveau du serveur de MDM, d'une demande d'enregistrement provenant du second dispositif informatique en réponse à la notification push, dans lequel la seconde commande est envoyée provenant du serveur de MDM au second dispositif informatique en réponse à la réception de la demande d'enregistrement.

7. Système informatique comprenant :
un dispositif mobile configuré pour :
recevoir une liste de groupes provenant d'un serveur de gestion de dispositif mobile, MDM, la liste de groupes indiquant une pluralité de groupes de MDM qui sont disponibles pour le dispositif mobile pour un enrôlement ;
recevoir une première entrée d'utilisateur indiquant une sélection d'un groupe de la pluralité de groupes de MDM ; et
envoyer une demande de ralliement de groupe à un serveur de gestion de dispositif mobile, MDM, indiquant le groupe ; et
le serveur de MDM étant configuré pour, en réponse à la réception de la demande de ralliement de groupe provenant du dispositif mobile :
mettre à jour des données d'appartenance de groupe pour indiquer que le dispositif mobile est ajouté au groupe ;
identifier, sur la base des données d'appartenance de groupe, une action associée au groupe ; et
automatiquement, en réponse à la réception de la demande de ralliement de groupe, initier la réalisation de l'action par l'envoi d'une commande au dispositif mobile pour réaliser l'action
identifier un premier ensemble d'applications auquel le groupe est autorisé à accéder, dans lequel l'action inclut le téléchargement du premier ensemble d'applications vers le dispositif mobile, et/ou
identifier un premier ensemble de paramètres de configuration pour le groupe, dans lequel l'action inclut le téléchargement du premier ensemble de paramètres de configuration vers le dispositif mobile.

8. Système informatique selon la revendication 7, comprenant en outre un second dispositif informatique configuré pour :
recevoir une notification push provenant d'un service de notification push en réponse à une demande de notification, dans lequel le serveur de MDM est configuré pour, en réponse à la réception de la demande de ralliement de groupe provenant du dispositif mobile, envoyer la demande de notification au service de notification push ;
en réponse à la réception de la notification push, envoyer une demande d'enregistrement au serveur de MDM ;
recevoir une seconde commande pour réaliser une seconde action ; et
réaliser la seconde action.

9. Système informatique selon la revendication 8, dans lequel la seconde action inclut la mise à jour de données d'application pour indiquer que le groupe inclut le dispositif mobile.

10. Système informatique selon la revendication 7, dans lequel le serveur de MDM est en outre configuré pour identifier un ensemble d'applications auquel le groupe est autorisé à accéder, dans lequel l'action inclut le téléchargement de l'ensemble d'applications vers le dispositif mobile.

11. Système informatique selon la revendication 7,
dans lequel le dispositif mobile est en outre configuré pour :
recevoir une seconde entrée d'utilisateur indiquant la sélection d'une option de réinitialisation ; et
envoyer une demande de réinitialisation au serveur de MDM ;
dans lequel le serveur de MDM est en outre configuré pour :
en réponse à la réception de la demande de réinitialisation provenant du dispositif mobile, envoyer une demande de notification à un service de notification push pour initier l'envoi d'une notification push provenant du service de notification push au dispositif mobile ;
recevoir un message d'enregistrement provenant du dispositif mobile en réponse à la notification push ; et
en réponse à la réception du message d'enregistrement, envoyer une commande de réinitialisation à distance provenant du serveur de MDM au dispositif mobile pour initier une réinitialisation du dispositif mobile, dans lequel la commande de réinitialisation à distance indique que des notifications d'utilisateur doivent être supprimées pendant la réinitialisation du dispositif mobile.

12. Système informatique selon la revendication 11, dans lequel la commande de réinitialisation à distance inclut une commande de remise aux paramètres d'usine, ou
dans lequel le dispositif mobile est configuré pour, en réponse à la détermination du fait que la commande de réinitialisation à distance indique que des notifications d'utilisateur doivent être supprimées pendant la réinitialisation du dispositif mobile, supprimer les notifications d'utilisateur pendant la réinitialisation du dispositif mobile, ou dans lequel le dispositif mobile est configuré pour, en réponse à la détermination du fait qu'un paramètre de contournement d'activation de la commande de réinitialisation à distance présente une première valeur, supprimer un verrouillage d'activation pendant la réinitialisation du dispositif mobile.
